# FASCICULE DE BREVET EUROPEEN

(11) **EP 2 681 798 B1**
(45) Date de publication et mention de la délivrance du brevet: **31.10.2018**
(21) Numéro de dépôt: 12708803.7
(22) Date de dépôt: 02.03.2012
(51) Int. Cl.: H01M 10/44, H01M 10/48, H02J 7/00, H01M 10/42

(54) **BATTERIE AVEC GESTION INDIVIDUELLE DES CELLULES**
BATTERIE MIT INDIVIDUELLEM ZELLENMANAGEMENT
BATTERY WITH INDIVIDUAL CELL MANAGEMENT

(30) Priorité: 02.03.2011 FR 1151688; 01.07.2011 FR 1155933
(43) Date de publication de la demande: 08.01.2014
(73) Titulaire: Commissariat à l'Énergie Atomique et aux Énergies Alternatives, 75015 Paris (FR)
(72) Inventeur: DESPESSE, Ghislain, F-38120 Saint Egreve (FR)
(74) Mandataire: Novaimo
(86) Numéro de dépôt international: PCT/EP2012/053683
(87) Numéro de publication internationale: WO 2012/117109

(56) Documents cités:
- WO-A1-2011/076257
- WO-A1-2012/023477
- US-A- 6 121 752
- US-A1- 2008 266 913
- US-A1- 2009 289 598

## Description

L'invention concerne une batterie. Elle concerne particulièrement une batterie comprenant plusieurs étages de plusieurs cellules élémentaires. Elle concerne aussi un procédé de gestion de batterie.

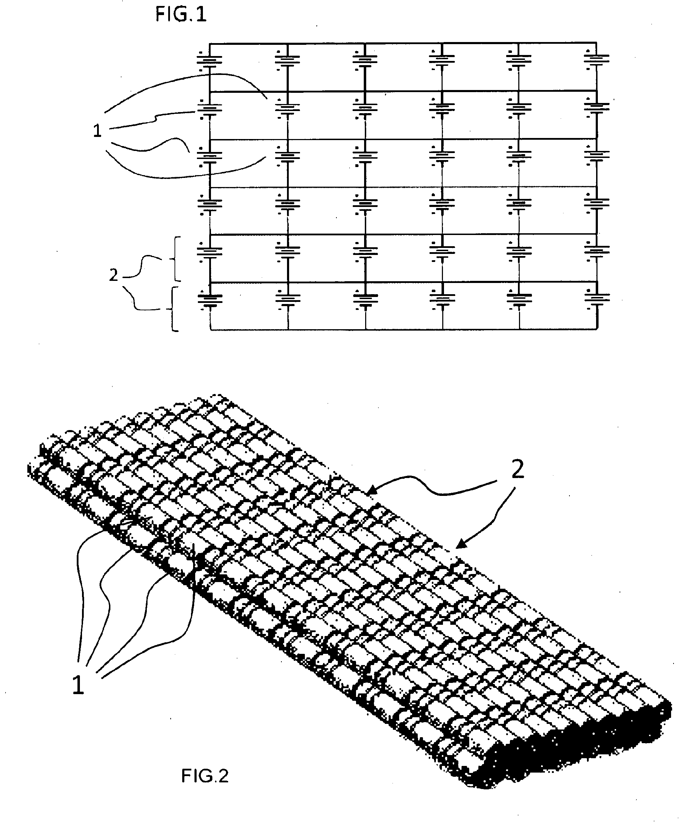

Les figures 1 et 2 représentent une batterie selon l'état de la technique, aussi appelée « pack batterie ». Un tel pack batterie, que nous appellerons simplement batterie par la suite, est composé d'une multitude de batteries élémentaires. Une telle batterie élémentaire se présente par exemple sous une forme cylindrique, comprend une multitude d'électrodes positives et négatives, se présentant sous la forme de cylindres concentriques imbriqués ou de couches enroulées en forme de spirale, séparés par des couches d'électrolytes et de membranes. Ces éléments représentent la partie active de la structure de la batterie élémentaire, c'est-à-dire qu'ils forment un ensemble qui participe directement à la fonction de stockage et restitution d'énergie électrique. Dans cet exemple, cette partie active est de nature chimique. En remarque, une telle batterie élémentaire, aussi appelée cellule élémentaire, peut comprendre une partie active basée sur d'autres composants chimiques, ou une partie active de nature capacitive. D'autre part, la partie active de la batterie élémentaire est disposée dans un boîtier dont une première face externe forme la borne positive ou premier collecteur de courant de la batterie et une seconde face externe forme la borne négative ou second collecteur de courant. Ce boîtier a pour fonction le maintien et support de la partie active de la batterie, et son étanchéité vis-à-vis de l'extérieur. Il enferme un assemblage physique qui forme un ensemble monolithique figé, indissociable, dont la connectique électrique est non modifiable pour un utilisateur de la batterie élémentaire, qui voit un courant sortant égal au courant entrant sur ses deux bornes. Nous appellerons donc cellule élémentaire, et même plus simplement cellule, cet ensemble formé par une partie active et un boîtier avec deux bornes. Une batterie représentée sur les figures 1 et 2 comprend plus précisément plusieurs étages ou modules 2, disposés en série, et chaque module comprend plusieurs cellules 1 disposées en parallèle, comme cela est illustré schématiquement sur la figure 1.

La figure 2 représente une architecture courante d'une telle batterie, pour laquelle chaque cellule présente une forme cylindrique et est par exemple une batterie de type lithium-ion. Dans cet exemple, chaque module 2 comprend deux rangées de dix cellules 1, dont les faces latérales cylindriques de cellules voisines sont en contact. De plus, la batterie comprend onze modules 2 superposés, disposés de sorte que les axes des cellules cylindriques des différents modules sont alignés pour que les cellules soient ainsi alignées dans leur direction longitudinale. Cette disposition permet ainsi d'obtenir un encombrement minimal.

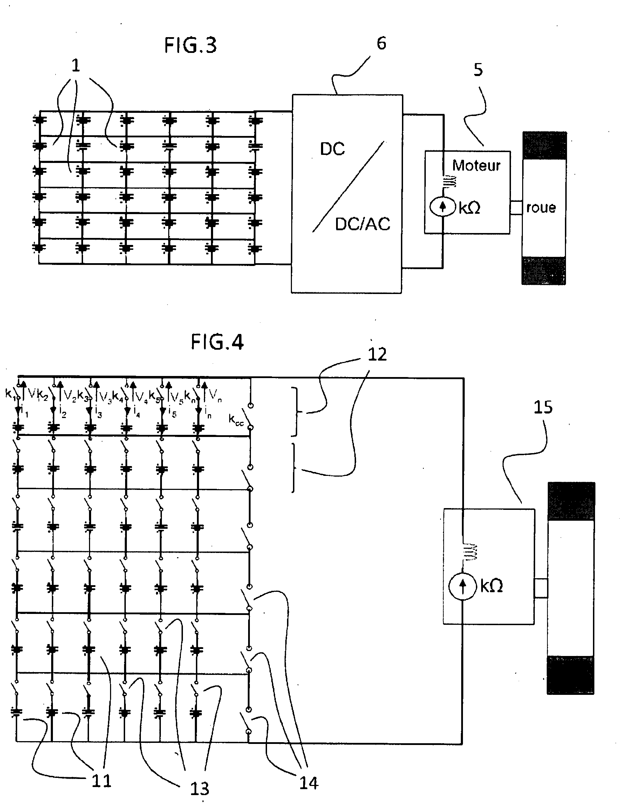

L'utilisation d'une telle batterie de l'état de la technique pour alimenter un moteur 5 nécessite un dispositif 6 intermédiaire de type convertisseur DC/DC ou AC, disposé entre la batterie et le moteur 5, tel que représenté sur la figure 3. Le dispositif 6 a pour fonction d'ajuster la tension de sortie de la batterie aux besoins du moteur 5, afin de s'adapter ainsi à la vitesse et au couple demandé au moteur. En remarque, le même principe s'applique à toute charge alimentée par la batterie. D'autre part, lors de la recharge de la batterie, un dispositif équivalent doit être utilisé entre le réseau électrique et la batterie pour suivre la tension d'entrée du réseau électrique. L'utilisation de ces dispositifs intermédiaires reliés à la batterie présente plusieurs inconvénients, parmi lesquels la génération de pertes au niveau des transistors et autres composants utilisés, ce qui entraîne globalement une consommation énergétique supplémentaire. D'autre part, cela représente un encombrement supplémentaire.

La gestion d'une telle batterie de l'état de la technique comprend en général une observation des grandeurs électriques de sortie pour en déduire un diagnostic de son fonctionnement. Cette approche s'avère insuffisante car elle ne permet pas de déterminer avec précision les zones de la batterie, comme les modules ou certains groupes de cellules, qui sont par exemple défaillants. Il en résulte dans la pratique une mauvaise optimisation du fonctionnement de la batterie et une baisse très rapide de ses performances dès qu'elle présente une partie défaillante, accompagnée souvent d'une aggravation rapide de son état et un vieillissement prématuré.

Pour améliorer cette approche globale, il existe certains procédés de diagnostic qui consistent à observer certaines grandeurs au niveau des modules de la batterie. Cette seconde approche permet plus précisément d'observer localement le comportement particulier de certains modules de la batterie. Toutefois, sa mise en oeuvre est complexe et nécessite l'utilisation de nombreux fils électriques, pour relier un dispositif central de diagnostic à chaque module, ce qui peut induire de forts risques électriques car les fils sont susceptibles de chauffer, ou de se dénuder par frottement puis générer des courts-circuits, par exemple entre deux étages relativement éloignés et de différence de potentiel élevée. D'autre part, cette solution nécessite une isolation galvanique intermédiaire pour protéger le dispositif central de diagnostic, dont le potentiel associé à son alimentation peut-être très éloigné des potentiels présents dans la batterie. Enfin, elle ne permet d'agir que de manière insatisfaisante sur le fonctionnement global de la batterie.

Outre une telle batterie conventionnelle telle que présentée ci-dessus, le document FR2926168 décrit un circuit électrique comprenant une pluralité d'éléments de stockage d'énergie commutables, associés à un moyen générateur d'énergie, afin de fournir une tension variable en sortie pour s'adapter aux besoins d'un moteur. Une telle approche apporte une souplesse d'utilisation par rapport à la batterie conventionnelle décrite ci-dessus mais n'apporte aucune solution à tous les autres inconvénients mentionnés.

Une autre batterie comprenant des interrupteurs et un circuit de commande est décrite dans le document US2009/289598.

Ainsi, il existe un besoin d'une solution améliorée de stockage d'énergie permettant de résoudre au moins une partie des inconvénients des solutions existantes, et l'invention cherche à atteindre tout ou partie des objets suivants.

Un premier objet de l'invention est de proposer une solution de stockage d'énergie qui permet de garantir un fonctionnement fiable et allongé dans le temps.

Un second objet de l'invention est de proposer une solution de stockage d'énergie qui s'adapte facilement à différentes exigences d'utilisation, comme des besoins variables d'un moteur.

A cet effet, l'invention repose sur une batterie comprenant plusieurs modules disposés en série, au moins un module comprenant au moins deux cellules disposées en parallèle, au moins une de ces deux cellules étant associée à un interrupteur de cellule disposé en série avec la cellule, caractérisée en ce que le module donné comprend au moins un capteur de mesure d'une grandeur caractéristique de l'état de ladite cellule du module donné associée à l'interrupteur de cellule, et en ce qu'elle comprend au niveau du module donné, un circuit de traitement local des mesures effectuées par ledit au moins un capteur de mesure, le circuit de traitement pilotant l'interrupteur associé à ladite cellule du module donné par l'intermédiaire d'un circuit de commande en fonction d'au moins ladite grandeur caractéristique de l'état de ladite cellule, le circuit de commande de l'interrupteur de cellule (13 ; 63 ; 113) et/ou le circuit de traitement étant alimenté(s) électriquement directement par au moins une cellule de la batterie du module donné en étant isolé(s) électriquement des autres modules.

L'invention porte aussi sur un procédé de gestion d'une batterie telle que décrite ci-dessus, caractérisé en ce qu'il comprend les étapes suivantes :
- mesure d'au moins une grandeur au niveau d'une cellule donnée de la batterie disposée dans un module donné, représentative de l'état de la cellule ;
- transmission de ladite grandeur mesurée à au moins un circuit de traitement local disposé au niveau du module donné ;
- détermination de la position d'un interrupteur de ladite cellule en prenant en compte ladite grandeur mesurée ;
- commande de l'ouverture ou fermeture de l'interrupteur de cellule par l'intermédiaire d'un circuit de commande disposé au niveau du module donné, le circuit de commande et/ou le circuit de traitement étant alimenté(s) électriquement par au moins une cellule de la batterie du module donné.

L'invention est plus précisément définie par les revendications.

Ces objets, caractéristiques et avantages de la présente invention seront exposés en détail dans la description suivante de modes de réalisation particuliers faits à titre non-limitatif en relation avec les figures jointes parmi lesquelles :
La figure 1 représente schématiquement la structure d'une batterie selon un état de la technique.
La figure 2 représente en perspective l'architecture réelle d'une telle batterie de l'état de la technique.
La figure 3 représente schématiquement le circuit électrique d'un moteur utilisant une telle batterie de l'état de la technique pour son alimentation.
La figure 4 représente schématiquement une batterie selon un mode de réalisation de l'invention.
La figure 5 représente schématiquement un module de la batterie selon le mode de réalisation de l'invention.
La figure 6 illustre plus précisément le schéma électrique choisi pour mettre en oeuvre le module illustré sur la figure 5.
La figure 7 illustre le schéma électrique pour mettre en oeuvre le module illustré sur la figure 5 selon une variante de réalisation.
La figure 8 représente l'implémentation physique des fonctions électriques de l'invention dans l'architecture d'une batterie selon un mode de réalisation de l'invention.
La figure 9 illustre plus précisément les composants présents sur chaque carte électronique du mode de réalisation de l'invention.
Les figures 10a et 10b illustrent une variante de réalisation du mode de réalisation de l'invention.
La figure 11 représente de manière plus détaillée l'architecture de la carte électronique selon cette variante de réalisation du mode de réalisation de l'invention.
La figure 12 illustre une seconde variante de réalisation du mode de réalisation de l'invention.
La figure 13 représente de manière plus détaillée l'architecture de la carte électronique associée à un module selon cette seconde variante de réalisation du mode de réalisation de l'invention.
Les figures 14a et 14b illustrent une troisième variante de réalisation du mode de réalisation de l'invention.
La figure 15 illustre une variante de réalisation d'une carte électronique du mode de réalisation de l'invention.
La figure 16 illustre la structure interne d'une cellule de type Lithium-Ion selon l'état de la technique.
La figure 17 illustre la structure interne d'une cellule de type Lithium-Ion selon un second mode de réalisation de l'invention.
Les figures 18 à 20 illustrent une variante du second mode de réalisation de l'invention.
La figure 21 illustre un mode de réalisation d'un bâti intégrant une batterie selon l'invention.
La figure 22 illustre le bâti précédent intégré au sein d'un véhicule automobile selon un mode de réalisation de l'invention.
La figure 23 illustre le principe de pilotage d'un transistor parallèle selon un mode de réalisation de l'invention.
La figure 24 illustre un mode de réalisation d'une commande asservie de la batterie selon l'invention.
La figure 25 représente un exemple de tension qui peut être fournie par la batterie selon l'invention.
La figure 26 représente un mode de réalisation d'une batterie selon l'invention présentant un pont en H.
La figure 27 représente de manière plus détaillée l'architecture d'une batterie présentant un pont en H selon un mode de réalisation de l'invention.
La figure 28 représente un système de recharge d'une batterie selon un mode de réalisation de l'invention.
La figure 29 illustre schématiquement la mise en oeuvre du principe de communication par courant porteur au sein de la batterie selon un mode de réalisation de l'invention.
Les figures 30 à 32 illustrent trois variantes de réalisation d'une batterie avec plusieurs interrupteurs parallèles distincts selon un mode de réalisation de l'invention.
La figure 33 illustre un mode de réalisation de l'invention, dans lequel la batterie est séparée en plusieurs parties.
La figure 34 représente de manière plus détaillée l'architecture d'une batterie séparée en plusieurs parties et présentant un pont en H selon un mode de réalisation de l'invention.
La figure 35 représente de manière plus détaillée une variante d'architecture d'une batterie séparée en plusieurs parties et présentant un pont en H selon un mode de réalisation de l'invention.
La figure 36 illustre une batterie selon un mode de réalisation l'invention, dans lequel plusieurs cellules élémentaires sont regroupées.
La figure 37 illustre une solution pour le pilotage des transistors séries et parallèle à partir d'une tension relativement faible issue des cellules.
La figure 38 illustre une batterie comprenant trois colonnes selon un mode de réalisation de l'invention adapté pour délivrer trois tensions indépendantes avec inversion possible de signe.
La figure 39 illustre une variante de réalisation de la batterie de la figure 38 adaptée pour délivrer une tension triphasée.
La figure 40 représente de manière détaillée une d'architecture d'une batterie délivrant une tension triphasée selon un mode de réalisation de l'invention.
La figure 41 représente un exemple de fonctionnement de la batterie de la figure 40 délivrant une tension triphasée.
La figure 42 illustre schématiquement la mise en oeuvre d'une mesure d'impédance électrique selon un mode de réalisation de l'invention.

Selon un aspect avantageux de l'invention, des interrupteurs et des capteurs de mesure sont intégrés au niveau de tout ou partie des cellules d'une batterie, pour permettre, par l'intermédiaire d'un dispositif de commande de ces interrupteurs, d'utiliser ou non certaines cellules en fonction des besoins et des mesures effectuées. Cela permet l'optimisation de la batterie, l'augmentation de ses performances et de sa durée de vie.

Dans les figures suivantes, les mêmes références seront utilisées pour des éléments identiques ou similaires dans chaque mode de réalisation de l'invention, pour une raison de simplification de la description.

La figure 4 représente schématiquement un mode de réalisation de l'invention dans lequel une batterie comprend une multitude de cellules 11 organisées en plusieurs modules 12 comme dans l'état de la technique. Toutefois, chaque cellule 11 est associée à un interrupteur 13 qui lui est propre, disposé en série, qui permet de déconnecter la cellule du reste de la batterie par son ouverture : pour cela, nous l'appellerons « interrupteur de cellule 13 » par la suite. De plus chaque module 12 comprend aussi un interrupteur 14 en parallèle des cellules 11 du module 12, permettant ainsi de court-circuiter l'ensemble du module : pour cela, nous l'appellerons « interrupteur de module 14 » par la suite. L'utilisation d'une telle batterie pour alimenter une charge 15, comme un moteur, permet de s'affranchir des convertisseurs intermédiaires utilisés dans l'état de la technique, comme cela apparaît sur la figure 4. Ce fonctionnement sera explicité par la suite.

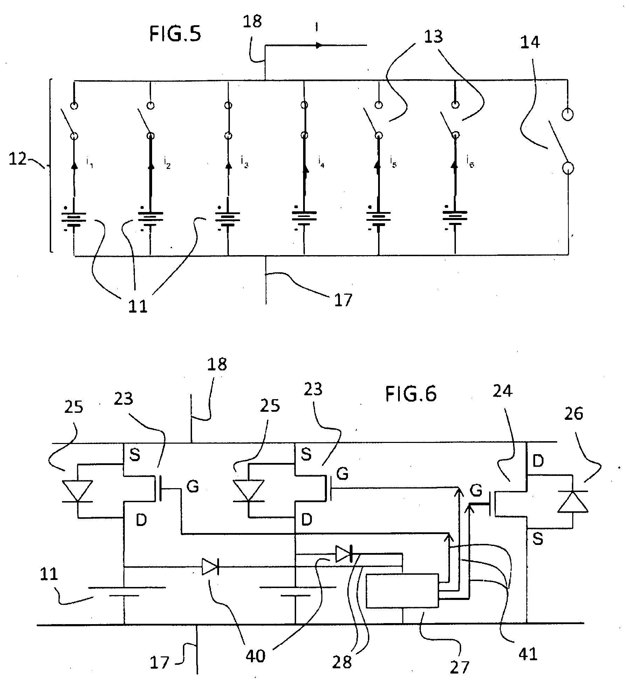

La figure 5 illustre plus en détail un module 12 de la batterie selon le mode de réalisation de l'invention. Il comprend une borne inférieure 17, reliée à un module voisin inférieur, et une borne supérieure 18 pour une liaison série avec le module voisin supérieur. Selon cet exemple, ce module comprend six cellules 11 disposées en parallèle. Naturellement, il pourrait en variante comprendre tout autre nombre de cellules. Plus précisément, le module comprend d'abord six branches parallèles disposées entre ses bornes supérieure 18 et inférieure 17, sur lesquelles sont disposées une cellule 11 et un interrupteur de cellule 13, apte à déconnecter ou non la cellule d'une des deux bornes 17, 18. Il comprend une septième branche sur laquelle est disposé un interrupteur de module 14, en parallèle avec les cellules, apte à shunter les cellules. Sur l'exemple illustré, seules les troisième et quatrième cellules sont utilisées car leurs interrupteurs de cellule 13 respectifs sont fermés, alors que tous les autres interrupteurs de cellule sont ouverts. D'autre part, l'interrupteur de module 14 est ouvert pour mettre le module 12 dans sa configuration normale de stockage ou de restitution d'énergie.

La figure 6 illustre plus précisément le schéma électrique choisi pour mettre en oeuvre le schéma explicité ci-dessus, en référence avec la figure 5. Sur cette figure 6, seuls deux interrupteurs de cellule 13 sont représentés pour simplifier la figure. Les différents interrupteurs 13, 14 sont réalisés à l'aide de transistors de puissance 23, 24, de préférence des transistors de type NMOS, qui apportent un gain en conductivité dans leur état passant par rapport à des transistors PMOS qui pourraient en variante être utilisés. En variante, il est aussi possible d'utiliser d'autres types de transistors tel que des bipolaires, FET, JFET, IGBT, etc. On peut aussi placer plusieurs transistors en parallèle pour mieux assurer le passage du courant. Naturellement, il existe autant de transistors de cellule 23 que d'interrupteurs de cellule 13, et un transistor de module 24 pour former l'interrupteur de module 14. Tous ces transistors 23, 24 sont associés à des diodes 25, 26 montées en parallèle, qui sont intégrées dans les transistors si ce sont des transistors de puissance discrets NMOS ou en variante sont des diodes distinctes, pour représenter leur caractéristique de laisser passer le courant en sens inverse. Enfin, un circuit de commande 27, généralement appelé par la dénomination anglo-saxonne « driver », est alimenté électriquement par des liaisons 28 lui permettant de récupérer une différence de tension correspondant sensiblement à la tension de la cellule la plus chargée, légèrement diminuée par une chute de tension (par exemple proche de 0,6 V) au niveau des diodes 40 disposées sur les liaisons 28. Ce circuit de commande a pour fonction de générer des signaux de commande 41 vers les différents transistors 23, 24 pour les actionner remplissant ainsi une fonction de commande des interrupteurs. De manière similaire et non représenté pour une question de clarté des figures, tous les composants électroniques du module peuvent être alimentés selon la même solution, comme un calculateur permettant d'estimer l'état des interrupteurs, un éventuel système de communication, etc.

Le fonctionnement de ce dispositif va maintenant être expliqué. Lors de son utilisation dans un circuit similaire à celui de la figure 4, en configuration habituelle de fonctionnement, au moins un des transistors de cellule 23 est fermé, alors que le transistor de module 24 est ouvert, ce qui permet aux cellules 11 associées aux transistors de cellule 23 fermés de délivrer une tension et un courant qui traverse les transistors fermés et qui va finalement contribuer à l'alimentation de la charge 15. Un courant circule de la borne inférieure 17 vers la borne supérieure 18. En revanche, si tous les transistors de cellule 23 sont ouverts et que le transistor de module 24 est fermé, le courant va passer par ce transistor de module et les cellules du module sont isolées, ne participent pas à la génération de courant d'alimentation. Dans le cas où tous les transistors 23, 24 sont ouverts, le courant consommé, c'est-à-dire de décharge de la batterie, va passer par la diode inverse 26 associée au transistor de module 24, et la tension aux bornes 17, 18 du module reste égale à environ -0,6 V (la tension de la borne supérieure 18 est inférieure d'environ 0,6 V à celle de la borne inférieure 17 : cette chute de tension provient de la diode inverse 26 associée au transistor de module 26). Enfin, il est évité de positionner un transistor de cellule 23 fermé alors que le transistor de module 24 est aussi fermé, pour ne pas mettre la cellule 11 en court circuit, pour des raisons de sécurité. Ainsi, pour tout passage des transistors de cellule 23 fermés vers une situation où le transistor de module 24 est fermé, ou inversement, il sera de préférence procédé à une étape intermédiaire d'ouverture de tous les transistors, pendant une courte période de quelques nanosecondes par exemple.

D'autre part, le dispositif représenté sur cette figure 6 est aussi adapté à un fonctionnement en mode de recharge des cellules, dans lequel le courant est inversé et circule depuis la borne supérieure 18 vers la borne inférieure 17. En situation normale, les transistors de cellule 23 sont fermés, alors que le transistor de module 24 est ouvert, ce qui permet à un courant de traverser les transistors de cellule 23 pour recharger les cellules 11. En revanche, si tous les transistors de cellule 23 sont ouverts et que le transistor de module 24 est fermé, le courant va passer par ce transistor de module et l'ensemble du module est isolé, n'est pas rechargé. Dans le cas où tous les transistors 23, 24 sont ouverts, un courant va passer par les diodes inverses 25 associées aux transistors de cellule 23, et la tension aux bornes 17, 18 du module reste égale à celle des cellules (par exemple 3,3 V) augmentée de la tension aux bornes des diodes 25 (par exemple + 0,6 V). Enfin, il est de même évité dans cette phase de recharge de positionner un transistor de cellule 23 fermé alors que le transistor de module 24 est aussi fermé, pour ne pas mettre la cellule 11 en court-circuit, pour des raisons de sécurité.

Il est intéressant de noter que la tension d'un module reste faible, même quand tous les transistors sont ouverts, ce qui permet d'utiliser des transistors supportant des tensions relativement faibles et peu coûteux, et dont la résistance à l'état passant est très faible, ce qui induit peu de pertes. Cela sera notamment vérifié si les cellules 11 présentent une tension inférieure à 40 V.

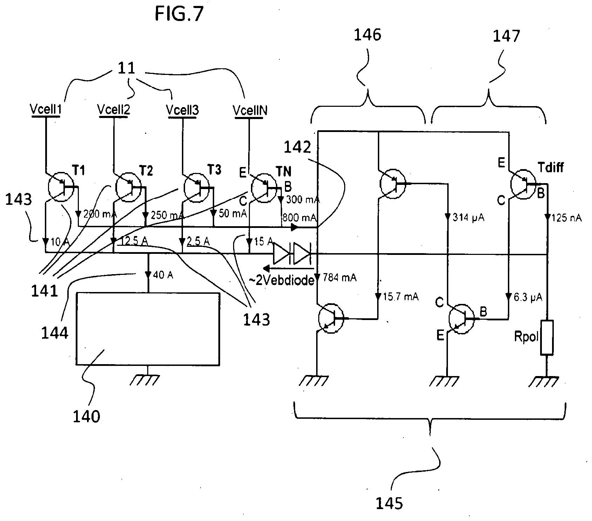

La figure 7 illustre une variante de réalisation du schéma électrique précédent pour implémenter le même principe différemment, permettant notamment d'obtenir une alimentation locale des composants électroniques 140 du circuit à partir de la tension stockée par les cellules du module considéré. Pour une raison de simplification, les composants électroniques ne sont pas détaillés, mais ils comprennent au moins un circuit de commande et des interrupteurs, comme explicité ci-dessus. Dans cette variante, un transistor 141 PNP bipolaire est associé à chaque cellule 11 du module. Tous ces transistors 141 sont commandés par un même courant d'une borne 142 d'un dispositif de commande 145. Il en résulte en sortie 143 de chaque transistor un courant dont l'intensité dépend de la tension de chaque cellule 11, c'est-à-dire de l'état de charge et de santé de chaque cellule 11. Ces courants sont additionnés afin d'alimenter les composants électroniques par un courant 144 résultant. La commande des transistors 141 est telle que le courant 144 final d'alimentation atteint une valeur souhaitée. La solution permet de solliciter les différentes cellules du module en fonction de leur état, de leur tension disponible.

Cette solution évite de plus d'avoir la chute de tension entre la tension disponible au niveau du module et celle réellement exploitable par les composants électroniques, comme dans la réalisation décrite ci-dessus en référence avec la figure 6, du fait de l'utilisation de diodes. Cette chute de tension peut notamment être gênante dans une réalisation pour laquelle les cellules seraient des cellules basse tension, de valeur 1.5 V par exemple.

Le dispositif de commande 145 comprend un dispositif d'amplification comprenant deux étages d'amplification 146 et 147 selon ce mode de réalisation pour permettre de mettre en oeuvre la commande du dispositif d'alimentation décrit ci-dessus sans nécessiter une puissance trop importante, qui engendrerait une chute de tension au niveau du module, ce qui est évité dans cette réalisation. Pour cela, un premier courant très faible est prélevé sur le module, au niveau d'un premier transistor Tdiff, puis amplifier par une cascade d'amplification, pour atteindre la valeur de commande souhaitée sur la borne 142. Le courant de commande sur la borne 142 s'ajuste automatiquement en fonction de la demande en courant des composants électroniques 140, ce qui limite celui-ci au strict nécessaire et en temps réel et limite ainsi la consommation moyenne liée à cette commande.

Les valeurs numériques illustrent un exemple d'implémentation permettant d'atteindre un courant d'alimentation de 40 A en prélevant un courant de 125 nA pour sa commande.

Selon le mode de réalisation de l'invention, chaque cellule comprend de plus au moins un capteur de mesure d'une grandeur caractéristique de l'état de la cellule. Ce capteur de mesure peut par exemple mesurer la tension et/ou l'intensité et/ou la température au niveau de la cellule concernée. Chaque capteur de mesure est de plus relié par un dispositif de communication à un dispositif intelligent, local et/ou distant, comme un calculateur de type microcontrôleur, qui reçoit les valeurs mesurées et met en oeuvre un procédé de gestion de batterie, qui sera décrit plus en détail ultérieurement, pour déterminer un mode de fonctionnement optimisé de la batterie, en tenant compte des mesures effectuées. Ce fonctionnement optimisé consiste en fait à déterminer les interrupteurs 13, 14 qui doivent être ouverts et fermés. Cette configuration des différents interrupteurs de la batterie peut être modifiée en temps réel. Cette solution permet ainsi par exemple d'écarter les cellules défectueuses ou en surchauffe, d'aiguiller le courant au sein même de chaque module, d'équilibrer chacune des cellules de la batterie en temps réel. En remarque, le courant moyen demandé par une charge 15 alimentée par la batterie est en général beaucoup plus faible que le courant crête demandé en pointe de consommation, ce qui permet à la batterie de fonctionner avec satisfaction la plupart du temps avec un nombre relativement important de cellules déconnectées, c'est-à-dire dont l'interrupteur de cellule 13 associé est ouvert, voire de modules déconnectés, c'est-à-dire dont l'interrupteur de module 14 associé est fermé, si l'ensemble d'un module est considéré comme défectueux ou en surchauffe par exemple.

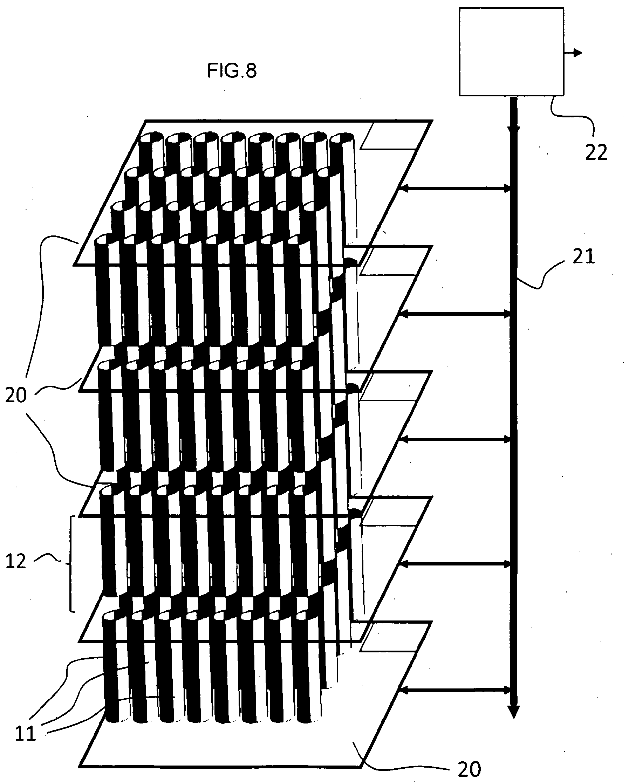

Les figures 8 à 10 représentent des exemples possibles de réalisation physique des fonctions électriques ajoutées par l'invention dans l'architecture d'une batterie selon un mode de réalisation de l'invention.

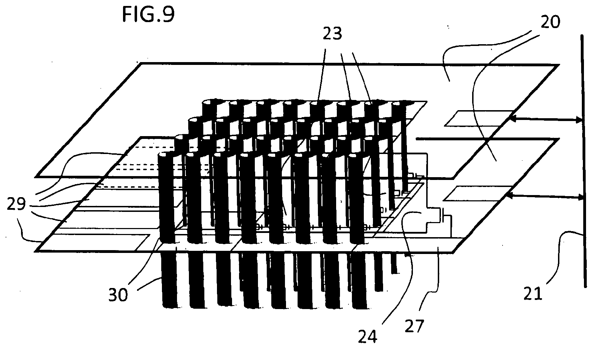

Les figures 8 et 9 illustrent une première réalisation dans laquelle une carte électronique 20, qui comprend les composants explicités précédemment, est ajoutée pour chaque module de la batterie. Cette carte électronique se présente sous la forme d'un circuit imprimé positionné sur la face inférieure ou supérieure de chaque module. Ainsi, la batterie comprend une carte électronique 20 entre chaque module.

Ensuite, selon la réalisation représentée sur les figures 8 et 9, chaque carte électronique est reliée par un bus de communication 21 à un calculateur central 22, qui reçoit les mesures effectuées localement au sein d'un module de la batterie et met en oeuvre un procédé de gestion de la batterie, comprenant notamment la transmission de commandes d'ouverture et/ou fermeture des interrupteurs de la batterie. Ce transfert de données par le bus de communication 21 peut nécessiter un éventuel multiplexage et numérisation des données, ainsi qu'une isolation galvanique (par transformateur ou optocoupleur). D'autre part, un circuit de commande 27 est placé sur chaque carte électronique et constitue un élément intermédiaire entre le calculateur 22 et les interrupteurs, permettant l'adaptation de la tension transmise aux transistors 23, 24 formant la fonction d'interrupteurs pour la mise en oeuvre des commandes du calculateur. Ces circuits de commande 27 peuvent de plus intégrer des fonctions de sécurité pour éviter par exemple de fermer un interrupteur de module 14 alors que les interrupteurs de cellule 13 sont fermés, pour éviter tout court-circuit.

La figure 9 illustre plus précisément les composants présents sur chaque carte électronique, qui comprend des capteurs de mesure 29, pour mesurer la température, la tension, et le courant, un ou plusieurs circuits de traitement 30 pour estimer le niveau de charge de chaque cellule par exemple, déterminer la pertinence d'utiliser ou non chaque cellule, etc. La carte électronique 20 comprend de plus un circuit de commande 27 permettant l'actionnement des différents transistors 23, 24, formant les interrupteurs 13, 14. Enfin, elle comprend une interface de communication en liaison avec le dispositif de communication afin de communiquer avec le calculateur central 22.

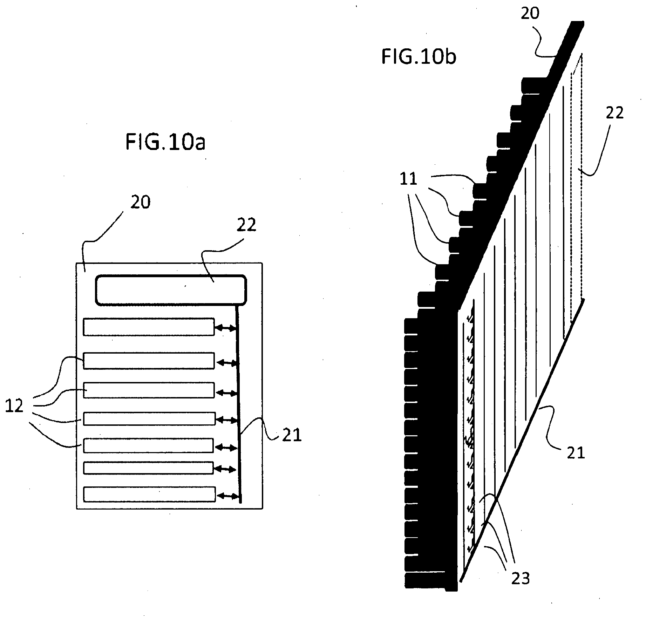

Les figures 10a et 10b illustrent une variante de réalisation dans laquelle les fonctions électroniques de chaque carte électronique du mode de réalisation décrit ci-dessus sont regroupées sur une seule carte électronique 20, sur laquelle les cellules sont disposées de telle sorte que leur axe soit perpendiculaire à la carte électronique 20. La figure 10a représente une vue de dessus, permettant de voir la répartition des modules 12 sur la carte 20, alors que la figure 10b représente une vue en perspective arrière, permettant de distinguer différentes cellules 11, ainsi que certains composants électroniques comme des transistors de cellule 23, représentés sommairement de manière non exhaustive pour simplifier la représentation de la carte électronique 20. Toutefois, cette dernière comprend tous les composants explicités précédemment. Le bus de communication 21 s'étend sur toute la longueur de la carte jusqu'au calculateur central 22, positionné vers une extrémité libre de la carte électronique 20. Ce bus de communication 21 peut être isolé physiquement de l'électronique des modules en établissant une bande de circuit imprimé dédiée au bus de communication, séparée des composants électronique des différents modules, en séparant par exemple leurs masses, et/ou en gardant une distance de sécurité entre les deux parties. Seuls les éléments de communication entre ces deux parties, comme des transformateurs ou des opto-coupleurs, resteront à cheval sur ces deux parties pour assurer la communication tout en garantissant l'isolation galvanique.

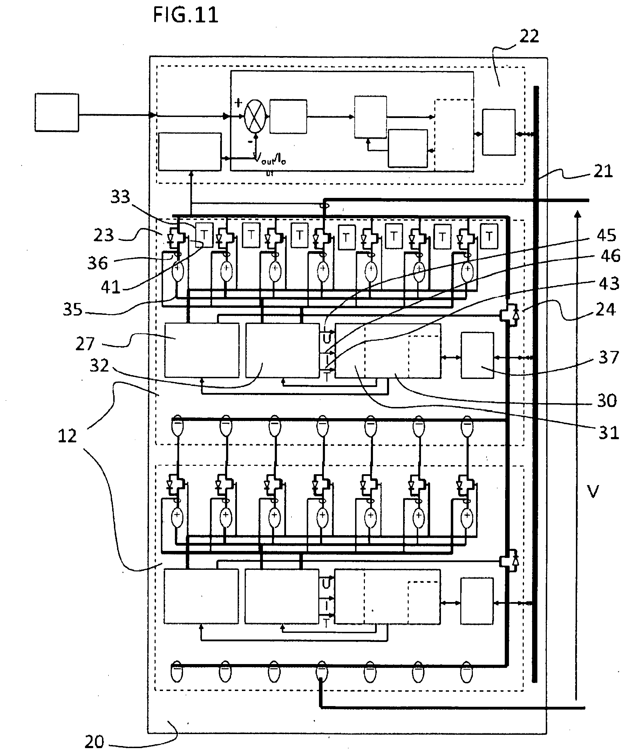

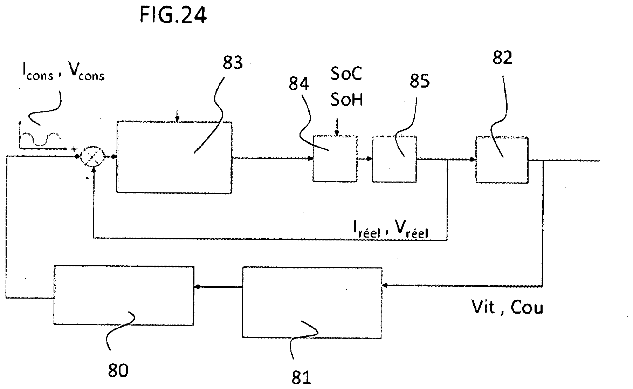

La figure 11 représente de manière plus détaillée l'architecture de la carte électronique 20 associée à deux modules 12, comprenant sept cellules chacun dans cet exemple. Pour chaque cellule, un transistor de cellule 23 est prévu, en série avec la cellule, et un transistor de module 24, en parallèle, est prévu pour chaque module 12, comme explicité précédemment. D'autre part, un capteur de température 33, un capteur de tension 35 et un capteur de courant 36 sont prévus pour chaque cellule. Les mesures effectuées par ces trois capteurs 33, 35, 36 sont transmises à un circuit de traitement 30 local via un multiplexeur 32 par respectivement trois voies de communications 43, 45, 46. En remarque, les connexions ont été simplifiées sur les figures pour une raison de clarté, mais il y a en réalité une nappe de fils pour obtenir une connexion vers chaque capteur et vers chaque tension. De plus, la tension du module est aussi avantageusement mesurée pour en déduire les tensions présentes au niveau des transistors. Le circuit de traitement 30 reçoit ainsi ces données au niveau d'une entrée de communication 31 effectuant une numérisation, de type « ADC input » ; ou en variante, ces signaux arrivent déjà numérisés, cette numérisation étant réalisée au niveau du multiplexeur 32. Selon une réalisation possible, le circuit de traitement 30 peut être un microcontrôleur disposant d'un nombre d'entrée/sortie suffisant pour interroger l'ensemble des capteurs. Tous les transistors 23, 24 sont pilotés par un circuit de commande 27 de puissance qui leur transmet des signaux de commande 41, sous les ordres du circuit de traitement 30. Enfin, le circuit de traitement 30 est relié au calculateur central 22 par le bus de communication 21 et par l'intermédiaire d'une interface 37 formant une isolation galvanique. Tous ces composants associés à un seul module sont alimentés par la tension d'au moins une des cellules du module 12. Comme cela a été décrit, chaque module 12 de la batterie dispose d'une intelligence propre grâce à son circuit de traitement 30 et participe ainsi au procédé de gestion de la batterie, en coopération avec le calculateur central 22 qui pilote l'ensemble des modules. Ce dernier sera décrit plus en détail ultérieurement, en référence avec la figure 24.

D'autre part, selon une réalisation avantageuse, tous les composants de puissance associés à un module sont alimentés directement par la tension disponible au niveau du module correspondant, notamment le circuit de commande 27 des transistors, décrits précédemment. Un tel circuit de commande, alimenté par son module associé, est alors isolé électriquement des autres modules et, de manière optionnelle, des potentiels électriques extérieurs au module. Une telle réalisation présente l'avantage de supprimer le risque de piloter un certain transistor avec un potentiel très différent de celui de l'étage, qui pourrait conduire à sa destruction ou à sa mise en court-circuit. De plus, cette solution apporte l'avantage supplémentaire de permettre la réduction des connexions entre les composants du circuit de commande et la source d'alimentation, puisqu'il est possible de les regrouper à une courte distance les uns des autres et de la source de tension, notamment en positionnant les transistors au plus près des cellules à connecter. Enfin, l'utilisation de connexions très courtes réduit aussi fortement tout risque de court-circuit, par exemple entre deux modules.

De même, un dispositif de communication alimenté par l'étage peut permettre de communiquer avec les autres étages et/ou avec un système central via un lien hautement isolé pour éviter les risques électriques (court circuits entre étages, détérioration du système central placé à un potentiel très différents de quelques kV par rapport à celui d'un étage de la batterie, risque électrique pour le réparateur). Contrairement à un transformateur d'impulsion qui permettrait de commander les transistors de puissance au travers d'une isolation galvanique, l'utilisation d'un dispositif de communication alimenté par le module permet d'interpréter les signaux reçus (décodage de l'adresse, de l'information), de coder les signaux à transmettre et de mutualiser les lignes de communication alors que le transformateur d'impulsion permet juste de mettre « on » ou « off » le transistor de puissance avec une ligne de connexion individualisée à chaque transistor. Le dispositif de communication peut être par exemple une interface I2C présente dans de nombreux microcontrôleurs, que l'on relit à un bus de communication mutualisé à chaque étage via une isolation galvanique.

Dans l'exemple décrit ci-dessus, le procédé de gestion de la batterie est mis en oeuvre par la coopération d'un circuit de traitement 30 local, disposé au niveau de chaque module, et d'un calculateur central 22. En variante, un circuit de traitement peut être partagé par deux modules voisins, voire trois modules voisins. L'ensemble des fonctions de gestion de la batterie pourra donc être mis en oeuvre par cette combinaison. Plusieurs modes de réalisation peuvent ainsi être imaginés, en reportant certaines fonctions de gestion du niveau local au niveau central ou inversement.

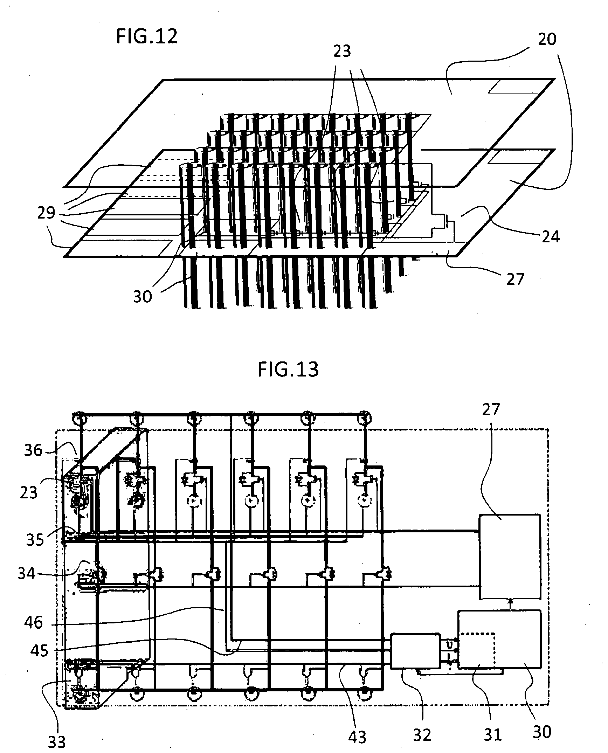

Les figures 12 à 14 illustrent une seconde variante de réalisation dans laquelle le procédé de gestion de la batterie est mis en oeuvre localement uniquement, au niveau de chaque module, voire cellule. Cela présente l'avantage de permettre un pilotage plus réactif des différents interrupteurs, d'éviter l'obligation de prévoir une isolation galvanique entre les cartes électroniques 20 et un calculateur central 22 et un codage complexe des informations à transférer. La figure 12 illustre une telle variante, dans laquelle chaque carte électronique 20 comprend des capteurs de mesure 29, pour mesurer la température, la tension, et le courant, un ou plusieurs circuits de traitement 30 pour estimer le niveau de charge de chaque cellule par exemple, déterminer la pertinence d'utiliser ou non chaque cellule, etc. La carte électronique comprend de plus un circuit de commande 27 permettant l'actionnement des différents transistors 23, 24, formant les interrupteurs de cellule et module.

La figure 13 représente de manière plus détaillée l'architecture de la carte électronique associée à un module 12, comprenant six cellules dans cet exemple. Pour chaque cellule, un transistor de cellule 23 est prévu, disposé en série avec la cellule, comme cela a été explicité précédemment. D'autre part, un capteur de température 33, un capteur de tension 35 et un capteur de courant 36 sont de plus agencés au niveau de chaque cellule. Les mesures effectuées par ces trois capteurs 33, 35, 36 sont transmises à un circuit de traitement 30 via un multiplexeur 32 par respectivement trois voies de communications 43, 45, 46, ou en variante par une même voie mutualisée. Le circuit de traitement 30 reçoit ainsi ces données au niveau d'une entrée de communication 31 effectuant une numérisation, de type « ADC input ». Selon une réalisation possible, le circuit de traitement 30 peut être un microcontrôleur disposant d'un nombre d'entrée/sortie suffisant pour interroger l'ensemble des capteurs. En remarque, l'unique transistor de module 24 est remplacé dans cette réalisation par plusieurs interrupteurs parallèles formés par des transistors 34 : dans cette variante, un transistor parallèle 34 est disposé en parallèle de chaque cellule de façon à réduire au maximum la longueur des chemins de puissance lorsque ces transistors 34 sont activés. Ainsi, il apparaît que dans tous les modes de réalisation et leurs variantes, l'interrupteur de module 14 peut être remplacé par des interrupteurs parallèles sur chaque cellule du module. Tous ces transistors 23, 34 sont pilotés par un circuit de commande 27, sous les ordres du circuit de traitement 30.

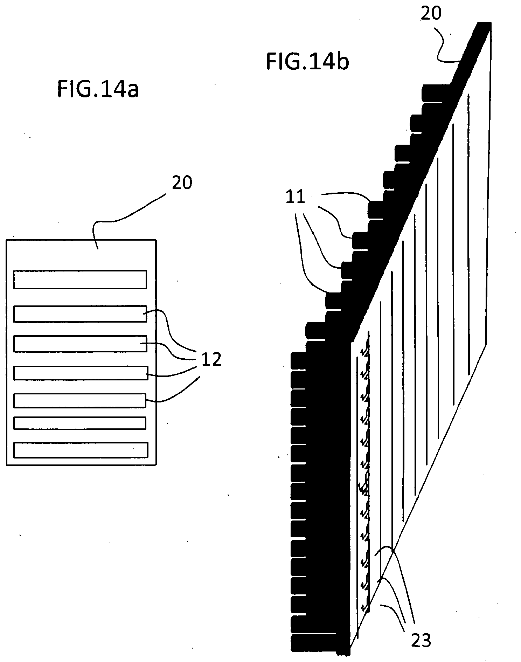

Les figures 14a et 14b illustrent une troisième variante de réalisation, qui s'apparente à celle des figures 10a et 10b, dans laquelle les fonctions électroniques sont regroupées sur une seule carte électronique 20, sur laquelle les cellules sont disposées de telle sorte que leur axe soit perpendiculaire à la carte électronique 20, et dont seul un traitement local au niveau de chaque module est effectué, sans liaison avec un calculateur central. La figure 14a représente une vue de dessus, permettant de voir la répartition des modules 12 sur la carte 20, alors que la figure 14b représente une vue en perspective arrière, permettant de distinguer différentes cellules 11, ainsi que certains composants électroniques comme des transistors de cellule 23, représentés sommairement de manière non exhaustive pour simplifier la représentation de la carte électronique 20. Toutefois, cette dernière comprend tous les composants explicités en référence avec la figure 13.

En remarque, il est finalement possible de réaliser des modes de réalisation avec différents nombres de cartes électroniques 20, une carte pouvant contenir les circuits électroniques de l'invention pour un, deux, ou tout nombre de modules. De plus, il est aussi possible de prévoir d'autres modes de réalisation dans lesquels une partie seulement des composants électroniques présentés précédemment sont présents, sur une carte électronique ou pas, ou dans lesquels certains composants sont partagés entre cellules et/ou modules. Par exemple, un circuit de commande d'interrupteurs peut être partagé par plusieurs modules voisins, de sorte de conserver une alimentation de tension acceptable. Avantageusement, un tel circuit de commande est prévu au moins un module sur deux, voire un module sur trois.

Dans tous les cas, les cartes électroniques 20 sont avantageusement disposées de sorte de disposer leurs bornes de connexion avec les cellules 11 au plus proche des bornes des cellules de façon à réduire au maximum la longueur des connexions et donc les pertes associées. De même, sur le circuit imprimé de la carte électronique, les chemins de puissance sont les plus courts possibles avec une section de conducteur la plus élevée possible.

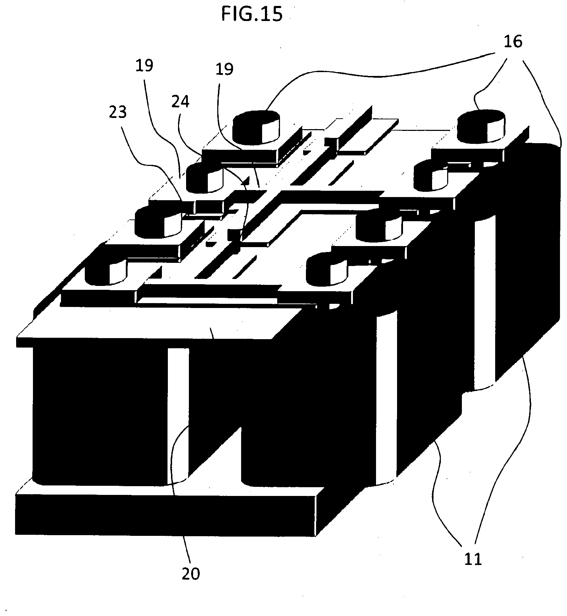

Pour augmenter la section de conducteur, il est possible de renforcer les pistes du circuit imprimé en soudant par-dessus une baguette ou fil conducteur. La figure 15 illustre une telle solution, sur laquelle une carte électronique 20 de type circuit imprimé est superposé sur un module de plusieurs cellules 11. Sur cette figure, seulement deux modules de deux cellules sont représentés, pour une raison de clarté de la figure, mais la batterie comprend plus de deux modules ayant chacun plus de deux cellules. En remarque, un tel renforcement peut remplir la seconde fonction d'évacuation de la chaleur générée, notamment celle dissipée par les transistors de puissance ; pour cela, sa forme peut présenter une surface favorisant cette fonction, à la manière d'un convecteur ou radiateur. Des connecteurs 16 sont aménagés sur cette plaque, afin de relier électriquement les cellules à l'électronique de la carte (par exemple des cellules dont les bornes positives et négatives traversent la carte et serrent la carte et les pistes de puissance renforcées via un écrou qui se vis sur les bornes de la cellule. Une rondelle relativement élastique peut être rajoutée entre la carte et l'écrou pour compenser des effets de dilatation thermique et assurer un bon contact électrique dans la durée. En variante, une simple soudure peut assurer le contact électrique entre les bornes de la cellule et les pistes de puissance de la carte PCB). Comme cela apparaît sur la figure, des renforts conducteurs électriques 19 sont ajoutés aux pistes du circuit imprimé. Ces renforts représentent aussi un potentiel radiateur thermique soudé et/ou collé sur les pistes. En complément, des trous, non représentés, peuvent être réalisés au travers la carte électronique 20 pour faciliter la circulation d'air et le refroidissement des cellules 11 et des composants électroniques.

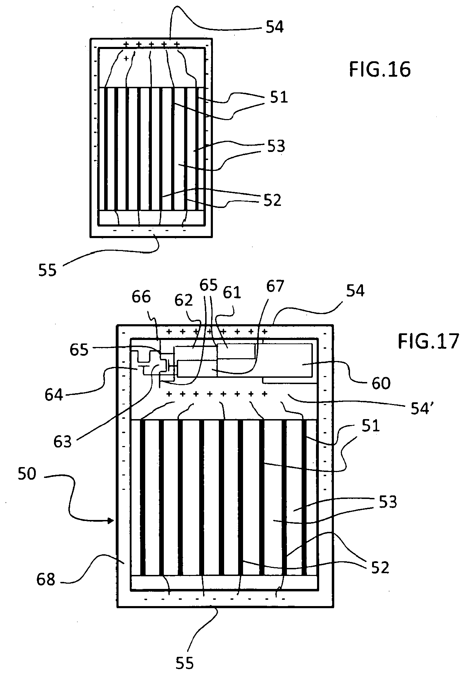

La figure 16 illustre la structure interne d'une cellule de type Lithium-Ion couramment utilisée dans l'état de la technique. Une telle cellule se présente sous une forme cylindrique, comme cela a été décrit précédemment, et comprend une multitude d'électrodes positives 51 et négatives 52, se présentant sous la forme de couches enroulées imbriqués de même axe, séparées par des couches d'électrolytes 53. Une première face externe forme la borne positive 54 ou premier collecteur de courant de la batterie et une seconde face externe forme la borne négative 55 ou second collecteur de courant.

La figure 17 représente une cellule de type Lithium-Ion selon un second mode de réalisation de l'invention, dans lequel des fonctions supplémentaires sont intégrées au sein même de la structure de la cellule. Ainsi, la cellule de stockage d'énergie 50 de l'invention comprend les mêmes composants que la batterie de l'état de la technique représentée sur la figure 16. Pour faciliter l'intégration de composants au sein de la batterie 50, une borne positive 54' intérieure est ajoutée, directement reliée à la partie active de stockage d'énergie de la batterie élémentaire. La batterie comprend ainsi un interrupteur de cellule 63, sous forme d'un transistor, disposé en série avec la partie active de la batterie et un second transistor 64 disposé en parallèle de la batterie, c'est-à-dire en parallèle de la partie active en série avec le transistor de cellule 63. Elle comprend de plus un dispositif de commande de ces interrupteurs, un microcontrôleur 60 avec une interface d'entrée 61 et un circuit de commande 67, qui reçoit des instructions du microcontrôleur et transmet les commandes d'ouverture et/ou fermeture aux interrupteurs. Enfin, la batterie intègre un capteur de température 62, un ou plusieurs capteurs de tension 65 et un capteur de courant 66. Tous ces composants sont donc montés dans un volume supérieur de la cellule, aménagé entre la borne positive intérieure 54' mentionnée précédemment et une borne positive extérieure 54. Naturellement, en variante, ces composants pourraient être agencés différemment, à l'intérieur de l'enveloppe extérieure 68 de la cellule 50, ou la cellule pourrait n'intégrer qu'une partie de ces composants. Par exemple, la cellule pourrait être rectangulaire, comme une batterie plate pour un téléphone portable. Par ailleurs, la polarité des bornes de la partie active pourrait être inversée, ainsi que celle de la cellule (le transistor série serait placé du coté de la borne moins au lieu de la borne plus).

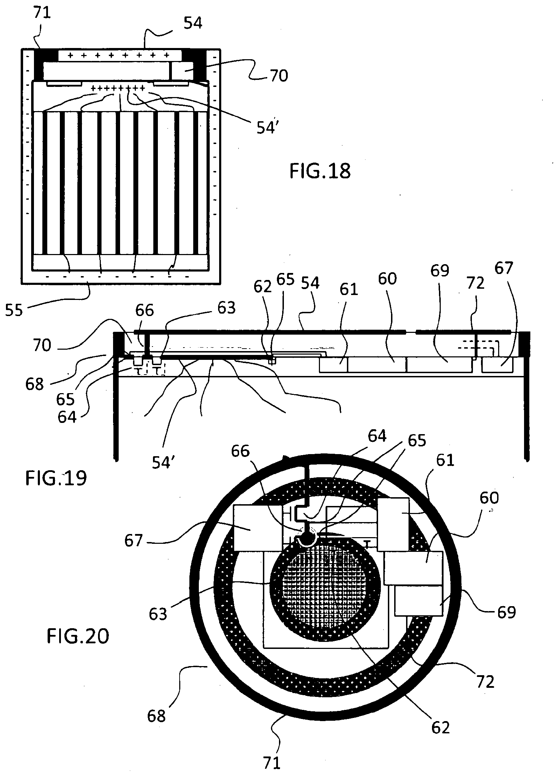

Les figures 18 à 20 illustrent une variante du mode de réalisation précédent, dans laquelle les différents composants ajoutés au sein de la cellule 50 sont positionnés sur une carte électronique de type circuit imprimé 70, afin de réduire le nombre de fils nécessaires et faciliter la fabrication à grande échelle d'une telle cellule. La figure 18 illustre une telle réalisation, dans laquelle une carte électronique 70 se trouve entre les deux bornes positives 54', 54 de la cellule et directement connectée à ces deux bornes. La partie latérale de la carte électronique est recouverte d'une couche d'étanchéité 71, par exemple comprenant une colle, qui permet la séparation des deux bornes 54, 55 de la cellule tout en protégeant, et fixant de manière étanche la carte électronique. De plus, avantageusement, les composants positionnés sur la carte électronique 70 sont protégés par une couche de protection isolante, de type vernis.

Les figures 19 et 20 illustrent en détail un exemple de réalisation de la carte électronique 70. Elle comprend une liaison inférieure avec la borne positive intérieure 54' de la cellule. La carte intègre sur sa surface inférieure les composants suivants : un circuit de commande 67, qui pilote les transistors de puissance à partir des signaux faible puissance et faible tension issus d'un microcontrôleur 60 ou de circuits logiques. Dans cette réalisation, le microcontrôleur 60 est relié aux différents capteurs, un capteur de température 62, deux capteurs de tension 65, pour mesurer respectivement la tension des bornes positive intérieure 54' et extérieure 54, et un capteur de courant 66, par un convertisseur analogique numérique de type CAN par l'intermédiaire d'une interface d'entrée 61. La carte électronique 70 intègre de plus un transistor de cellule 63 en série et un second transistor en parallèle 64. De plus, selon cette variante de réalisation, le microcontrôleur 60 est doté d'une interface de communication 69, reliée par une voie traversant l'enveloppe extérieure 68 de la cellule à une borne de communication 72, accessible depuis l'extérieur de la cellule. Cette borne de communication 72 permet une communication avec les cellules placées en parallèle sur le même module, ou avec un système de pilotage extérieur. Dans un tel cas, une isolation galvanique de la communication peut être mise en place.

Dans tous ces cas d'utilisation d'une carte électronique intégrée au sein d'une cellule, il est possible d'utiliser plusieurs transistors en parallèle pour remplir la fonction d'interrupteur, afin de réduire la résistance globale à l'état fermé obtenue avec un seul transistor, de faire circuler un courant plus important ou de répartir l'échauffement en plusieurs points sur la carte électronique 70 pour faciliter l'évacuation de la chaleur.

Ainsi, dans le cadre du second mode de réalisation de l'invention, le premier mode de réalisation de l'invention et ses variantes peuvent être modifiés en utilisant des cellules qui intègrent directement dans leur enveloppe les fonctions explicitées précédemment, ce qui évite la nécessité des cartes électroniques indépendantes 20 décrites dans le premier mode de réalisation de l'invention. Dans ce second mode, la carte est adaptée à la cellule, mais pas à l'organisation de la cellule dans la batterie, au contraire du premier mode de réalisation pour lequel la carte 20 doit s'adapter à l'organisation physique des cellules dans la batterie, qui peut variée d'une application à une autre.

La structure ainsi décrite d'une batterie est de type modulaire, et permet une implémentation physique sous la forme de différents boîtiers indépendants et amovibles qui peuvent être connectés les uns avec les autres, par l'intermédiaire d'un bus de communication et d'un bus de puissance, dans un bâti ou rack adapté. Chaque boîtier peut comprendre une sous-partie quelconque de la batterie, qui peut aller d'un module à plusieurs modules.

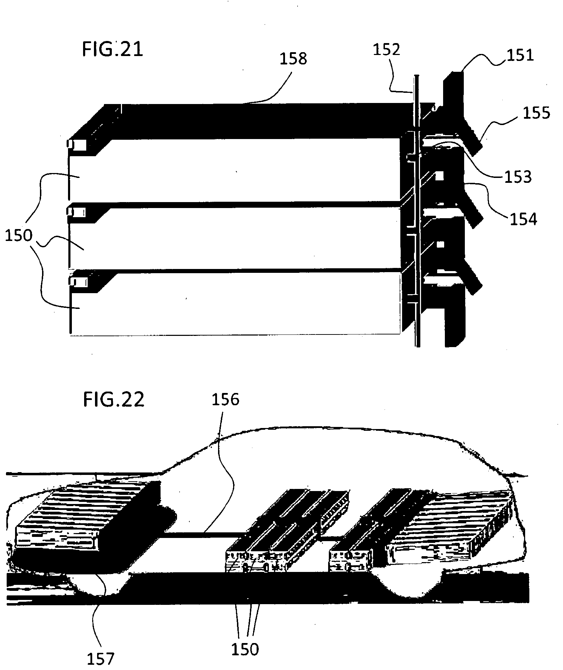

La figure 21 illustre une telle approche dans laquelle les différents boîtiers 150 sont disposés dans une architecture modulaire de type rack. Chaque boîtier est fixé sous forme de tiroir indépendant et maintenu par un dispositif de verrouillage/déverrouillage. Dans leur position fixée, les boîtiers sont reliés à un bus de communication 152 par l'intermédiaire d'un connecteur 153, de manière hautement isolée galvaniquement, et à un bus de puissance 151 par un connecteur de puissance 154 qui leur permet une liaison série avec les boîtiers adjacents. Le dispositif de verrouillage/déverrouillage 158 est associé à un système d'interrupteur permettant de couper automatiquement les connexions au bus de communication et au bus de puissance lorsqu'il est actionné pour retirer un boîtier 150. La connexion est remplacée par un court-circuit, via par exemple l'interrupteur mécanique ou électrique 155, lorsque le boîtier est retiré pour ne pas couper la connexion entre les boîtiers restants. Pour cela, un début de verrouillage ou déverrouillage par un actionnement d'un levier ou poignée du dispositif de verrouillage/déverrouillage est détecté et une information est transmise au système de gestion globale de la batterie, comme un calculateur central. En cas de déverrouillage d'un boîtier, le calculateur l'écarte aussitôt du fonctionnement global de la batterie et lui impose une tension nulle à ses bornes, ce qui assure la sécurité des manipulations futures et permet son stockage sécurisé. Les connexions avec les bus de puissance et de communication sont ensuite automatiquement coupées, par un interrupteur, de manière mécanique ou électrique. Les opérations précédentes sont effectuées de manière réversible en cas d'introduction d'un boîtier dans le bâti.

Ainsi, la batterie comprend plusieurs boîtiers disposés en série, et comprend un bâti avec des emplacements pour loger les boîtiers de manière amovible, un emplacement comprenant des contacts électriques pour la liaison électrique d'un boîtier avec les bornes de la batterie, par l'intermédiaire d'un bus de puissance, l'emplacement étant associé à un interrupteur de bâti, de sorte à pouvoir conserver une restitution électrique en l'absence d'un certain boîtier dans un certain emplacement par l'intermédiaire d'au moins un autre boîtier disposé dans un autre emplacement du bâti.

Cette construction présente l'avantage d'une gestion physique simplifiée de la batterie. Chaque sous-ensemble compris dans chaque boîtier est géré de manière indépendante ou semi-indépendante grâce à l'architecture décrite dans les modes de réalisation présentés précédemment. Il est ainsi possible de connaître précisément l'état de charge, l'état de santé comme le vieillissement, une éventuelle détérioration, la capacité en courant et tension de chaque boîtier, et de pouvoir intervenir sur un boîtier donné en cas de défaillance, pour changer un module voire une cellule, ou de pouvoir l'échanger si nécessaire, sans pénaliser l'ensemble de la batterie.

Cet assemblage physique peut ainsi être intégré dans un véhicule automobile comme illustré en figure 22, dans laquelle les différents boîtiers sont répartis sur toute la longueur dans la partie inférieure du véhicule automobile, à titre d'exemple, liés entre eux par une liaison 156 incluant un bus de puissance 151 et un bus de communication 152, cet ensemble étant lié à un calculateur central 157.

L'invention porte aussi sur un procédé de gestion d'une batterie telle que décrite précédemment. Ce procédé comprend les étapes essentielles suivantes :
- mesure d'au moins une grandeur au niveau d'une cellule de la batterie, représentative de l'état de la cellule ;
- transmission de la grandeur mesurée à au moins un calculateur ;
- détermination de la position d'un interrupteur de cellule et/ou de module en prenant en compte la grandeur mesurée ;
- transmission d'une commande d'ouverture ou fermeture d'un interrupteur de cellule et/ou de module en fonction de la détermination précédente.

Le procédé de gestion de batterie permet ainsi de déterminer à chaque instant la position de plusieurs interrupteurs de cellules et/ou modules, de façon à équilibrer chacun des modules de la batterie et d'aiguiller le courant au sein de chaque module pour équilibrer chacune des cellules des modules. Le procédé pourra notamment comprendre une étape intermédiaire consistant à diagnostiquer une défaillance et/ou un état à risque d'une cellule, en reconnaissant les cellules défectueuses, en surchauffe, etc., à partir de la grandeur mesurée au niveau d'une cellule, afin de déconnecter ou écarter du fonctionnement global de la batterie les cellules concernées, en ouvrant par exemple leur interrupteur de cellule, ou en fermant l'interrupteur de module concerné.

Ainsi, en revenant à l'exemple illustré sur la figure 5, il apparaît que les cellules 1, 2, 5, et 6 ont été écartées. Dans une batterie comprenant un nombre important de cellules et de modules, il est facile d'en écarter un nombre significatif, par exemple 10 % du nombre total de cellules, sans pénaliser l'utilisation de la batterie car le courant demandé est généralement inférieur au courant maximal disponible, utilisé uniquement dans une situation de crête de consommation. D'ailleurs, en cas de pic de consommation, il sera toujours possible de faire appel momentanément aux cellules écartées pour répondre au besoin plus important. Comme ces cellules resteront la plupart du temps inutilisées, elles ne mettront pas en danger la santé globale de la batterie.

Le procédé de gestion de batterie comprend donc une étape de diagnostic d'une cellule incluant une étape d'estimation de l'état d'une cellule, qui peut comprendre à titre d'exemple non limitatif une ou plusieurs mesures de courant, de tension, de température, de spectrométrie d'impédance ou autres au niveau d'au moins une cellule, tout ou partie des cellules de la batterie. Pour cela, la grandeur mesurée peut être comparée à des seuils prédéfinis. Le pilotage de chaque transistor de cellule dépend alors de cet état estimé de la cellule, et permet par exemple de déconnecter une cellule si elle fait apparaitre un courant ou une température anormale ou si elle fournie un courant inverse aux autres cellules, comme dans une situation de cellules voisines qui se déchargent au travers d'une cellule défaillante.

L'étape de diagnostic d'une cellule comprend notamment une étape d'estimation de la charge de la cellule et une estimation de son état de santé. De même, le pilotage de chaque transistor de cellule dépend de ces estimations. Il peut notamment être établi une comparaison de la charge estimée de la cellule avec un seuil de décharge et/ou un seuil de charge.

L'étape de diagnostic d'une cellule comprend par exemple une mesure d'impédance électrique complexe d'une cellule. Pour cela, la mesure du courant et de la tension au niveau de la cellule est effectuée lors d'un instant de passage de courant dans une cellule, par exemple lors d'une commande particulière de l'interrupteur série associé à la cellule, comme son ouverture ou sa fermeture. La réponse à un bruit blanc, à un échelon ou à une impulsion permettent la mesure d'impédance complexe, de manière connue, ce qui permet d'en déduire des informations sur l'état de charge ou de santé de la cellule.

L'étape de diagnostic d'une cellule selon une réalisation de l'invention comprend aussi une mesure du courant au sein d'une cellule par l'intermédiaire d'un transformateur de courant. L'idée est d'augmenter la fréquence du courant pour faciliter la mesure, notamment dans le cas de courants continus, sans utiliser de captateurs de courant continu. Pour augmenter cette fréquence, une première solution consiste à alterner les cellules utilisées au niveau des modules et à alterner les modules utilisés pour générer la tension de sortie de la batterie. Une seconde solution consiste à connecter et déconnecter rapidement la cellule au moment où on mesure son courant. Ces solutions mettent finalement en oeuvre un hachage de courant au niveau d'une cellule, ce qui permet de favoriser la mesure de ce courant. Il suffit alors d'utiliser comme capteur de courant un simple transformateur de courant, qui peut être positionné sur la carte électronique comprenant les différents composants électroniques mentionnés décrits dans les modes de réalisation illustrés.

L'étape de diagnostic d'une cellule comprend aussi l'estimation de l'état de charge de la cellule. Pour cela, une première solution repose sur la mesure de la tension de sortie de la cellule. Une autre solution consiste à intégrer le courant à partir de l'état déchargé pour connaître le nombre d'ampères-heures accumulés, puis le taux de charge par son rapport avec la capacité de la cellule. Cette dernière solution nécessite une calibration régulière par des opérations de charge et décharge complète pour compenser les dérives liées à l'intégration du courant et remettre à jour la capacité de la cellule au fur et à mesure de son vieillissement. Cette calibration peut être réalisée sur une ou plusieurs cellules pendant que les autres fonctionnent normalement, ce qui présente l'avantage de ne pas nécessiter l'arrêt complet de la batterie. Pour conserver l'équilibrage de la batterie, toutes les cellules subissent sensiblement le même nombre de calibrations.

D'autre part, le procédé de gestion de batterie peut mettre en oeuvre une modification cyclique de l'utilisation des cellules, de sorte que tout ou partie des cellules de la batterie passent d'un état de fonctionnement normal à un état déconnecté et réciproquement, selon un rapport cyclique déterminé qui peut être fixe ou variable. Ce rapport cyclique permet de fixer la proportion du temps d'utilisation de chaque cellule de la batterie et de faire en sorte par exemple que la proportion du temps d'utilisation des cellules défectueuses ou en surchauffe soit plus faible que celle des cellules sans surchauffe. Un tel cycle peut être utilisé pour tout ou partie des cellules, même pour des cellules saines, en fonction du besoin global en courant et tension. Les cycles de fonctionnement des différentes cellules peuvent être décalés dans le temps pour obtenir à chaque instant un nombre sensiblement équivalent de cellules actives par exemple, en garantissant à chaque instant un nombre suffisant de cellules actives pour satisfaire le courant demandé.

Ainsi, le procédé de gestion de batterie met en oeuvre les étapes suivantes :
- équilibrage des modules et/ou cellules entre eux, en utilisant en priorité les modules et/ou cellules les plus chargés lorsque la batterie est connectée à une charge et les modules et/ou cellules les moins chargés lors de la recharge de la batterie ;
- équilibrage des modules et/ou cellules en modifiant le taux moyen d'utilisation des modules et/ou cellules, mais sans utiliser les mêmes modules et/ou cellules en permanence, de sorte que la charge des modules et/ou cellules s'équilibre. En effet, si par exemple un module est très chargé par rapport aux autres modules et qu'il est utilisé en permanence afin que sa charge atteigne au plus vite la charge des autres modules, il risque de surchauffer. L'équilibrage est de préférence réalisé en permanence durant la charge ou l'utilisation de la batterie, et il n'est ainsi pas nécessaire de solliciter fortement un module pour arriver rapidement à l'équilibre. En modifiant simplement le taux moyen d'utilisation d'un tel module de quelques pourcentages par rapport aux autres modules, on peut assurer l'équilibrage de la charge des modules sans trop déséquilibrer le stress et l'échauffement des modules du pack batterie. Cet équilibrage s'applique de la même manière pour les cellules, d'un même module ou non ;

- les modules sont choisis en fonction du courant qu'ils peuvent fournir, et sollicités quant ils sont aptes à fournir un courant supérieur ou égal au courant demandé. Dans les phases où le courant demandé est plus faible, on utilise les modules dont la capacité à fournir du courant est plus faible ;
- limitation de l'utilisation des modules et/ou cellules dont la température est la plus élevée ou utilisation de manière préférentielle, lorsque le courant demandé est plus faible. De manière générique, il est évité que la température d'un module et/ou cellule dépasse un seuil ; ce risque de dépassement est anticipé. De manière optimale, la température au sein de la batterie est maintenue relativement homogène pour homogénéiser le vieillissement des cellules et augmenter leur durabilité.

En variante, d'autres stratégies sont imaginables et le procédé de gestion de la batterie peut par exemple comprendre les étapes suivantes :
- utilisation en priorité d'une partie de la batterie pour n'avoir à changer que cette partie de la batterie au premier changement nécessaire. Il est possible d'imaginer qu'une partie de la batterie soit plus facilement interchangeable ;
- utilisation selon un taux plus élevé des cellules optimisées pour résister à une utilisation intensive et limitation de la sollicitation du reste de la batterie, qui peut être optimisé pour apporter plutôt de la capacité énergétique. De manière plus générique, dans le cas d'une batterie hétérogène en technologie de cellule, c'est-à-dire réunissant des cellules de nature différente, il peut être intéressant d'avoir une hétérogénéité dans l'utilisation pour optimiser la performance globale en tenant compte des avantages de chaque cellule.

En remarque, le procédé de gestion de la batterie met en oeuvre une étape de hachage d'un courant de charge et/ou décharge d'une ou plusieurs cellules, dans le but de ralentir son vieillissement. Ce hachage est facilement réalisable en connectant et déconnectant les cellules selon un certain rapport cyclique ou en alternant l'activation des modules, tout en assurant le bon niveau de tension sur la sortie de la batterie. Le hachage du courant permet d'atteindre des courants « crête » plus élevés, ce qui se traduit au sein d'une cellule par une tension maximale plus élevée que la tension normale, ce qui favorise alors la migration des ions dans la cellule et réduit sa perte de capacité de stockage.

D'autre part, il est possible de mettre en oeuvre les étapes suivantes dans le cadre du procédé de gestion de la batterie :
- fermeture du transistor de module après un court délai suite au passage par un seuil haut de la tension du module (seuil correspondant à la tension maximale atteignable en charge au niveau du module lorsque les cellules sont connectées plus une valeur de sécurité : il s'agit d'une manière de détecter que toute les cellules sont déconnectées pendant qu'un courant de charge traverse la batterie), réouverture du transistor de module en cas d'apparition d'un courant de décharge qui passe par le transistor de module. Ce courant est aussi détecté dans les autres cellules du module : ainsi, le capteur de courant peut être placé sur le chemin de puissance commun aux transistors de cellule et de module. Si la cellule n'est pas défaillante ou sous-chargée, alors fermeture du transistor de cellule.
- fermeture du transistor de module après un court délai suite au passage par un seuil bas de la tension du module (seuil correspondant à la tension minimale atteignable en décharge au niveau du module lorsque les cellules sont connectés moins une valeur de sécurité) pour détecter que toute les cellules sont déconnectées pendant qu'un courant de décharge traverse la batterie, réouverture du transistor de module si apparition d'un courant de charge au niveau du transistor de module, détecté aussi au niveau des cellules du module, fermeture du transistor de cellule pour les cellules non défaillantes ou surchargées et quand la tension du module tend à remonter vers la tension de la cellule. En s'assurant de la remonté de la tension du module, on s'assure qu'aucun transistor de module au niveau du module ne reste fermé ;
- fermeture du transistor de module après un court délai suite au passage par un seuil bas de la tension du module, réouverture du transistor de module après un petit délai si apparition d'un courant de décharge inférieur à un seuil et si, juste avant la fermeture du transistor de module, le transistor de cellule a été ouvert pour cause de courant de décharge trop important, puis fermeture du transistor de cellule (la fermeture du transistor de cellule doit engendrer une réduction du courant voir une inversion du courant dans les transistors de module qui seraient restés fermés sur les cellules placées en parallèle, ce qui devrait accélérer leur ouverture). Si des transistors de module venaient à rester fermés, cela engendrerait un sur-courant sur les transistors de cellule, ce qui devrait conduire à leur réouverture ;
- ouverture du transistor de cellule si la cellule tend à être surchargée, par exemple soit par une tension supérieure à un certain seuil soit par un nombre d'ampère heure stocké maximal qui dépasse un certain seuil, alors le transistor de cellule est refermé s'il existe un courant de décharge et si le transistor de module correspondant est ouvert. Si ce dernier est fermé, on applique les opérations décrites précédemment ;
- ouverture du transistor de cellule si la cellule tend à être sous-chargée, par exemple soit par une tension inférieure à un certain seuil soit par un nombre d'ampère heure sous un certain seuil. Le transistor de cellule est refermé s'il existe un courant de charge et si le transistor de module correspondant est ouvert. Si ce dernier est fermé, on applique les opérations décrites précédemment ;
- ouverture du transistor de cellule si la cellule entre en surchauffe, alors répétition cyclique d'une opération d'ouverture et fermeture du transistor de cellule, de sorte de limiter la température de la cellule à un niveau acceptable, tant que le transistor de module correspondant est ouvert. Si la température de la cellule atteint une valeur trop importante, le transistor de cellule reste ouvert. Lorsque la température est redescendue sous un seuil acceptable prédéfini, le transistor est refermé, si le transistor de module correspondant est resté ouvert. Si la température remonte alors très rapidement, de manière excessive et anormale, la cellule est considérée défaillante et son transistor de cellule est alors maintenu ouvert ;
- ouverture du transistor de cellule si le courant dans la cellule dépasse un seuil maximal, ce seuil pouvant être différent pour un fonctionnement en phase de charge et décharge de la cellule, puis refermeture du transistor de cellule si la tension de l'étage se rapproche de celle de la cellule et bien sûr si le transistor de module est resté ouvert, ce qui signifie que cette fermeture n'engendrera pas un sur-courant qui nécessiterait sa réouverture immédiate ;
- naturellement, si la cellule est diagnostiquée comme défaillante, son transistor de cellule associé va rester ouvert jusqu'au remplacement éventuel de la cellule.

Finalement, le procédé de diagnostic de la batterie comprend plus généralement une étape de mesure d'au moins une grandeur caractéristique de l'état d'une cellule, comme une tension, un courant, une température, un nombre d'ampères par heure, voire toute autre grandeur significative, puis une étape de décision sur l'état de l'interrupteur de la cellule et/ou module associé en tenant compte de cette mesure. Comme cela a été explicité ci-dessus, cette décision peut amener une action consistant en l'ouverture totale de l'interrupteur de cellule ou la fermeture de l'interrupteur de module associé en cas de défaillance de la cellule, pour la déconnecter du reste de la batterie, ou de manière intermédiaire en une alternance d'ouverture et/ou fermeture selon un rapport optimal pour maintenir la cellule dans un état acceptable. Ainsi, selon un mode de réalisation, plusieurs seuils peuvent être prédéfinis pour une certaine grandeur mesurée, afin de déterminer des actions différentes selon le seuil atteint. Les actions engagées suite à la mesure d'une grandeur liée à une cellule donnée seront déterminées de sorte de minimiser les opérations d'ouverture et fermeture d'interrupteurs, pour éviter leur commutation trop fréquente consommatrice de puissance, éviter leur commutation intempestive, et maîtriser la synchronisation des commutations d'interrupteur entre les différentes cellules de la batterie.

La mise en oeuvre du procédé de gestion de la batterie décrit ci-dessus peut être mise en oeuvre par un calculateur local et/ou distant, comme cela a été explicité auparavant. Ce calculateur peut comprendre un ou plusieurs microprocesseurs.

En remarque, la mise en oeuvre du procédé localement, sans recours à un calculateur central, présente les avantages suivants :
- comme la ou les mesures et leur analyse sont faites localement et indépendamment des autres modules, la réaction peut être très rapide. Elle est plus rapide que la réalisation avec un calculateur central qui nécessiterait une communication par une liaison avec isolation galvanique, avec d'abord un codage série qui induirait un premier délai, puis le transfert par un bus dont le débit réduit impliquerait un second délai ;
- dans le cas où un module comprend son propre calculateur, un traitement poussé des mesures peut être fait, pour atteindre ainsi un diagnostic précis de chaque cellule, son état de santé et son état de charge.

Le procédé de gestion de batterie peut comprendre les étapes spécifiques suivantes dans le cas où la gestion d'une cellule est entièrement locale :
- dés que le taux de défaillance des cellules d'un même étage atteint un seuil on ordonne l'ouverture de toutes les cellules et l'activation d'un shunt, potentiellement placé dans chacune des cellules, pour mettre hors service l'étage ;
- lorsqu'une cellule est défaillante, par exemple lorsqu'il existe une fuite de courant, une surchauffe, lorsqu'elle est trop déchargée (ce qui est par exemple détecté par un passage en dessous d'un seuil de tension) ou trop chargée (ce qui est par exemple détecté par un dépassement d'un seuil de tension ou d'un nombre d'ampères heure acceptable), elle se déconnecte par l'ouverture de son transistor série ;

- lorsqu'une cellule chauffe, elle peut se connecter/déconnecter selon un rapport cyclique, de sorte de limiter sa montée en température. Cet objectif peut être atteint par un asservissement du rapport cyclique en fonction de la température mesurée au niveau de la cellule ;
- si une cellule déconnectée voit la tension de l'étage descendre suffisamment en dessous de 0V (quelques -100mV par exemple), alors elle ferme son transistor parallèle (pas de risque de court-circuiter les cellules placées en parallèle puisque la tension passe d'elle-même par zéro : typiquement quand toutes les cellules du même étage sont déconnectées et qu'un courant est consommé sur le pack batterie). Un petit délai peut être prévu entre la détection du passage de la tension en dessous du seuil et la commande du transistor parallèle pour que les cellules voisines aient aussi eu le temps de détecter le passage du seuil ;
- lors de l'application d'un courant de recharge sur le pack batterie, si une cellule déconnectée voit la tension extérieure monter au-dessus de la tension maximale qu'une cellule peut atteindre en charge, alors elle ferme son transistor parallèle (pas de risques de court-circuiter les cellules placées en parallèle puisque pour que la tension puisse aller au-delà de ce seuil, il faut que toutes les cellules de l'étage soient ouvertes) ;
- si une cellule voit un courant trop élevé, ce qui peut notamment arriver lorsqu'il n'y a plus assez de cellules en parallèle pour fournir le courant demandé ou accepter le courant apporté, alors le transistor série de la cellule est ouvert, ce qui élimine le risque de détérioration de la cellule. Si suite à cette déconnexion, les cellules actives restantes placées en parallèle voient un courant trop élevé, elles vont aussi se déconnecter d'elle-même ;
- quand toutes les cellules d'un étage sont déconnectées, et si un courant est consommé sur la batterie, alors la tension au niveau de l'étage va chuter et tendre à être négative : à ce moment là, chacune des cellules va activer son transistor parallèle qui prendra le relais pour la circulation du courant dans la batterie ;
- quand toutes les cellules d'un étage sont déconnectées, et si un courant de recharge est apporté sur la batterie, alors la tension de l'étage va monter et dépasser la tension maximale de charge d'une cellule : dans ce cas, les cellules vont déclencher la fermeture de leur transistor parallèle ;
- pour être certain que toutes les cellules ont bien détecté le dépassement de seuil de tension, on peut volontairement mettre un petit retard sur la commande de l'interrupteur parallèle au niveau de chaque cellule pour bien laisser progresser la tension avant de la ramener à zéro par cette fermeture ;
- si une cellule s'est déconnectée suite à une décharge trop importante (passage au-dessous d'un seuil de tension), elle peut décider de se réactiver dès que la tension de l'étage tend à être supérieure à celle de la cellule (cas où l'interrupteur parallèle n'a pas été activé). Si l'interrupteur parallèle avait été activé, alors la décision de le désactiver peut se faire à partir d'une détection d'un courant dans le shunt, qui est dans le sens d'un courant de recharge. L'ouverture de l'interrupteur parallèle doit alors permettre à la tension de remonter à moins que la/les cellules placées en parallèle gardent leur interrupteur parallèle fermé pour une autre raison. Si la tension n'arrive pas à remonter au bout d'un certain temps alors l'interrupteur parallèle est réactivé pour éviter que les interrupteurs parallèles des cellules placées en parallèle supportent tout le courant trop longtemps. Si par contre la tension remonte jusqu'à la tension de la cellule ou au-delà, alors l'interrupteur de cellule en série est activé et la cellule se recharge ;
- si une cellule s'est déconnectée suite à une charge trop importante (passage en dessus d'un seuil de tension), elle peut décider de se réactiver dès que la tension de l'étage tend à être inférieure à celui de la cellule (cas où l'interrupteur parallèle n'a pas été activé). Si l'interrupteur parallèle avait été activé alors la décision de le désactiver peut se faire à partir d'une détection d'un courant dans le circuit de shunt parallèle qui est dans le sens d'un courant de décharge. L'ouverture de l'interrupteur parallèle est alors suivie d'une fermeture de l'interrupteur de cellule, un petit délai entre l'ouverture de l'interrupteur parallèle et l'activation l'interrupteur de cellule série peut être prévu afin de laisser le temps à toutes les cellules de détecter le courant de décharge ;
- si une cellule s'est déconnectée suite à un courant trop important et que l'interrupteur parallèle n'a pas été activé, cela signifie que les cellules placées en parallèle ont pu supporter le courant et maintenir la tension, alors la cellule peut tenter de se reconnecter dès que la tension de l'étage est suffisamment proche de la tension de la cellule ;
- Si une cellule s'est déconnectée suite à un courant trop important et que l'interrupteur parallèle a été activé, il est probable que les cellules voisines étaient soit trop chargées, soit trop déchargées et ne participaient plus à l'encaissement du courant. Dans ce cas, dès que le courant qui circule dans l'interrupteur parallèle devient de signe opposé au courant qui a causé la désactivation de la cellule (et supposé des cellules voisines), alors il est ouvert. Si on est en présence d'un courant de charge alors on active l'interrupteur de cellule dès que la tension se rapproche de la tension de la cellule, et si la tension n'arrive pas à remonter au bout d'un certain temps on réactive l'interrupteur parallèle (on suppose qu'une cellule placée en parallèle n'a pas ré-ouvert son interrupteur parallèle et on ne peut pas lui laisser un courant important trop longtemps). Si on est en présence d'un courant de décharge et que la tension de l'étage commence à chuter alors l'interrupteur série est fermé (c'est-à-dire dès que l'on est certain que l'interrupteur parallèle de toutes les cellules placées en parallèle est ouvert, sinon la tension n'aurait pas pu descendre), un petit délai entre l'ouverture de l'interrupteur parallèle (puis la détection de la chute de tension) et l'activation de l'interrupteur de cellule peut être prévu afin de laisser le temps à toutes les cellules de détecter le courant de décharge puis la chute de tension ;
- si une cellule s'est déconnectée suite à une défaillance irrémédiable de celle-ci, alors l'interrupteur de cellule n'est plus jamais réactivé. En revanche, l'interrupteur parallèle qui doit se fermer dans certains cas doit pouvoir aussi s'ouvrir. Si l'interrupteur parallèle a été activé suite à la détection du passage de la tension de l'étage par une valeur inférieure à un seuil (quelques -100 mV) alors celui-ci peut être ré-ouvert lorsque le courant le traversant est un courant de recharge. S'il a été activé suite à la détection du passage de la tension de l'étage par une valeur supérieure à un seuil (tension maximale qu'une cellule peut atteindre en charge) alors il peut être ré-ouvert lorsque le courant le traversant est un courant de décharge. En fait on suppose que ce qui a causé la fermeture généralisée des interrupteurs parallèles provient du fait que les cellules placées en parallèle ont atteint leur pleine charge ou décharge ou sur-courant et que si un courant contraire apparait dans la batterie, alors les cellules placées en parallèle vont se réactiver. Si jamais les cellules voisines placées en parallèle ne se reconnectent pas, alors la tension de l'étage va repartir, soit au-delà de la tension maximale normale soit en dessous de la tension minimale normale et déclencher à nouveau les interrupteurs parallèles des cellules de l'étage ;
- si une cellule s'est déconnectée suite à une défaillance remédiable, alors la cellule peut être reconnectée lorsque la défaillance a disparu (par exemple lorsque sa température est suffisamment redescendue ou si la cellule a été remplacée). Si l'interrupteur parallèle avait été activé, alors on suit le même processus qu'au point précédent.

Les principes précédents peuvent être mis en oeuvre de manière similaire à partir d'une gestion centralisée.

Toutes ces opérations du procédé de gestion d'une batterie ont été effectuées sur la base d'une analyse par un ou plusieurs microcontrôleur(s). En variante, comme les actions à effectuer sont simples, il est possible d'utiliser tout ou partie d'un circuit électronique asynchrone, sans nécessité d'une horloge haute fréquence pour limiter la consommation énergétique de la solution. Dans une telle variante, la détection d'un seuil se ferait directement sur une mesure analogique via un comparateur et l'action induite suite à un passage de seuil pourrait être exécutée de manière asynchrone via des circuits logiques, utilisant par exemple des bascules, registres.

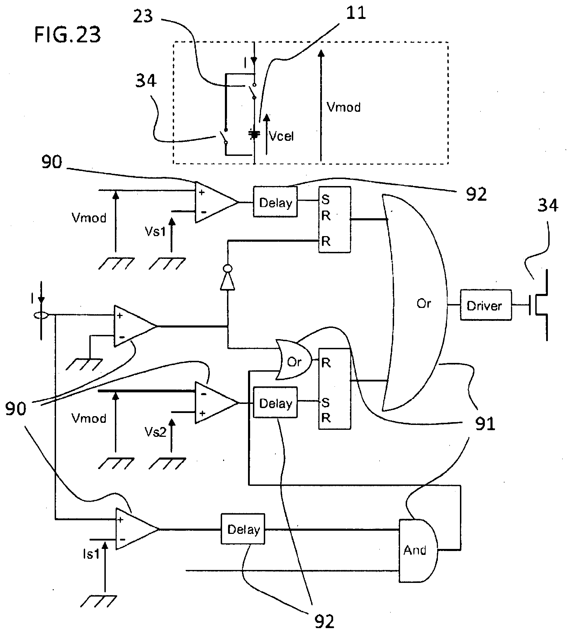

La figure 23 illustre une mise en oeuvre possible selon une telle approche permettant le pilotage d'un transistor parallèle 34. Dans cette implémentation, des capteurs de mesure, non représentés, de la tension d'un module Vmod, de la tension aux bornes d'une cellule Vcel, et du courant I traversant une cellule sont utilisés. Ces valeurs mesurées sont comparées à trois valeurs seuil, deux valeurs de seuils haute Vs1 et basse Vs2 pour la tension du module, et une valeur de seuil Is1 pour le courant. Quatre amplificateurs opérationnel 90 (ou comparateurs) permettent de comparer ces valeurs mesurées aux seuils explicités, afin de déterminer, à l'aide de plusieurs opérateurs logiques 91 et de cellules à retard 92, une décision finale d'ouverture ou non du transistor de module 34. Les cellules à retard « Delay » 92 de ce circuit peuvent, outre leur fonction de retarder la réaction à un évènement donné, s'assurer que le résultat de la comparaison est stable sur une certaine durée, et ne prendre en compte une transition que lorsque la stabilité du résultat de la comparaison a été répétée sur une durée prédéfinie, afin d'effacer les mesures brouillées, par exemple suite à des bruits causés par la commutation de cellules ou de modules voisins.

Un avantage de ce type de pilotage d'un transistor de module provient du fait qu'il n'y a pas besoin de numériser les signaux mesurés et que la réaction peut être très rapide, sans pour autant nécessiter un échantillonnage très haute-fréquence des signaux. Par ailleurs toutes les opérations peuvent se faire en parallèle, ce qui est très intéressant si on veut que toutes les cellules puissent réagir de manière synchrone, présentent une ouverture ou une fermeture d'un transistor sur la base de la tension de l'étage commune à toutes les cellules de l'étage, et non sur un front d'horloge qui ne serait pas commun à chaque cellule de l'étage car la même horloge ne pourrait être partagée sans sortie supplémentaire sur les cellules. Une telle synchronisation peut ainsi permettre de réduire, voire supprimer, les risques de recouvrement entre la fermeture des transistors de cellule 23 et les transistors parallèles 34.

D'autre part, le procédé de gestion de la batterie met aussi en oeuvre une étape supplémentaire de déconnexion de toutes les cellules possibles lors d'un arrêt prolongé d'utilisation de la batterie. Cette étape apporte une sécurité importante notamment dans les situations particulières comme suite à un accident ou à un incendie. Lorsqu'un nombre important de cellules sont déconnectées, et de préférence toutes les cellules, le risque d'obtenir un court-circuit important entre les cellules, même en cas d'incident important, reste très faible. Par ailleurs, l'isolation des cellules à l'arrêt évite que les cellules se déchargent au travers de certaines cellules au plus gros courant de fuite ou présentant des défauts.

Selon un mode de réalisation avantageux, le procédé de gestion de l'invention comprend une commande d'interrupteurs de cellules et/ou de modules afin d'obtenir une tension de sortie de valeur prédéfinie, et/ou une tension de sortie alternative selon une consigne prédéfinie. De manière similaire, le procédé de gestion de l'invention comprend une commande d'interrupteurs de cellules et/ou de modules dans une phase de charge de sorte d'obtenir une tension et/ou un courant de charge prédéfinis dans chaque cellule à charger.

Ainsi, le procédé de gestion de batterie permet aussi une adaptation de la tension de sortie selon l'utilisation souhaitée, par exemple au besoin d'une charge électrique. Cette adaptation comprend par exemple le choix restreint d'un certain nombre de modules à utiliser en série, les autres modules restant inutilisés, quand la tension totale nécessaire est inférieure à la tension maximale que peut délivrer la batterie. Dans ce choix, il est possible de laisser de côté les modules les plus déchargés pour privilégier les modules les plus chargés et/ou de laisser inutilisés les modules présentant des défaillances, tel qu'explicité précédemment. En complément, le procédé peut aussi intervenir au niveau des cellules elles-mêmes, et obtenir la tension souhaitée en déconnectant certaines cellules choisies de certains modules choisis, en privilégiant par exemple l'utilisation des cellules les plus chargées.

L'adaptation de la tension de sortie de la batterie de l'invention peut même prendre des formes complexes. En effet, elle est adaptée pour fournir une tension de sortie sinusoïdale pour un moteur synchrone ou asynchrone d'un véhicule automobile. La figure 24 représente un exemple de régulation d'une batterie pour obtenir une telle sortie de tension, mise en oeuvre par exemple au sein du calculateur central 22 du mode de réalisation de la figure 11. Cette régulation repose sur un bloc 80 de calcul d'une valeur de consigne des paramètres électriques souhaités en sortie de la batterie, comprenant la tension de consigne V_{cons} et le courant de consigne I_{cons}, en fonction de la prise en compte d'une éventuelle demande d'un conducteur du véhicule automobile dans un bloc 81, transmise par l'intermédiaire de la pédale d'accélération notamment, et en fonction des valeurs de fonctionnement du moteur du véhicule automobile, comme la vitesse Vit et le couple Cou, transmises par un bloc 82. En remarque, la consigne peut consister en une combinaison de ces valeurs de courant et de tension, comme par exemple leur produit I_{cons} x V_{cons}. Le bloc 80 de détermination d'au moins une valeur de consigne peut reposer sur une commande vectorielle, prenant en compte le réglage de l'amplitude, de la fréquence et éventuellement de la phase du paramètre courant/tension selon le type de moteur à alimenter. Naturellement, ce principe fonctionne aussi avec des situations plus simples, comme un besoin d'une tension continue. Ensuite, le bloc de régulation comprend un bloc 83 de correction, à partir de la différence entre les valeurs de consigne I_{cons}, V_{cons} et les valeurs réelles correspondantes I_{réel}, V_{réel}, qui transmet un besoin à un bloc 84 qui détermine le nombre de modules nécessaires dans la batterie et éventuellement les cellules particulières de ces modules à utiliser. Selon une réalisation préférée, le choix des cellules à utiliser dans les modules se fait au niveau des modules sur la base des paramètres mesurés localement. Pour cela, ce bloc 84 reçoit aussi les informations de mesure de grandeurs effectuées au niveau des modules et des cellules de la batterie, et notamment l'état de charge SoC et l'état de santé SoH des cellules ou modules. Enfin, un dernier bloc 85 met en oeuvre le choix déterminé par le bloc 84, et envoie notamment les commandes nécessaires aux différents interrupteurs de la batterie. Il en résulte en sortie les valeurs réelles du courant I_{réel} et de la tension V_{réel}, qui sont reçues par le moteur du véhicule automobile, qui permet d'atteindre les valeurs de fonctionnement, comme une vitesse Vit et un couple Cou transmises par le bloc 82. Enfin, un limiteur de fréquence de variation et/ou un filtrage passe-bas peut agir sur le bloc 83 de correction, ou sur la boucle de retour, pour obtenir une valeur moyenne convenable, en limitant les fréquences de commutation des cellules, comme par exemple selon une fréquence de 200 kHz pour une tension de sortie de fréquence 500 Hz.

Cette fonctionnalité de régulation de la tension de sortie de la batterie lui permet de se comporter comme une structure de conversion de type batteries commutées, qui évite l'utilisation d'un convertisseur DC/DC en sortie du pack batterie, pour ajuster la tension aux besoins de l'application, et permet l'utilisation de la batterie selon le schéma simplifié de la figure 4, et non plus comme celui de la figure 3 de l'état de la technique.

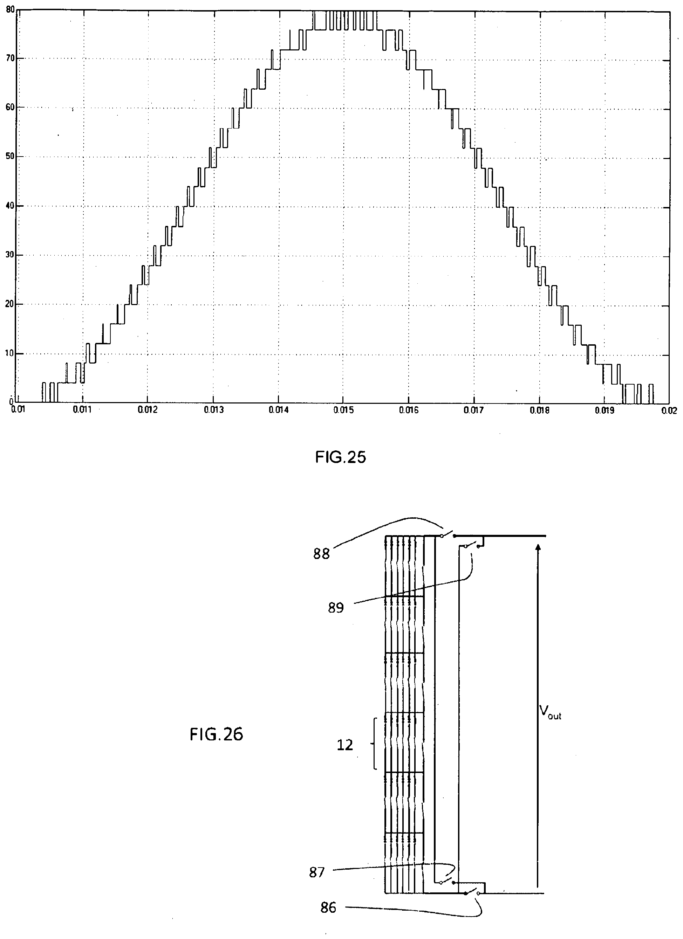

La figure 25 représente un exemple d'onde de tension qui peut être fournie par la batterie via un pilotage tel qu'explicité ci-dessus, pour une consigne en tension de type sinusoïde à 100 Hz, d'amplitude crête de 40 V et centrée sur 40 V, et pour une batterie constitué de 20 modules de 4 volts chacun et dont la fréquence de commutation est limitée à 10 kHz (soit 100 commutations par période).

Pour pouvoir générer une tension monophasée centrée sur 0, il faut pouvoir utiliser soit deux colonnes et une tension différentielle, soit rajouter un pont en H, tel qu'illustré sur la figure 26, qui permet d'inverser la tension aux bornes de la batterie sur la base de quatre interrupteurs 86, 87, 88, 89, deux 86, 87 au niveau d'une première borne et deux 88, 89 au niveau d'une seconde borne. Lorsque les deux interrupteurs 86, 88 sont fermés et les deux autres ouverts, la tension de sortie Vₒᵤₜ est positive. Au contraire, lorsque les deux interrupteurs 87, 89 sont fermés et les deux autres ouverts, la tension de sortie Vₒᵤₜ est négative.

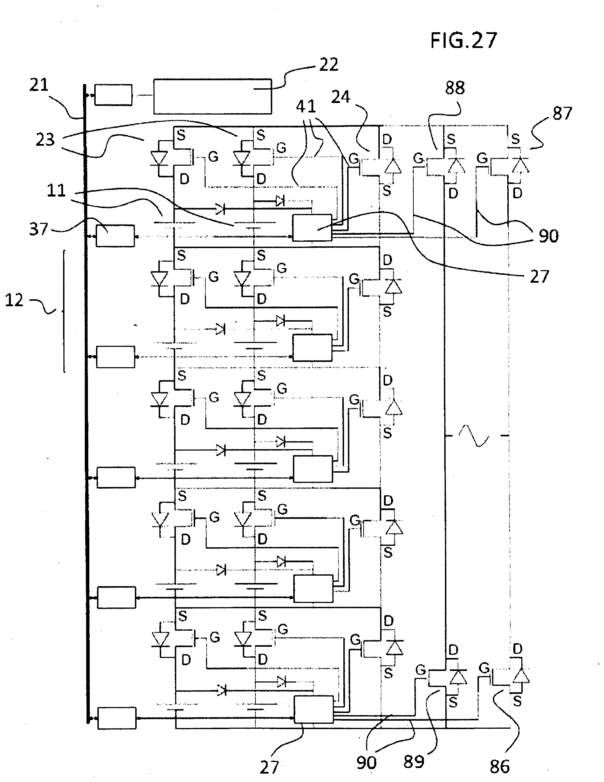

La figure 27 illustre une mise en oeuvre plus détaillée du principe décrit à la figure 26, sur la base d'une structure de batterie telle que présentée à la figure 11, comprenant à titre d'exemple cinq modules de deux cellules. Pour chaque cellule 11, un transistor de cellule 23 est prévu, en série avec la cellule, et un transistor de module 24, en parallèle, est prévu pour chaque module 12, comme explicité précédemment. D'autre part, au moins un capteur de mesure d'une grandeur caractéristique de cellule est présent au niveau du module, non représenté pour une raison de simplification. Un circuit de commande 27 local, au niveau du module 12, pilote les transistors 23, 24 par des signaux de commande 41, comme cela a été explicité précédemment, sous les ordres d'un calculateur central 22 par le bus de communication 21 et par l'intermédiaire d'une interface 37 formant une isolation galvanique. La batterie comprend de plus quatre interrupteurs 86, 87, 88, 89 tels que présentés ci-dessus, qui sont des transistors selon ce mode de réalisation, pilotés respectivement par les circuits de commande 27 des modules extrêmes supérieur et inférieur de la batterie, par des liaisons de commande 90.

En remarque, le procédé de gestion de la batterie met en oeuvre une commutation optimale des interrupteurs 86, 87, 88, 89. Par exemple, si la tension de sortie doit être une tension sinusoïdale, la commutation des transistors est effectuée lorsque la tension passe par 0, pour limiter les pertes par commutation. Si une onde à 50 Hz est souhaitée en sortie de la batterie, il est nécessaire de procéder à 50 fermetures/ouvertures par seconde des transistors du pont en H.

De plus, le procédé de gestion de la batterie met aussi avantageusement en oeuvre une gestion intelligente des transistors du pont en H similaire aux étapes envisagées pour la gestion des transistors série ou de module. Par exemple, il est aussi possible de leur associer une mesure de température ou de courant, et de prendre une décision d'ouverture d'un transistor si la grandeur mesurée dépasse un certain seuil, par exemple en cas de température trop élevée. Cette grandeur mesurée peut naturellement être transmise à un circuit de traitement local et/ou distant afin de mettre en oeuvre cette gestion intelligente.

Les deux modules extrêmes supérieur et inférieur de la batterie intègrent des composants électroniques plus nombreux que les autres modules. Tous ces composants sont avantageusement alimentés électriquement par la tension disponible au niveau du module. Dans ce cas, les modules extrêmes sont plus sollicités que les autres. Pour répondre à leur besoin supérieur, les solutions suivantes sont possibles :
- la gestion de la batterie en mode de décharge sollicite moins les cellules des modules extrêmes pour leur permettre de conserver une charge suffisante pour la commutation des interrupteurs du pont en H jusqu'à la décharge complète de la batterie ; et/ou
- les modules extrêmes comprennent plus de cellules que les autres et/ou des cellules de plus grande capacité de stockage ; et/ou
- l'alimentation des composants des modules extrêmes est aussi réalisée à partir des autres modules voisins, ce qui est envisageable puisque leur potentiel reste assez proche.

D'autre part, le principe de fonctionnement précédent s'applique aussi de manière similaire dans une phase de recharge de la batterie, qui permet à la batterie de se recharger directement par sa connexion sur le réseau électrique standard. Plus précisément, lors d'une recharge de la batterie, cette dernière est reliée à une source de tension, et comme les cellules et les transistors représentent une résistance interne, la circulation d'un courant dans la batterie engendre une chute de tension résistive, qui correspond à la différence entre la tension imposée par la source et celle à vide obtenue par les différents modules en série de la batterie. Le fait de pouvoir réguler cette différence permet de gérer le courant de charge de la batterie. Ainsi, la batterie met aussi en oeuvre un procédé de charge, qui comprend une étape d'ouverture et/ou fermeture d'interrupteurs pour obtenir un courant de charge souhaité au niveau de cellules choisies. Une régulation similaire à celle explicitée précédemment peut être mise en oeuvre, permettant de déterminer le nombre de modules à placer en série, et lesquelles, pour obtenir une consigne de courant de recharge au sein de la batterie. De même qu'explicité précédemment, ce procédé comprend une étape de choix des cellules à recharger, tenant compte notamment de leur état de charge et de leur état de santé. En remarque, une inductance peut être placée entre la source et la batterie pour lisser le courant qui circule entre les deux. Cette remarque s'applique de manière similaire entre la batterie et une charge. Ainsi, la batterie permet une recharge sur le réseau électrique de manière simplifiée, sans nécessiter de convertisseur électrique de type tension/courant.

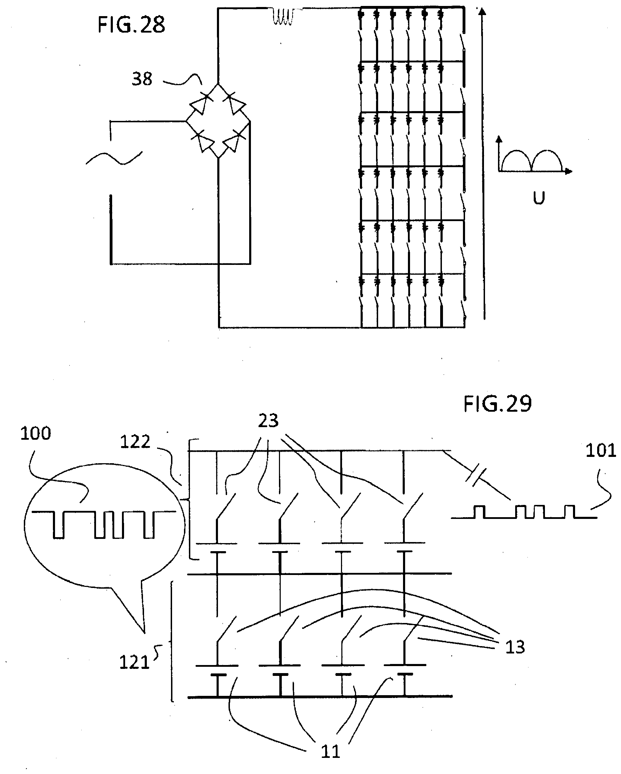

En remarque, si la batterie ne permet pas de générer ou absorber une tension négative, elle peut néanmoins accepter une recharge sur le réseau sans nécessiter de convertisseur électrique/électrique de type tension/courant, en utilisant un pont redresseur 38, intercalé entre le secteur et la batterie, pour obtenir une tension positive U au niveau de la batterie, comme représenté sur la figure 28.

Finalement, la solution décrite précédemment présente de nombreux avantages parmi lesquels :
- elle repose sur une multitude d'interrupteurs élémentaires, c'est-à-dire une multitude de transistors selon le mode de réalisation préféré, éloignés les uns des autres, ce qui permet facilement d'évacuer l'énergie dissipée par leur fonctionnement, puisque cette énergie dissipée se présente sous la forme d'une multitude de petites quantités d'énergie éparpillées dans la structure de la batterie ;
- elle permet d'effectuer un équilibrage en temps réel des cellules de la batterie via un aiguillage dynamique du courant ;
- elle permet d'effectuer un équilibrage en temps réel des modules de la batterie via une optimisation des taux d'utilisation de chacun d'eux ;
- elle permet de déconnecter les cellules défaillantes ;
- elle permet de limiter le courant dans les cellules dont la température devient trop élevée via une déconnexion de la cellule, totalement ou selon un rapport cyclique permettant d'atteindre un courant moyen acceptable par la cellule ;
- elle permet d'ajuster la tension de sortie de la batterie de manière douce (commutation basse fréquence < 1000 Hz et avec des paliers en tension peu élevés, par exemple 4V), sans nécessiter de hachage haute fréquence de la pleine tension de la batterie. Elle permet d'ajuster une tension continue souhaitée pour le pilotage de moteurs à courant continu ou pour la recharge sur une source continue. Elle permet aussi de générer une tension alternative pour le pilotage de moteurs synchrones ou asynchrones, etc., ou pour une recharge directe sur le réseau électrique ;
- elle permet d'isoler individuellement une cellule d'un module, en permettant notamment de mesurer sa tension à vide même si la batterie est en fonctionnement ;
- elle permet d'isoler toutes les cellules, par exemple à l'arrêt du véhicule ou suite à la détection d'une défaillance majeure, permettant d'écarter tous risques électriques pour l'utilisateur ou les personnes qui seront amenées à intervenir, par exemple les pompiers en cas d'incendie.

En mesurant à la fois la tension des cellules et la tension d'un module de la batterie, il est possible d'en déduire les tensions aux bornes des transistors de puissance. A partir de ces tensions et du courant traversant les cellules ou transistors de modules, il est possible, dans certaines configurations, de détecter si un transistor est défaillant. Ainsi, la batterie met aussi en oeuvre un procédé de diagnostic du fonctionnement de tout ou partie des transistors qui remplissent les fonctions essentielles d'interrupteurs, qui peut comprendre tout ou partie des étapes suivantes :
- si à l'ouverture des transistors de cellules, la tension de l'étage reste sensiblement égale à celle des cellules alors qu'un courant circule, c'est qu'au moins un des transistors de cellule ne s'ouvre plus. Pour connaître lequel, il suffit de regarder par quelle cellule circule le courant. Ainsi, le procédé de diagnostic comprend une étape de commande d'ouverture de tous les transistors de cellules d'un module, la mesure de la tension du module, et en cas de valeur proche de la tension d'une cellule, mesure du courant traversant chaque cellule et classification de transistors de cellule comme « défaillants » si un courant y circule. Dans la suite, le/les transistors de module associés à un module dont un au moins un des transistors de cellules est défaillant (reste fermé) n'est/ne sont plus activés pour ne pas créer de courts-circuits. Le procédé peut comprendre une étape complémentaire de transmission des données relatives à l'identité des interrupteurs défaillants et/ou du courant maximal que peut délivrer chaque module à une unité locale et/ou centrale. Un utilisateur doit pouvoir savoir quels transistors sont à changer ;
- si lors d'une commande d'ouverture des transistors parallèles, la tension d'au moins un étage reste sensiblement nulle alors qu'un courant circule, alors au moins un transistor parallèle ne s'est pas ouvert et est défaillant. La mesure du courant au travers de chaque module permet de déterminer le ou les transistors parallèles défaillants. Le procédé de diagnostic comprend donc une étape de commande d'ouverture des transistors parallèles, de mesure de la tension et du courant, d'identification des transistors de module défaillants si la tension est nulle alors qu'un courant circule. Dans la suite, les transistors de cellule associés à un module dont le transistor parallèles est défaillant (reste fermé) ne sont plus activés pour ne pas créer de courts-circuits. Le module concerné n'est plus utilisé jusqu'au remplacement de son transistor de module ou des interrupteurs parallèles ;
- si lors de la commande de fermeture d'un transistor de cellule, il apparait une chute de tension sur un transistor alors que le courant dans la cellule associée est nul, alors le transistor de cellule est défaillant et ne se ferme plus. Une telle situation limite le courant que peut fournir un module. Le calculateur central de la batterie est informé en lui indiquant le courant maximal que le module peut encore supporter. De plus, l'utilisateur est averti du transistor à changer ;
- de manière similaire, si la commande de fermeture d'un transistor de module entraîne une chute de tension sur le transistor alors que le courant y est nul, alors cela signifie que le transistor est défaillant et ne se ferme plus. Cela limite le courant que peut faire passer le module lorsque les cellules sont déconnectées. Le calculateur central est averti en lui indiquant le courant maximal que le module peut encore supporter. De plus, l'utilisateur est averti du transistor à changer ;
- lorsqu'un courant dans une branche est de signe opposé au courant circulant dans les autres branches, au-delà d'un certain seuil, alors il est diagnostiqué un courant de fuite du transistor normalement ouvert de cette branche. Le calculateur central est averti en lui indiquant le courant maximal que le module peut encore supporter. De plus, l'utilisateur est averti du transistor à changer.

Naturellement, l'invention ne se limite pas aux exemples précédents. Notamment, plusieurs capteurs de mesure par cellule ont été implémentés mais en variante d'autres nombres de capteurs de mesure peuvent être choisis. On restera dans le cadre de l'invention dès lors qu'au moins un capteur de mesure sera implémenté au niveau d'une cellule. De plus, il est possible d'utiliser d'autres types de capteurs de mesure que ceux décrits, pour mesurer d'autres grandeurs caractéristiques de l'état d'une cellule que la tension, le courant ou la température. Chaque cellule peut présenter toute forme et être basée sur n'importe quelle technologie de stockage d'énergie, sans limitation au Lithium-Ion présenté plus en détail dans un mode de réalisation de l'invention. De plus, chaque cellule de stockage d'énergie peut être associée à une source d'énergie locale, comme une cellule photovoltaïque ou tout capteur solaire, un capteur thermique, un convertisseur mécanique/électrique, etc.

De plus, les modes de réalisation précédents ont été décrits en implémentant un interrupteur de cellule pour chaque cellule de la batterie. Toutefois, il serait possible d'obtenir une amélioration d'une batterie en ne gérant qu'une partie de ses cellules selon le concept de l'invention, et donc en ne disposant des interrupteurs de cellule que sur une partie des cellules de la batterie, donc au moins un interrupteur, avantageusement sur au moins deux cellules d'un même module pour permettre une certaine souplesse dans cette gestion. Certains modules pourraient ne pas implémenter l'approche décrite précédemment et il est possible d'imaginer une batterie associant des modules conventionnels et des modules améliorés selon l'invention. D'autre part, un interrupteur de module a été décrit pour chaque module de la batterie, ou en variante des interrupteurs parallèles associés à chaque cellule. De tels interrupteurs restent optionnels et pourraient être supprimés, dans une version simplifiée de l'invention. De plus, l'invention couvre toutes les réalisations intermédiaires intégrant un ou plusieurs interrupteur(s) de module et/ou interrupteurs parallèles, pour une partie seulement des modules.

Enfin, les exemples représentés comprennent peu de cellules pour une raison de clarté des figures. Toutefois, les réalisations envisagées sont adaptées pour la mise en oeuvre de batteries aptes à fournir une tension de sortie importante, pouvant atteindre plusieurs centaines de volts, par exemple supérieure ou égale à 250 volts. Elles sont donc adaptées pour des batteries comprenant un nombre important de modules, notamment supérieur ou égal à 8.

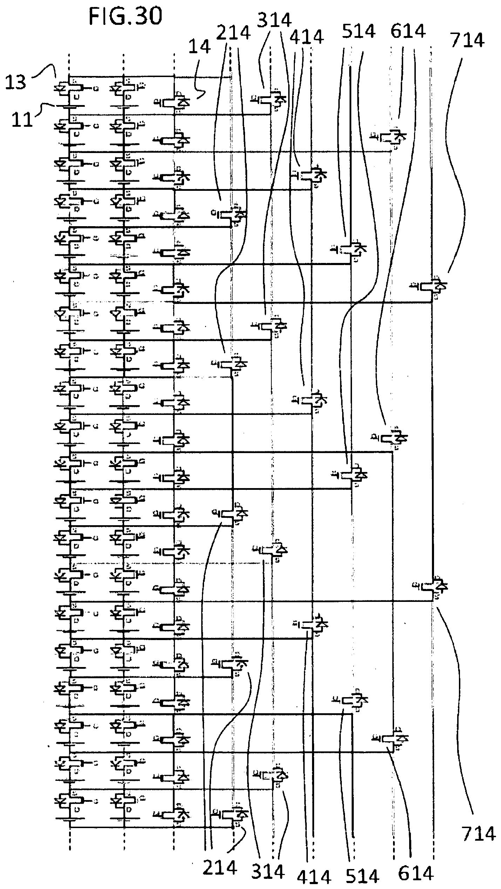

Les figures 30 à 32 illustrent à cet effet des variantes de réalisation de mise en oeuvre d'une fonction de shunt de plusieurs modules d'une batterie, qui reposent sur des interrupteurs complémentaires disposés en parallèle de plusieurs modules permettant de rajouter un chemin de passage du courant lorsque plusieurs modules sont désactivés, limitant ainsi les pertes. En remarque, même si ces solutions sont envisagées avec les architectures de batterie telles que décrites précédemment, elles pourraient aussi être implémentées sur toute architecture d'une batterie comprenant plusieurs étages en série, ces étages se présentant sous toute autre forme. Ces solutions permettent en effet de shunter plusieurs étages en même temps et de réduire la résistance globale de la batterie lorsqu'un certain nombre d'étages ne sont pas nécessaires.

Ainsi, la figure 30 ajoute une première série d'interrupteurs 214 permettant chacun de shunter quatre modules consécutifs, une seconde série d'interrupteurs 314 permettant chacun de shunter six modules consécutifs, une troisième série d'interrupteurs 414 permettant chacun de shunter aussi six modules consécutifs mais décalés par rapport à la seconde série, une quatrième série d'interrupteurs 514 permettant chacun de shunter aussi six modules consécutifs mais décalés par rapport aux deux séries précédentes, une cinquième série d'interrupteurs 614 permettant chacun de shunter huit modules consécutifs et une sixième série d'interrupteurs 714 permettant chacun de shunter aussi huit modules consécutifs mais décalés par rapport à la cinquième série.

Tous les interrupteurs de ces différentes séries sont disposés entre les bornes inférieures et supérieures de modules différents, en parallèle les uns des autres. Naturellement, leur gestion est cohérente pour éviter de créer des situations de court-circuit, comme cela a été explicité sur les exemples précédents.

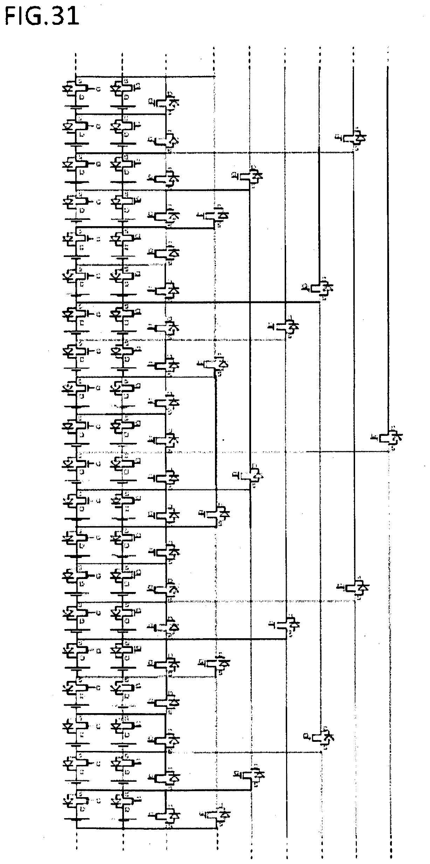

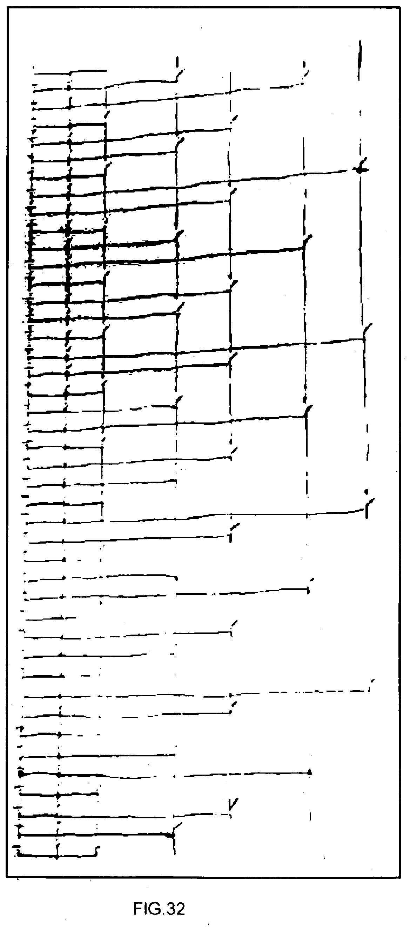

Les deux figures 31 et 32 illustrent deux autres variantes de réalisation selon la même approche.

L'avantage de ces différentes réalisation est d'ajouter des chemins de passages du courant beaucoup plus directes lors de la désactivation de plusieurs modules grâce à des interrupteurs qui shuntent plusieurs étages à la fois, ce qui génère alors beaucoup moins de pertes. Ainsi, à chaque instant, selon le nombre de modules nécessaires, une configuration sensiblement optimale est mise en oeuvre pour minimiser la résistance totale de la batterie.

Les différents interrupteurs mentionnés, de cellule et/ou module et/ou parallèles, ont été implémentés à l'aide de transistors. Des transistors NMOS ou PMOS ont été principalement représentés, mais il est toutefois possible d'utiliser des transistors bipolaires NPN et PNP, qui présentent l'avantage de pouvoir être commandés avec une tension assez faible, des transistors FET, JFET, IGBT, GaN, des relais, etc. En variante, tout autre type d'interrupteurs que ceux décrits pourrait être implémenté, comme des thyristors si le courant est naturellement amené à s'inverser au moment où on souhaite l'ouvrir.

La batterie de l'invention peut être gérée par une unité intelligente, un calculateur ou circuit de traitement local et/ou distant et accessible par un dispositif de communication local, ce calculateur pouvant comprendre tout élément logiciel (software) et/ou matériel (hardware) pour gérer la batterie, notamment déterminer la configuration de ses interrupteurs. Pour cela, la batterie peut intégrer tout moyen d'actionnement, tout circuit de commande, de ses interrupteurs.

De nombreuses autres variantes de réalisation de l'invention peuvent être facilement imaginées par une simple combinaison des modes de réalisation et/ou leurs variantes décrits précédemment.

En remarque, la communication au sein de la batterie et/ou vers une unité extérieure peut se faire selon un principe de courant porteur, dès lors que le courant demandé par une charge ou fourni par une source n'est pas trop important pour autoriser la déconnection de certaines cellules. En effet, ce principe repose sur une alternance volontaire de connexions et déconnexions de certaines cellules de la batterie, afin de créer une modulation de courant induit et une modulation de puissance au niveau d'un module, qui se propage à l'ensemble de la batterie et au-delà. Cette modulation de puissance est donc visible par les autres modules de la batterie et par une charge extérieure, ce qui permet de l'utiliser pour transmettre des informations selon n'importe quel protocole de communication, existant et normalisé ou non. Il peut par exemple être défini un circuit maître qui interroge tour à tour toutes les cellules, par leur adresse, chaque cellule répondant ensuite dans un créneau temporel dédié. Le maître peut par exemple demander une information comme une mesure de tension, courant et/ou température à une certaine cellule, puis cette dernière peut envoyer l'information demandée avec éventuellement un code permettant d'informer d'une éventuelle défaillance ou non. Ce principe permet ainsi à différentes cellules de la batterie de communiquer simplement entre elles, ou de communiquer vers un calculateur central ou un circuit de traitement de la batterie ou vers une unité extérieure. En remarque, la modulation de courant peut se faire sans déconnecter complètement une cellule, mais simplement en modulant la résistance à l'état passant du transistor de cellule, c'est-à-dire en modulant la tension de grille du transistor autour d'un point de polarisation. Cela évite que la cellule soit complètement déconnectée et surcharge trop les autres cellules de l'étage qui prennent le relais sur la circulation du courant. Cette modulation de résistance à l'état passant peut aussi se faire sur le transistor de module lorsque celui-ci est activé. Cela permet alors de communiquer même si l'étage est désactivé par l'ouverture des transistors de cellule. La communication par courant porteur permet de moduler un courant important au niveau de l'étage sans pour autant engendrer de pertes électriques importantes. En effet, cette modulation de courant se fait en modulant une consommation de courant simplement stocké et déstocké puisqu'appartenant à une batterie, ce qui fait qu'il n'existe pas les pertes qui existent dans un élément dissipatif comme une résistance ou un transistor en mode linéaire utilisé classiquement pour un système de courant porteur.

La figure 29 illustre ainsi schématiquement la mise en oeuvre de principe, sur laquelle un premier module 121 d'une batterie génère un signal de communication 100 par l'actionnement d'au moins un interrupteur de cellule 13, alors qu'un signal correspondant 101 est ensuite reçu au niveau d'un second module 122 de la batterie.

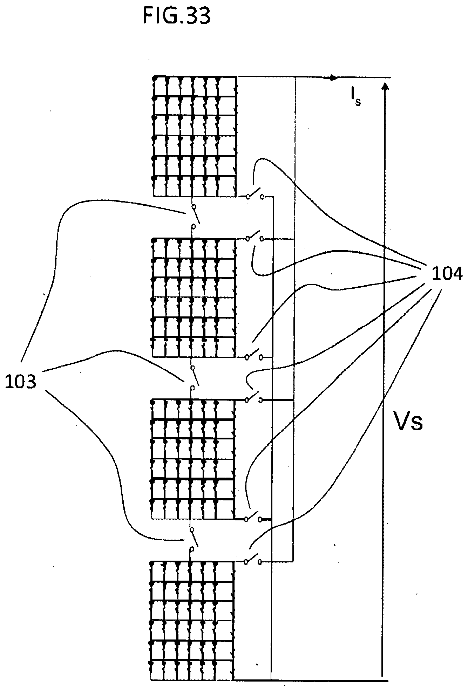

La figure 33 illustre une variante du mode de réalisation de l'invention, dans laquelle la batterie est séparée en quatre parties ou sous-ensembles de stockage équivalents comprenant plusieurs modules de plusieurs cellules. La structure de ces modules intègre le concept tel que décrit précédemment, et chaque cellule comprend ici un interrupteur de cellule et chaque module un interrupteur de module. Ces différentes parties peuvent être soit disposées en série, en fermant des premiers interrupteurs 103 les reliant et en ouvrant des seconds interrupteurs 104, ce qui représente alors une géométrie telle que décrite précédemment en référence avec la figure 4, soit en parallèle en ouvrant au contraire les premiers interrupteurs 103 et en fermant les seconds interrupteurs 104. En variante, toute combinaison intermédiaire est possible, comme le regroupement des parties deux par deux en série, puis la disposition de ces groupements de deux parties en parallèle. Cette variante permet d'avoir le choix entre une tension de sortie Vs importante ou une tension plus faible mais un courant de sortie Is supérieur à celui qu'on obtiendrait avec toutes les parties en série. Ainsi, cette structure devient exploitable dès que la tension de sortie désirée est inférieure à celle que peut fournir la moitié des modules. Si cette tension est inférieure à un quart de celle que peut fournir la totalité des modules en série, alors les quatre parties représentées peuvent être utilisées en parallèle.

En variante, la même approche pourrait être implémentée avec tout autre nombre de parties ; chaque module pourrait même représenter une partie, adaptée pour une association en série ou en parallèle avec le reste de la batterie. De plus, ces différentes parties pourraient être différentes entre elles, ne pas comprendre le même nombre de cellules. Le procédé de gestion de la batterie pourrait ainsi comprendre une étape de calcul automatique du nombre de parties à placer en parallèle, selon une période prédéterminée, en fonction de la tension et du courant demandés en sortie, puis une étape d'actionnement des interrupteurs 103, 104 afin d'obtenir la géométrie de la batterie la plus adaptée au besoin, à chaque instant.

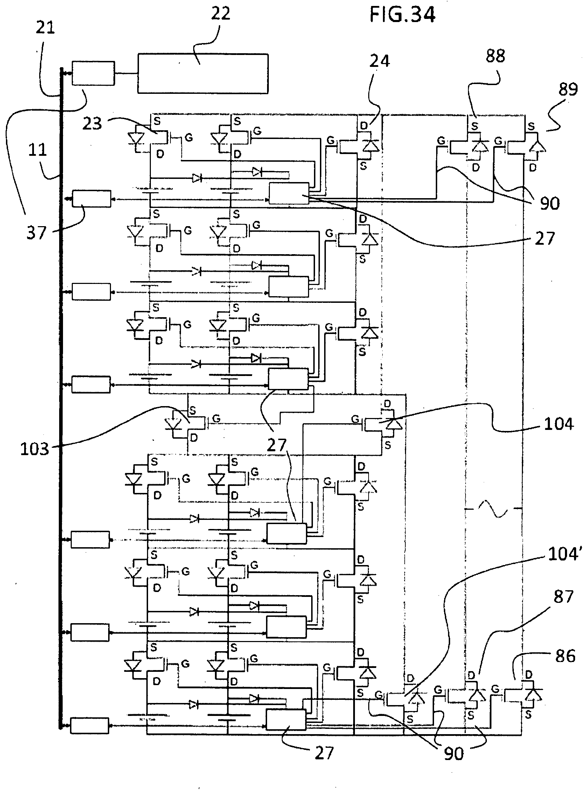

La figure 34 illustre ainsi une mise en oeuvre du principe décrit ci-dessus en référence à la figure 33. Dans cet exemple, la batterie comprend seulement deux parties de trois modules pour obtenir une clarté de la représentation. Naturellement, ce principe peut se dupliquer pour une batterie d'une centaine de modules, divisible en une multitude de parties. La batterie représentée correspond à celle décrite en référence avec la figure 11. Tous les modules comprennent les composants électroniques déjà décrits en détail et sont reliés à un calculateur central 22 par un bus de communication 21 et une isolation galvanique 37. La batterie est de plus équipée d'un pont en H par l'intermédiaire de quatre interrupteurs 86 à 89 tels qu'explicités précédemment. Enfin, le découpage de la batterie en deux parties est obtenu par l'ajout de trois transistors formant les interrupteurs 103, 104, 104' explicités précédemment. Comme cela est illustré, deux transistors 103, 104 sont positionnés dans la partie centrale de la batterie de sorte d'être pilotés par des circuits de commande 27 des modules adjacents répartis physiquement de part et d'autre de ces transistors. D'autre part, un transistor 104' est positionné vers l'extrémité inférieure de la batterie et est piloté par un signal 90 du circuit de commande du module inférieur de la batterie. Naturellement, ces interrupteurs 103, 104, 104' pourraient être répartis différemment au sein de la structure de la batterie.

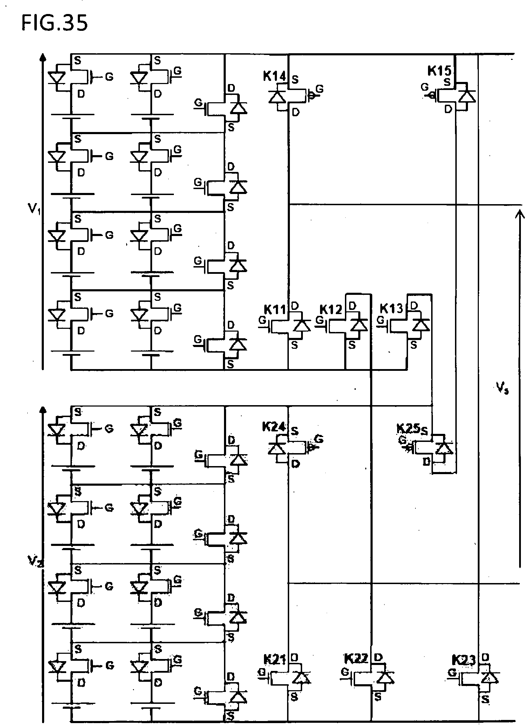

La figure 35 illustre ainsi un autre exemple de réalisation d'une batterie comprenant huit modules de deux cellules, répartis en deux parties de quatre modules restituant chacune respectivement une tension V₁ et V₂. Cette batterie comprend de plus dix transistors MOS, dont cinq transistors K11 à K15 liés à la première partie et cinq transistors K21 à K25 liés à la seconde partie. Ces dix transistors sont commandés directement par les modules adjacents. Ils permettent de mettre en oeuvre les deux fonctions d'inversion de tension et de mise en série ou parallèle des deux parties de la batterie. Pour cela, il s'agit bien d'une solution équivalente au schéma précédent. La tension totale Vₛ restituée par la batterie se définit en effet par les formules suivantes :
- Vₛ = V₁ + V₂ quand les transistors K13, K14 et K21 sont fermés, les autres étant ouverts,
- Vₛ = - V₁ - V₂ quand les transistors K11, K23 et K24 sont fermés, les autres étant ouverts,
- Vₛ = V₁ = V₂ quand les transistors K12, K22, K15, K25, K14 et K21 sont fermés, les autres étant ouverts,
- Vₛ = - (V₁ = V₂) quand les transistors K12, K22, K15, K25, K11 et K24 sont fermés, les autres étant ouverts.

Cette réalisation comprend des transistors K14, K15, K24 et K25 qui ne sont jamais soumis à une tension supérieure à V₁ ou V₂, ce qui permet de choisir des transistors basse tension, susceptibles de recevoir un courant plus fort sans générer trop de pertes. Les dix transistors sont commandés via une électronique qui peut être alimentée et placée sur les modules inférieurs et supérieurs des deux parties de la batterie, comme dans les cas précédents. Comme les potentiels de source de ces transistors sont référencés par rapport à ces modules, cela simplifie leur commande.

Dans le cas d'une batterie comprenant N modules, si le calcul détermine que n modules en série sont nécessaires pour obtenir une tension demandée, alors le calcul suivant peut être effectué :
- Si n < N/2 alors mise en parallèle de deux parties, en découpant la batterie en deux ;
- Si n < N/3, division de la batterie en trois parties, etc.

En variante, une régulation de type hystérésis peut être choisie, pour éviter de commuter trop souvent les interrupteurs lorsque la tension demandée varie autour d'une valeur limite comme N/2. Pour cela, il peut être décidé de procéder à la division en p parties de la batterie lorsque n < N/p - q, où q est une constante entière.

En variante, le procédé de gestion de la batterie peut mettre en oeuvre toute régulation autour d'une valeur de tension et/ou courant de sortie. Lorsque la tension de sortie est inférieure à la valeur de consigne, le nombre n de modules en série est augmenté, et au contraire si elle est supérieure à la valeur de consigne, alors ce nombre n est diminué. Pour éviter que le nombre n oscille entre deux valeurs pour atteindre une valeur de consigne non atteignable avec une valeur de n entière, un limiteur de fréquence de variation peut être utilisé et/ou un filtrage passe-bas au niveau du correcteur ou de la boucle de retour pour atteindre une régulation sur une valeur moyenne.

Si la batterie doit fournir une tension alternative, ou toute tension variable dans le temps selon une période donnée, la mise en parallèle de différentes parties de la batterie peut se décider sur des critères similaires, appliqués à l'amplitude de la sinusoïde ou de la tension variable à fournir, pour éviter de basculer d'un mode à un autre trop souvent, à chaque période. Globalement, le courant demandé pourra être d'autant plus élevé que l'amplitude de la tension demandée sera faible.

Ainsi, cette variante d'implémentation de l'invention permet, à puissance sensiblement constante, de modifier les valeurs de courant et tension de sortie. Cette solution est parfaitement adaptée à l'alimentation de certains moteurs comme un moteur de véhicule automobile, qui peut nécessiter plus de couple à basse vitesse, et donc plus de courant d'alimentation, pour le franchissement d'une côte importante par exemple. Ainsi, l'invention porte aussi sur un véhicule automobile en tant que tel équipé d'une batterie telle que décrite, amovible ou non pour son échange rapide. L'invention a été décrite avec des modes de réalisation dans lesquels chaque étage ou module est composé de cellules élémentaires, toutes associées à des interrupteurs pilotés par un circuit de commande. Toutefois, il est possible d'imaginer des variantes dans lesquelles toutes les cellules élémentaires ne comprennent pas un interrupteur de cellule, et/ou dans lesquelles tous les modules ne sont pas pilotés, comme cela a été mentionné précédemment.

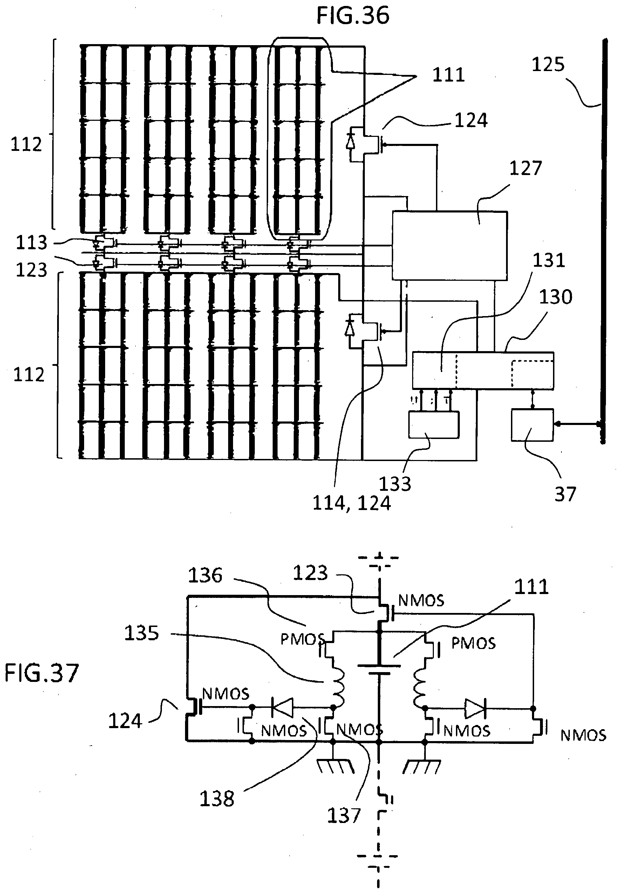

A cet effet, la figure 36 illustre une autre variante d'implémentation de l'invention, dans laquelle plusieurs cellules élémentaires 11 sont regroupées pour former des cellules plus importantes ou groupements de cellules 111. Ensuite, l'architecture de l'invention s'applique sur ces groupements de cellules 111, qui sont regroupés en modules 112, et qui sont tous associés à un interrupteur de groupements de cellules sous la forme d'un transistor 123, chaque étage comprenant un interrupteur d'étages sous la forme d'un transistor 124. Ainsi, l'invention intègre toute réalisation dans laquelle la cellule considérée comme une cellule élémentaire dans les modes de réalisation précédents correspond en fait à un groupement de cellules, qui peut se présenter comme un ensemble monolithique, dont la connectique est figée et non modifiable, se présentant même éventuellement dans un boîtier avec au moins deux bornes extérieures, dans un format et une utilisation finalement semblables à ceux d'une cellule élémentaire telle que définie précédemment. Il faut donc entendre par le terme « cellule » dans l'ensemble de la description toute entité d'éléments de stockage d'électricité, allant d'une cellule élémentaire, comme une batterie Lithium-Ion, à l'association d'une multitude de batteries élémentaires. En remarque, sur la variante de la figure 36, un dispositif de commande électronique est mutualisé pour deux étages 112.

Ce dispositif de commande met en place une commande des transistors 123, 124 formant les interrupteurs 113, 114 par rapport à un potentiel bas de l'étage inférieur. Il comprend différents capteurs 133, comme un capteur de température, un capteur de tension et un capteur de courant, qui communiquent avec un circuit de traitement 130 par trois voies de communications. Le circuit de traitement 130 reçoit ainsi ces données au niveau d'une entrée de communication 131 effectuant une numérisation, de type « ADC input ». Selon une réalisation possible, le circuit de traitement peut être un microcontrôleur disposant d'un nombre d'entrée/sortie suffisant pour interroger l'ensemble des capteurs. Tous les transistors 123, 124 sont pilotés par un circuit de commande 127 de puissance, sous les ordres du circuit de traitement 130. Enfin, le circuit de traitement 130 est relié à un calculateur central, non représenté, par un bus de communication 125 et par l'intermédiaire d'une interface 37 formant une isolation galvanique.

La figure 37 représente un mode de réalisation d'un circuit de commande des transistors 123, 124, via la décharge d'une inductance 135, auparavant chargée par la fermeture de deux transistors PMOS 136 et NMOS 137 qui l'encadrent. Quand l'inductance 135 est suffisamment chargée, le transistor NMOS 137 s'ouvre alors que le transistor PMOS 136 reste fermé. La courant passe alors par la diode 138 puis va charger la grille du transistor de module 124, suffisamment pour induire son changement d'état.

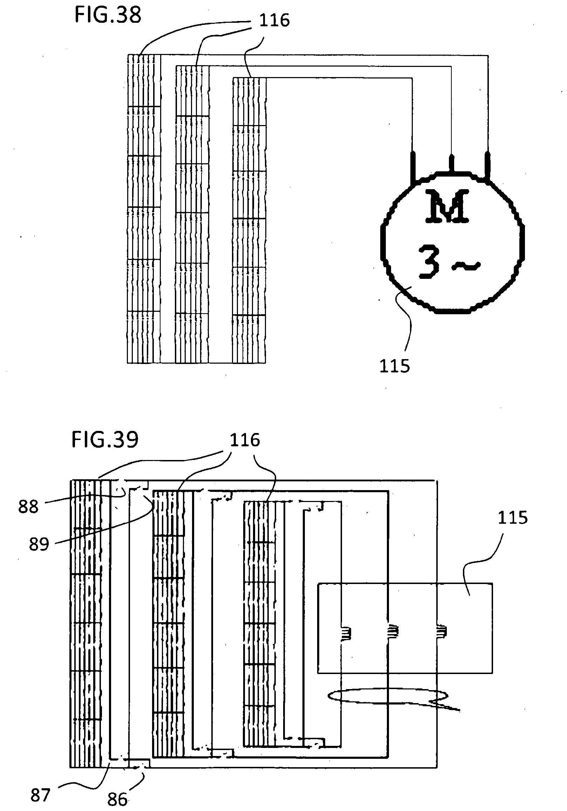

D'autre part, l'invention est aussi compatible avec une implémentation triphasée. La figure 38 illustre simplement une batterie comprenant trois colonnes 116 de stockage de puissance, chacune d'architecture similaire à une batterie selon l'invention telle que décrite précédemment, permettant d'alimenter un moteur triphasé 115.

La figure 39 illustre une variante de réalisation d'une batterie adaptée pour délivrer une tension triphasée à un moteur triphasé 115, qui diffère de la réalisation précédente par le fait que chaque colonne 116 de la batterie est équipée d'interrupteurs 86 à 89, avantageusement des transistors, pour réaliser des ponts en H tels qu'explicités en relation avec la figure 26. Ce pont en H permet de doubler la tension crête à crête de commande du moteur et par la même de diviser le courant de sortie par deux pour une même puissance de sortie (Ueff*leff=cste). Ces interrupteurs commutent deux fois par période, c'est-à-dire à chaque changement de signe de la tension de sortie. Cette architecture, par rapport à celle de la figure 38, permet d'éviter que le courant fourni par une colonne ne se déplace sous la forme d'un courant inverse dans une autre colonne à certains moments de la période, engendrant des cycles de charge et décharge intempestifs des cellules. Dans cette solution, les trois bobinages du moteur triphasé 115 peuvent être alimentés de manière indépendante. Cette isolation peut permettre d'isoler galvaniquement chacune des colonnes 116 de la batterie. Cette isolation peut notamment être utile si les trois colonnes 116 sont séparées en trois blocs de batterie physiquement réparties en différents endroits, par exemple au sein d'un véhicule pour des raisons de sécurité électrique.

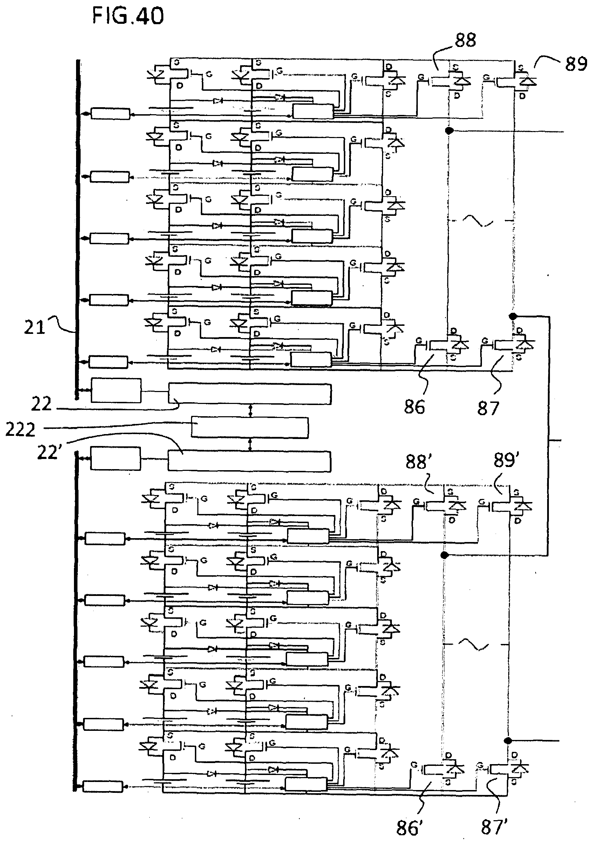

La figure 40 illustre une autre variante de réalisation permettant de fournir une alimentation triphasée. Le dispositif utilisé comprend le montage en série de deux structures ou deux colonnes de batterie telles que décrites en rapport avec la figure 27. Comme cela a été présenté, chaque colonne est adaptée pour restituer une tension de sortie alternative de type sinusoïdale. En appliquant un déphasage de 2π/3 sur les tensions restituées par ces deux colonnes, il est possible de récupérer en sortie de la batterie une tension triphasée. En remarque, chaque colonne est reliée à son calculateur central 22, 22' par respectivement un bus de communication 21, 21' et ces deux calculateurs 22, 22' sont en liaison avec un calculateur principal 222 qui gère l'ensemble de la batterie et notamment la coordination de ses deux colonnes.

Les trois calculateurs partagent ainsi la mise en oeuvre du procédé de gestion d'une telle batterie. A titre d'exemple, le calculateur principal 222 détermine le nombre d'étage n1 et n2 à utiliser sur respectivement chacune des deux colonnes de la batterie. Pour cela, une solution consiste à choisir les nombres n1 et n2 selon la règle suivante :
- n1 = arrondi à l'entier le plus proche de [(amplitude de la tension crête de consigne / tension d'un module) * sin (2πft)]
- n2 = arrondi à l'entier le plus proche de [(amplitude de la tension crête de consigne / tension d'un module) * sin (2πft)]

Le calculateur définit une consigne de sortie souhaitée, incluant la fréquence f du signal et son amplitude. Dans le cas de l'utilisation de la batterie pour alimenter un moteur, la tension et le courant de sortie et la vitesse du moteur peuvent être gérés selon une boucle d'asservissement. Les nombres n1 et n2 sont ajustés à tout instant t pour atteindre la consigne définie par cet asservissement.

En complément, les deux calculateurs 22, 22' dédiés à chaque colonne de la batterie déterminent plus précisément les modules (et éventuellement les cellules) à utiliser pour respecter les nombres n1 et n2 définis tout en atteignant les valeurs de tension et de courant demandés. Ce choix est réalisé de sorte de respecter l'équilibrage des charges entre les différents modules. Pour cela, chaque calculateur 22, 22' reçoit l'information de l'état de charge et de la capacité en courant de chaque module de sa colonne, ce qui permet de déterminer quels n1 et n2 modules sont précisément utilisés à chaque instant. Ainsi, les cellules qui permettent d'obtenir le courant demandé à court terme sont sélectionnées, et restent connectées jusqu'au passage par la crête de courant, ce qui évite les connexions et déconnexions trop nombreuses des modules. Les modules qui ne peuvent fournir qu'un courant plus faible ne sont alors utilisés que lorsque le courant crête demandé est inférieur à la capacité en courant de ces modules.

De plus, le calculateur principal 222 transmet aussi l'information du signe de la tension demandée, pour que chaque colonne positionne son pont en H en fonction. Selon une réalisation avantageuse, cette information est transmise à chaque colonne en modifiant le signe des nombres n1 et n2.

D'autre part, le procédé de gestion comprend aussi une étape de transmission au calculateur principal 222 de l'information de l'état de charge et de la capacité en courant de chaque module des deux colonnes. Il est ainsi possible de calculer le courant et la tension maximum que peut fournir la batterie pour en tenir compte lors de la gestion de la batterie : en cas de besoin, le calculateur principal 222 peut ainsi mettre en oeuvre une limitation du courant crête demandé ou absorbé, voire une limitation de la vitesse du moteur dans le cas d'une alimentation du moteur.

Finalement, toutes les réalisations d'une batterie illustrées précédemment montrent qu'il est possible d'utiliser différents types d'interrupteurs pour remplir des fonctions différentes et complémentaires parmi lesquels :
- des interrupteurs de cellule, pour connecter ou déconnecter une cellule particulière de la batterie ;
- des interrupteurs parallèles, pour by-passer ou non une cellule particulière de la batterie ;
- des interrupteurs de module, pour by-passer ou non un module de la batterie ;
- des interrupteurs pour by-passer ou non plusieurs modules simultanément de la batterie ;
- des interrupteurs pour inverser ou non la tension en sortie de la batterie ;
- des interrupteurs d'inversion série/parallèle pour disposer en série ou en parallèle certaines sous-parties de la batterie.

Selon une réalisation avantageuse, comme cela a été décrit, tous ces interrupteurs sont pilotés par un circuit de commande alimenté par au moins une cellule de la batterie elle-même, c'est-à-dire alimenté localement, sans recours à une alimentation extérieure. D'autre part, le pilotage d'un interrupteur est de préférence réalisé par un circuit de commande suffisamment proche, alimenté par au moins une cellule du module le plus proche ou à proximité, pour mettre en jeu des tensions d'un même ordre de grandeur entre le circuit de commande et l'interrupteur piloté, par exemple le transistor piloté. Pour cela, il est avantageusement choisi de piloter un interrupteur, dont une des bornes, de source ou drain dans le cas d'un transistor NMOS par exemple, est reliée à une tension d'un certain module par un circuit de commande alimenté par ce même module ou un module adjacent, plus exactement par au moins une cellule de l'un de ces modules. Plus généralement, il pourra être choisi tout circuit de commande dont la liaison d'alimentation se trouve sur un module dont la différence de potentiel avec les bornes de l'interrupteur ne dépasse pas un seuil prédéfini, qui risquerait d'endommager l'interrupteur, de créer une situation de risque électrique. Ce seuil est défini par des normes de sécurité et dépend du type d'interrupteur implémenté. Cette alimentation locale, de proximité, présente le second avantage de permettre l'utilisation de liaisons de pilotage de faible longueur entre le circuit de commande et l'interrupteur. Ensuite, il faut noter que le circuit de commande doit permettre l'actionnement fiable des différents interrupteurs. Dans un cas où les différents modules présentent une différence de potentiel de 3V et que l'interrupteur est de type NMOS, un circuit de commande intègre de préférence une pompe de charge pour augmenter la tension de 3V présente sur ses bornes d'entrée, et utiliser en sortie une tension plus élevée pour l'actionnement des interrupteurs, en fonction de ces derniers. Dans le cas d'un transistor NMOS par exemple, il sera choisi d'alimenter sa grille par une tension telle que la différence de tension entre sa grille et sa source soit de l'ordre de 20 V, pour garantir un actionnement fiable.

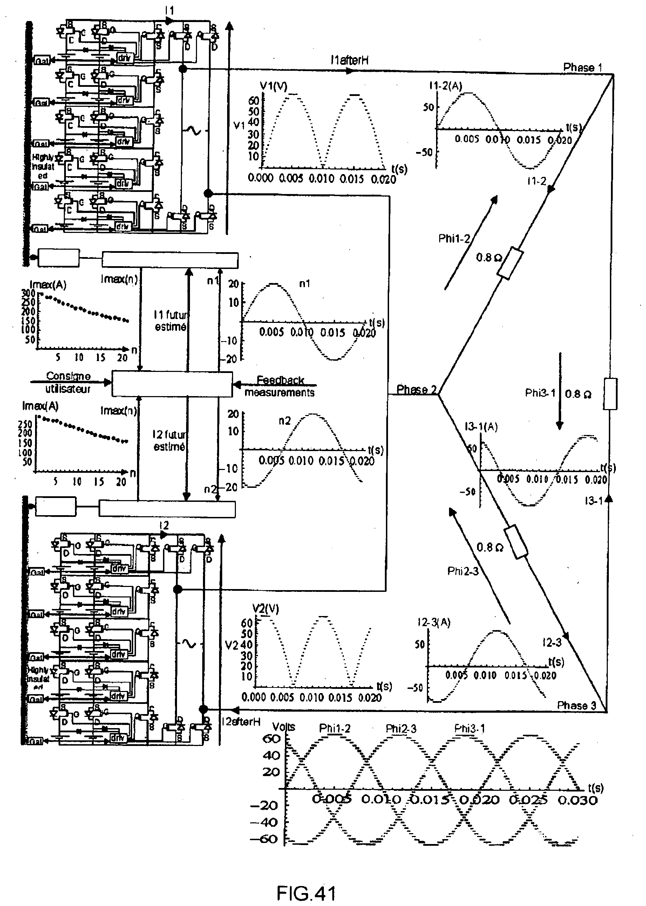

La figure 41 illustre ainsi un exemple d'utilisation d'une telle batterie appliquée à une charge résistive, avec certaines hypothèses de vieillissement et de perte de capacité de certains modules. En variante non représentée, la batterie peut être branchée sur une source triphasée pour mettre en oeuvre sa charge.

De plus, l'architecture de la solution de batterie décrite précédemment permet la mise en oeuvre d'autres fonctions intéressantes.

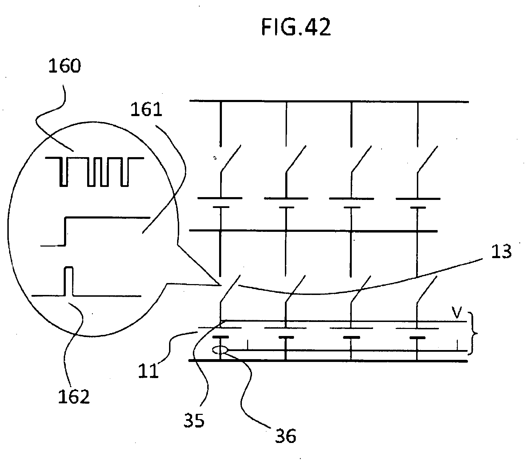

Une première fonction consiste en une mesure d'impédance électrique. Pour cela, il est possible de fermer et/ou ouvrir l'interrupteur série 13 associé à une cellule 11, pour permettre ou pas à une partie du courant circulant dans le pack batterie, de passer par la cellule. En contrôlant les instants de passage du courant dans la cellule et en mesurant le courant et tension au niveau de la cellule 11, il est possible d'en déduire l'impédance électrique complexe de la cellule. Des méthodes classiques telles que la réponse à un bruit blanc 160, à un échelon 161 ou à une impulsion 162 sont bien connues pour identifier les caractéristiques électriques d'un élément électrique, comme cela est représenté sur la figure 42. Cette mesure d'impédance électrique complexe permet potentiellement de donner des informations supplémentaires par rapport aux mesures de courant, tension et température pour mieux estimer l'état de charge et de santé de la cellule.

Cette mesure d'impédance complexe sur la base d'une commande bien définie de l'interrupteur série est avantageusement effectuée pendant que les autres cellules du module prennent le relais du courant lorsque que l'interrupteur série est ouvert. En variante, il est aussi possible d'effectuer cette mesure sur la base du fonctionnement normal de la batterie, qui génère naturellement des échelons de courant dans les cellules lorsque les cellules (ou le module) sont activées.

Si le courant consommé dans le pack batterie est plus ou moins continu ou basse fréquence, il peut être nécessaire d'utiliser des captateurs de courant qui passent le continu pour le mesurer (capteurs qui mesurent le champ magnétique à proximité du passage du courant, capteur à effet hall ou utilisation de résistances de shunt). Ces capteurs ont la particularité d'être relativement couteux et gourmand en énergie. Pour s'affranchir de cette limitation, il est possible grâce à l'architecture retenue, d'artificiellement augmenter la fréquence du courant consommé dans les cellules par rapport au courant circulant dans la charge. En effet, on peut alterner les cellules utilisées au niveau des modules et on peut alterner les modules utilisés pour générer la tension de sortie. On peut aussi faire une connexion/déconnexion rapide d'une cellule juste au moment ou l'on veut mesurer son courant. Ce hachage de courant au niveau des cellules ou modules permet de plus facilement mesurer le courant puisque la fréquence de ce dernier est augmentée. On peut par exemple utiliser un simple transformateur de courant qui peut être intégré directement sur une carte PCB qui sert de support à l'électronique de mesure. En déconnectant la cellule, on annule le courant qui traverse la cellule et on dé-sature le matériau magnétique du transformateur de courant (saturation liés par exemple à la circulation d'un courant continu ou très basse fréquence). Lorsque l'on reconnecte la cellule, le transformateur de courant se comporte comme un vrai transformateur de courant jusqu'à ce que le matériau soit à nouveau saturé. Avant cette saturation, on en profite pour faire la mesure de courant au secondaire du transformateur. Finalement, on déconnecte temporairement la cellule à chaque fois que l'on veut faire une mesure de courant.

Une seconde fonction est une mesure de courant. On peut par ailleurs déconnecter temporairement la cellule (plus éventuellement éviter que le courant ne passe par une diode inverse) pour calibrer d'autres types de capteur de courant : on sait que lorsque la cellule est déconnectée, le courant qui la traverse est nul, ce qui permet de calibrer le zéro du capteur. On peut aussi calibrer d'autres points de la caractéristique du capteur si on fait circuler dans le pack batterie un courant calibré connu (par exemple au moment de la recharge du pack), ou que l'on mesure le courant avec un capteur de courant calibré et précis au niveau du pack batterie. Ensuite, en aiguillant le courant d'une cellule à l'autre au niveau de chaque étage en connectant une à une les cellules, on peut calibrer le capteur de courant de chaque cellule vis-à-vis de ce point de courant et faire de même pour d'autres points de courant. Au final, si on extrapole un peu plus le concept, avec un seul capteur de courant calibré, stable et précis placé dans le pack batterie (au niveau d'une cellule ou du pack), on peut, avec le jeu d'interrupteurs, calibrer tous les autres capteurs de courant du pack batterie. Cette possibilité de calibration en temps réel des capteurs de courant, notamment durant le fonctionnement du pack batteries, permet d'utiliser des capteurs très bas coût (puisqu'ils n'ont pas besoin d'être très stables sur le long terme).

Une troisième fonction consiste en une calibration de la mesure de l'état de charge ou de l'état de santé de la batterie. Pour calculer l'état de charge d'une cellule, la solution la plus courante est de mesurer la tension aux bornes de la cellule. Pour les batteries élémentaires dont la partie active repose sur un principe chimique avancé, de type Lithium-ion Fer Phosphate, la mesure de la tension n'est pas très précise car cette dernière dépend plutôt de la température que de l'état de charge, surtout lorsque l'on est loin de la fin de charge ou de décharge. Pour avoir une mesure plus précise de l'état de charge, il est connu que l'on peut intégrer le courant qui traverse la cellule. En partant d'un état déchargé et que l'on intègre le courant (nombre d'ampères-heures accumulés) et que l'on connait la capacité de la cellule (nombre d'ampères-heure que la batterie élémentaire peut stocker) alors on peut en déduire, en faisant le rapport des deux valeurs, le taux de charge de la cellule. Cette solution est plutôt fiable, mais elle demande des calibrations régulières, car le calcul d'intégration du courant à tendance à dériver au court du temps en raison d'imprécisions sur la mesure du courant, des courants de fuite qui ne sont pas pris en compte, et en raison du fait qu'en vieillissant la cellule perd de sa capacité (le nombre d'ampères-heure stockable diminue). Il est donc nécessaire de faire des calibrations. Pour cela, une solution actuelle consiste à charger et/ou décharger complètement le pack batterie au bout d'un certain nombre de cycles ou d'un certain temps d'utilisation. Une décharge complète suivie d'une recharge complète permet par exemple de mettre à jour la capacité de stockage de la cellule (nombre d'ampères-heure). Cette opération prend un temps assez important, pour une durée de deux à trois fois plus importante que la durée d'une simple situation de recharge normale de batterie. De plus, cette opération consomme de l'énergie en partie perdue (durant la décharge complète).

Pour s'affranchir de ces inconvénient, l'architecture de batterie selon la solution permet de réaliser ces opérations, non pas sur le pack batterie complet, mais simplement sur une partie des cellules du pack batterie, afin de pouvoir continuer à utiliser le pack batterie pendant ces phases de calibration, avec une capacité totale disponible réduite de seulement quelques pourcents. La calibration consiste alors à décharger et charger complètement une ou quelques cellules de la batterie, et à remettre à jour la capacité de la cellule ainsi que son compteur d'ampères-heure. A partir de cette analyse sur quelques cellules, il est possible d'en déduire en partie par extrapolation l'état du pack batterie complet. Pour ne pas déséquilibrer le nombre de cycles de charges/décharges effectuées par chacune des cellules, il suffit de changer de cellules de calibration à chaque calibration : on échantillonne à chaque calibration une série de cellules différente.

Une quatrième fonction consiste en une amélioration du fonctionnement d'une cellule. Certaines cellules contiennent une partie active chimique qui vieillit moins vite lorsque leur courant de charge ou de décharge est haché. En effet, pour une même puissance dissipée dans la cellule, il est possible d'atteindre des courants « crêtes » plus élevés si le courant n'est appliqué qu'une certaine proportion du temps, de manière hachée, puisque les pertes sont réduites. Ce courant crête plus élevé se traduit aussi dans la cellule par une tension crête un peu plus élevée que la tension normale de la cellule et celle-ci a tendance à faire déplacer les ions dans la cellule avec plus d'énergie, ce qui à tendance à favoriser leur migration d'une électrode à l'autre et dans une certaine limite à améliorer leur insertion dans l'électrode d'accueille. Ce principe permet à la cellule de limiter sa perte de capacité de stockage d'un cycle de charge/décharge à l'autre et donc de ralentir son vieillissement. Dans le cadre de l'architecture choisie, il est facile d'hacher le courant dans les cellules de la batterie, en alternant le passage du courant global utile d'une cellule à l'autre, par exemple, en connectant les cellules avec un certain rapport cyclique (avec un déphasage dans les connexions/déconnexions des différentes cellules d'un étage) ou en alternant l'activation de modules, en activant les interrupteurs concernés, tout en assurant le bon niveau de tension sur la sortie.

Ainsi, il apparaît de la description précédente qu'un problème technique d'amélioration de la fiabilité, de la performance, de la longévité d'une batterie dont l'architecture intègre des interrupteurs, au sein d'une architecture telle que décrite précédemment ou plus généralement pour toute autre architecture, est résolu en activant la fermeture et l'ouverture de ces interrupteurs selon un certain rapport cyclique.

Un procédé de gestion de batterie peut donc comprendre une étape d'ouverture/fermeture cyclique d'un ou plusieurs interrupteur(s) selon un rapport cyclique fixé en fonction du temps total d'utilisation d'une ou plusieurs cellule(s) associée(s), de sorte à les déconnecter d'une charge et/ou du reste de la batterie, ce rapport cyclique étant lui-même déterminé en fonction du besoin global en courant et tension de la batterie et en fonction du diagnostic de la cellule considérée.

Cette étape d'ouverture/fermeture selon un rapport cyclique d'un ou plusieurs interrupteur(s) de la batterie peut en résumé être mise en oeuvre dans plusieurs situations, pour plusieurs objectifs :
▪elle peut permettre d'ajuster le courant moyen relatif circulant dans plusieurs cellules placées en parallèle, elle peut permettre de limiter le courant dans une cellule en surchauffe (par exemple située au centre de la batterie et ayant des difficultés à évacuer la chaleur), elle peut permettre de limiter le courant dans des cellules qui au contraire se trouvent à trop basse température ;
▪Elle peut permettre d'équilibrer le courant circulant dans des cellules situées en parallèle (des dispersions de fabrication ou des vieillissements différents tendent à créer une dispersion de résistance interne et donc des courants différents si les cellules sont simplement placées en parallèle) ;
▪Elle peut permettre de placer en parallèles des cellules de technologies différentes, dont les caractéristiques naturelles ne permettent pas de distribuer correctement le courant entre cellules. Par exemple, si dans une batterie, on remplace une cellule défaillante par une cellule de technologie plus récente avec une résistance interne inférieure, elle aura tendance à fournir ou absorber un courant bien supérieur aux cellules voisines si on n'applique pas un hachage du courant spécifique la traversant, de sorte que ce courant devienne compatible avec celui des autres cellules disposées en parallèle ;
▪Elle peut permettre d'ajuster le courant moyen circulant dans une cellule pour en mesurer la tension associée et en déduire son état de charge. En effet, il est par exemple connu qu'une mesure de tension de cellule pour un courant nul ou connu permet une meilleure estimation de l'état de charge de la cellule que si on mesure cette même tension pour un courant quelconque ;
▪Elle peut permettre d'extraire une caractéristique tension/courant de la cellule à caractériser durant le fonctionnement de la batterie, en charge ou en décharge. Pour cela, il est possible de déconnecter une partie des cellules placées en parallèle pour concentrer le courant sur une certaine cellule à caractériser, afin d'atteindre un courant important vis-à-vis de la cellule donnée même si le courant principal est relativement faible ;
▪Elle peut permettre de faciliter la mesure du courant. En effet, on peut hacher le courant, le rendre alternatif et mesurable au travers d'un transformateur de courant qui ne laisse pas passer le courant continu ;
▪Elle peut permettre de charger ou décharger plus rapidement une cellule par rapport aux autres cellules placées en parallèle de sorte à la charger ou la décharger complètement afin d'en déduire le nombre d'ampère heure qu'elle est capable de stocker et ou de restituer, c'est-à-dire mettre en oeuvre par ce biais une étape d'estimation de son état de santé. Dans l'usage classique d'une batterie, on la charge généralement complètement à chaque recharge (charge durant la nuit par exemple) mais on la décharge rarement complètement de peur de tomber en panne (on garde généralement une marge de sécurité, une sorte de réserve). En conclusion, on ne décharge complètement une batterie que très rarement, voire jamais. On n'a alors jamais l'occasion de connaitre le nombre d'ampère-heure exact que la batterie ou les cellules qui la constituent peuvent restituer, cette quantité étant amenée à se réduire au fur et à mesure du vieillissement des cellules. Il est alors intéressant de caractériser un échantillon de cellules de la batterie de temps-en-temps, pour estimer précisément leur état de charge et de santé, vérifier leur vieillissement et détecter si certaine sont à changer. On peut aussi remettre à jour les paramètres de l'estimateur de l'énergie/autonomie restante dans la batterie. Cette caractérisation ne touchant que quelques cellules de la batterie, cette dernière peut continuer à fonctionner correctement, en charge ou en décharge, durant cette caractérisation. Si la batterie alimente un moteur par exemple, il peut exister une puissance réactive sur le chemin de puissance, due au comportement inductif du moteur, et donc sur une période électrique d'alimentation du moteur il peut y avoir temporairement un retour de puissance vers la batterie. Cette énergie retournée peut être utilisée pour recharger des cellules en sous-charge, mais aussi pour recharger un échantillon de cellules que l'on voudrait recharger complètement pour les faire cycler et identifier leur vieillissement (nombre d'ampère-heure qu'elles peuvent stockée). Ceci peut-être particulièrement intéressant si les recharges sont des recharges partielles et que donc les cellules ne sont jamais rechargées complètement. On permet ainsi, alors que l'on consomme une certaine puissance efficace de la batterie pour alimenter un système, de recharger complètement certaines cellules. La recharge partielle peut notamment être courante dans le cas de la location où l'utilisateur suivant emprunte un produit alors que l'utilisateur précédant l'a rendu et disposé sur le chargeur peu de temps avant (ex : location de karts pour le karting, vélo ou voiture partagés pour la ville, location ou utilisation intense d'appareils électroportatifs, bus ou voiture qui effectue très régulièrement des recharges rapides incomplètes...) ;
▪Elle peut permettre de communiquer par courant porteur (modulation du courant fournis ou absorbé par la cellule ou circulant dans le transistor parallèle selon un codage particulier qui peut être lu sur l'ensemble du chemin de puissance) ;
▪Elle peut permettre de mesurer la réponse d'une cellule d'une batterie à un profil de courant particulier : application d'une impulsion, d'un échelon, d'un bruit blanc. La réponse peut être mesurée localement (observation de la tension, de la température ou autre au niveau de la cellule) ou globalement (observation de la tension, température, courant au niveau d'un ensemble de cellules ou de la batterie) ;
▪la déconnexion temporaire d'une cellule peut permettre la calibration du zéro du capteur de courant éventuellement associé ;
▪On peut utiliser un capteur de courant précis sur le chemin de puissance et calibrer, à partir de cette mesure, les éventuels capteurs de courant placés au niveau des cellules en aiguillant le courant sur chacune des cellules placées en parallèle une à une. Cette calibration peut notamment avoir lieu lors de la fabrication en disposant un capteur principal particulièrement précis. La mesure de courant au niveau des cellules peut alors être de très bas coût avec des capteurs de base, bon marché et peu précis, mais dont les erreurs peuvent être corrigées via la calibration, soit seulement en sortie d'usine, soit régulièrement au cours du fonctionnement de la batterie via un capteur principal de courant embarqué. Par exemple, pour un capteur de courant de type shunt, la valeur du shunt, le gain et les offsets liés à la chaine d'amplification peuvent être compensés en temps réel, au fur et à mesure que la température, l'humidité ou tout autre facteur, changent, et on peut même envisager de mesurer le courant directement via la mesure de la chute de tension au niveau des transistors série ou parallèle.

En remarque, tout ou partie des cellules d'une batterie telle que décrite précédemment peut être associée à une source locale d'énergie, par exemple de type capteur solaire, capteur thermique, convertisseur mécanique/électrique, etc., pour profiter de cette source pour son rechargement par exemple, et/ou pour apporter des possibilités supplémentaires pour la fourniture d'énergie par la batterie.

## Revendications

1. Batterie comprenant plusieurs modules (12 ; 112) disposés en série, au moins un module (12 ; 112) donné comprenant au moins deux cellules (11 ; 50 ; 111) disposées en parallèle, au moins une de ces deux cellules (11 ; 50 ; 111) étant associée à un interrupteur de cellule (13 ; 63 ; 113) disposé en série avec la cellule (11 ; 50 ; 111), **caractérisée en ce que** le module donné comprend au moins un capteur de mesure (33, 35, 36 ; 62, 65, 66 ; 133) d'une grandeur caractéristique de l'état de ladite cellule du module donné associée à l'interrupteur de cellule (13 ; 63 ; 113), et **en ce qu'**elle comprend au niveau du module donné, un circuit de traitement (30 ; 130) local des mesures effectuées par ledit au moins un capteur de mesure, le circuit de traitement pilotant l'interrupteur associé à ladite cellule du module donné par l'intermédiaire d'un circuit de commande (27 ; 127) en fonction d'au moins ladite grandeur caractéristique de l'état de ladite cellule, le circuit de commande de l'interrupteur de cellule (13 ; 63 ; 113) et/ou le circuit de traitement étant alimenté(s) électriquement directement par au moins une cellule de la batterie du module donné en étant isolé(s) électriquement des autres modules.

2. Batterie selon la revendication précédente, **caractérisée en ce que** chaque module comprend une borne inférieure (17) apte à une connexion avec un module inférieur et une borne supérieure (18) apte à une connexion avec un module supérieur, et **en ce qu'**elle comprend un module comprenant au moins deux branches parallèles entre sa borne inférieure (17) et sa borne supérieure (18), au moins une branche comprenant une cellule (11 ; 50 ; 111) et un interrupteur de cellule (13 ; 63 ; 113) disposés en série, et **en ce que** le circuit de traitement et le circuit de commande (27 ; 67 ; 127) d'un interrupteur de cellule (13 ; 63 ; 113) d'un module donné sont disposés entre les bornes inférieure (17) et supérieure (18) du module donné.

3. Batterie selon la revendication 1 ou 2, **caractérisée en ce qu'**elle comprend plusieurs modules (12; 112) comprenant plusieurs cellules (11 ; 111) chacun, toutes les cellules (11 ; 111) étant associées à un interrupteur de cellule (13 ; 63 ; 113) disposé en série avec la cellule et à au moins un capteur de mesure (33, 35, 36 ; 133) d'une grandeur caractéristique de l'état de la cellule, et **en ce que** la batterie comprend au moins un circuit de commande des interrupteurs de cellule (13 ; 63 ; 113) et/ou un circuit de traitement (30 ; 130) au niveau de chaque module ou d'un module sur deux ou trois pour commander les interrupteurs de cellule en fonction de la grandeur caractéristique de l'état des cellules associées.

4. Batterie selon l'une des revendications précédentes, **caractérisée en ce qu'**elle comprend un capteur de mesure du courant (36) au niveau d'une cellule (11 ; 111), et/ou un capteur de mesure de la tension (35) aux bornes d'une cellule (11 ; 111) et/ou aux bornes de son interrupteur de cellule, et/ou un capteur de mesure de la température (33) d'une cellule (11 ; 111) et/ou de mesure de spectrométrie d'impédance.

5. Batterie selon l'une des revendications précédentes, **caractérisée en ce qu'**elle comprend au moins un module (12 ; 112) associé à un interrupteur de module (14 ; 114) connecté en parallèle du module (12 ; 112) ou au moins un module (12) dont chaque cellule (11) est associée à un interrupteur parallèle (34) connecté en parallèle avec la cellule, et/ou au moins un interrupteur (214 ; 314 ; 414 ; 514 ; 614 ; 714) disposé en parallèle de plusieurs modules.

6. Batterie selon l'une des revendications précédentes, **caractérisée en ce qu'**elle comprend plusieurs circuits de traitement et plusieurs circuits de commande disposés au niveau de modules différents.

7. Batterie selon la revendication précédente, **caractérisée en ce qu'**elle comprend un calculateur central (22) et un bus de communication (21 ; 125) reliant les différents modules (12 ; 112) par l'intermédiaire d'une isolation galvanique (37) pour permettre une coopération entre un circuit de traitement local (30) et un calculateur central (22).

8. Batterie selon la revendication 7, **caractérisée en ce que** ladite coopération entre un circuit de traitement local (30) et le calculateur central (22) permet de réaliser l'ensemble des fonctions de gestion de la batterie, le circuit de traitement local assurant seul au moins partie des fonctions de gestion.

9. Batterie selon l'une des revendications précédentes, **caractérisée en ce qu'**elle comprend une carte électronique (20) comprenant :
- des bornes (16) pour une liaison avec des cellules (11) de la batterie, et
- des interrupteurs de cellules (13) pour un ou plusieurs modules (12), et
- des capteurs de mesure (33, 35, 36; 133) d'une grandeur caractéristique de l'état de cellules.

10. Batterie selon la revendication précédente, **caractérisée en ce qu'**elle comprend une carte électronique (20) disposée entre chaque module (12) de la batterie ou une unique carte électronique (20) sur laquelle sont disposées toutes les cellules (11) de la batterie ou plusieurs cartes électroniques associées chacune à plusieurs modules (12).

11. Batterie selon l'une des revendications 1 à 8, **caractérisée en ce qu'**elle comprend au moins une cellule élémentaire (50) comprenant un interrupteur de cellule (63) et un capteur de mesure (62 ; 65 ; 66) d'une grandeur caractéristique de son état intégrés à l'intérieur de l'enveloppe extérieure (68) de la cellule élémentaire (50).

12. Batterie selon l'une des revendications 1 à 11, **caractérisée en ce qu'**elle comprend un module (112) comprenant au moins une cellule (111) comprenant plusieurs cellules élémentaires et un interrupteur de cellule (113) disposé en série avec la cellule (111) et au moins un capteur de mesure (133) d'une grandeur caractéristique de son état.

13. Batterie selon l'une des revendications précédentes, **caractérisée en ce qu'**elle comprend un pont en H (86, 87, 88, 89) apte à inverser la tension aux bornes de la batterie.

14. Batterie selon l'une des revendications précédentes, **caractérisée en ce qu'**elle comprend plusieurs sous-ensembles de cellules (11 ; 50 ; 111) et des interrupteurs (103 ; 104) disposés entre ces sous-ensembles aptes à disposer deux sous-ensembles en série ou en parallèle.

15. Batterie selon la revendication 13 ou 14, **caractérisée en ce qu'**elle comprend des interrupteurs (86, 87, 88, 89, 103, 104) pour inverser la tension aux bornes de la batterie et/ou modifier l'assemblage en série ou en parallèle de sous-ensembles de la batterie, et **en ce que** ces interrupteurs sont commandés par au moins un circuit de commande (27 ; 67 ; 127) disposé au niveau d'un module de la batterie.

16. Batterie selon l'une des revendications précédentes, **caractérisée en ce que** l'interrupteur de cellule (13 ; 63 ; 113) est un transistor (23).

17. Batterie selon l'une des revendications précédentes, **caractérisée en ce qu'**elle comprend trois colonnes (116) comprenant chacune plusieurs modules disposés en série pour fournir une sortie triphasée.

18. Batterie selon l'une des revendications précédentes, **caractérisée en ce qu'**elle comprend plusieurs boîtiers (150) disposés en série, et comprend un bâti avec des emplacements pour loger les boîtiers de manière amovible, un emplacement comprenant des contacts électriques pour la liaison électrique d'un boîtier avec les bornes de la batterie, par l'intermédiaire d'un bus de puissance, l'emplacement étant associé à un interrupteur de bâti, de sorte à pouvoir conserver une restitution électrique en l'absence d'un certain boîtier dans un certain emplacement par l'intermédiaire d'au moins un autre boîtier disposé dans un autre emplacement du bâti.

19. Procédé de gestion d'une batterie selon l'une des revendications précédentes, **caractérisé en ce qu'**il comprend les étapes suivantes :
- mesure d'au moins une grandeur au niveau d'une cellule (11 ; 50 ; 111) donnée de la batterie disposée dans un module donné, représentative de l'état de la cellule ;
- transmission de ladite grandeur mesurée à au moins un circuit de traitement (30) local disposé au niveau du module donné;
- détermination de la position d'un interrupteur de ladite cellule (13 ; 63 ; 113) en prenant en compte ladite grandeur mesurée ;
- commande de l'ouverture ou fermeture de l'interrupteur de cellule (13; 63; 113) par l'intermédiaire d'un circuit de commande (27 ; 67 ; 127) disposé au niveau du module donné, le circuit de commande et/ou le circuit de traitement étant alimenté(s) électriquement par au moins une cellule de la batterie du module donné.

20. Procédé de gestion d'une batterie selon la revendication précédente, **caractérisé en ce qu'**il comprend une étape consistant à comparer une grandeur mesurée à un seuil pour diagnostiquer l'état de la cellule (11 ; 50 ; 111), estimer la charge de la cellule et/ou son état de santé.

21. Procédé de gestion d'une batterie selon la revendication précédente, **caractérisé en ce qu'**il comprend une étape d'ouverture de l'interrupteur de cellule (13 ; 63 ; 113) quand la cellule présente une charge inférieure à un seuil ou une surcharge ou quand elle est défaillante ou en surchauffe.

22. Procédé de gestion d'une batterie selon l'une des revendications 19 à 21, **caractérisé en ce qu'**il comprend une étape d'ouverture/fermeture cyclique de l'interrupteur de cellule (13 ; 63 ; 113) associé à une cellule (11 ; 50 ; 111), le rapport cyclique étant fixé en fonction du temps total d'utilisation de ladite cellule (11 ; 50 ; 111), lui-même déterminé en fonction du besoin global en courant et tension de la batterie et en fonction du diagnostic de la cellule considérée.

23. Procédé de gestion d'une batterie selon l'une des revendications 19 à 22, **caractérisé en ce qu'**il comprend tout ou partie des étapes suivantes :
- équilibrage des modules et/ou des cellules entre eux/elles, en utilisant en priorité les modules et/ou les cellules les plus chargé(e)s lorsque la batterie est connectée à une charge et les modules et/ou les cellules les moins chargé(e)s lors de la recharge de la batterie ;
- équilibrage des modules et/ou des cellules en modifiant le taux moyen d'utilisation des modules et/ou des cellules, mais sans utiliser les mêmes modules et/ou cellules en permanence, de sorte que la charge des modules et/ou cellules s'équilibre ;
- choix d'utilisation des modules en fonction du courant qu'ils peuvent fournir ;
- limitation de l'utilisation des modules et/ou cellules dont la température est la plus élevée ou utilisation de manière préférentielle lorsque le courant demandé est plus faible ;
- maintien homogène de la température au sein de la batterie.

24. Procédé de gestion d'une batterie selon l'une des revendications 19 à 23, **caractérisé en ce qu'**il comprend une étape de communication par courant porteur entre un circuit de traitement (30) d'un module (12 ; 112) et celui d'un autre module ou un calculateur central (22) ou une charge (15 ; 115).

25. Procédé de gestion d'une batterie selon l'une des revendications 19 à 24, **caractérisé en ce qu'**il comprend une étape de régulation de la tension de sortie de la batterie qui comprend une étape d'ouverture/fermeture d'interrupteurs de cellules (13 ; 63 ; 113) de la batterie pour suivre une consigne de tension de sortie imposée.

26. Procédé de gestion d'une batterie selon l'une des revendications 19 à 25, **caractérisé en ce qu'**il comprend une étape de déconnexion de toutes les cellules de la batterie en cas d'arrêt prolongé de la batterie ou d'incident.

27. Procédé de gestion d'une batterie selon l'une des revendications 19 à 26, **caractérisé en ce qu'**il comprend une étape de diagnostic du fonctionnement de tout ou partie des interrupteurs de cellules et/ou de modules et/ou parallèles.

28. Procédé de gestion d'une batterie selon l'une des revendications 19 à 27 d'une batterie selon la revendication 15, **caractérisé en ce qu'**il comprend une étape de calcul du nombre de sous-ensembles de la batterie à disposer en parallèle ou en série.

## Patentansprüche

1. Batterie, umfassend mehrere Module (12; 112), die in Serie angeordnet sind, wobei mindestens ein gegebenes Modul (12; 112) mindestens zwei parallel angeordnete Zellen (11; 50; 111) umfasst, wobei mindestens eine dieser zwei Zellen (11; 50; 111) einem Zellschalter (13; 63; 113) zugeordnet ist, der in Serie mit der Zelle (11; 50; 111) angeordnet ist, **dadurch gekennzeichnet, dass** das gegebene Modul mindestens einen Messsensor (33, 35, 36; 62, 65, 66; 133) einer charakteristischen Größe des Zustands der Zelle des gegebenen Moduls, die dem Zellschalter (13; 63; 113) zugeordnet ist, umfasst, und dass sie im Bereich des gegebenen Moduls eine lokale Verarbeitungsschaltung (30; 130) der von dem mindestens einen Messsensor durchgeführten Messungen umfasst, wobei die Verarbeitungsschaltung den der Zelle des gegebenen Moduls zugeordneten Schalter über eine Steuerschaltung (27; 127) in Abhängigkeit von mindestens der charakteristischen Größe des Zustands der Zelle steuert, wobei die Steuerschaltung des Zellschalters (13; 63; 113) und/oder die Verarbeitungsschaltung elektrisch direkt von mindestens einer Zelle der Batterie des gegebenen Moduls versorgt werden, wobei sie elektrisch von den anderen Modulen getrennt sind.

2. Batterie nach dem vorhergehenden Anspruch, **dadurch gekennzeichnet, dass** jedes Modul eine untere Klemme (17), die für einen Anschluss mit einem unteren Modul geeignet ist, und eine obere Klemme (18), die für einen Anschlussmit einem oberen Modul geeignet ist, umfasst, und dass sie ein Modul umfasst, umfassend mindestens zwei parallele Schenkel zwischen seiner unteren Klemme (17) und seiner oberen Klemme (18), wobei mindestens ein Schenkel eine Zelle (11; 50; 111) und einen Zellschalter (13; 63; 113), die in Serie angeordnet sind, umfasst, und dass die Verarbeitungsschaltung und die Steuerschaltung (27; 67; 127) eines Zellschalters (13; 63; 113) eines gegebenen Moduls zwischen der unteren (17) und der oberen Klemme (18) des gegebenen Moduls angeordnet sind.

3. Batterie nach Anspruch 1 oder 2, **dadurch gekennzeichnet, dass** sie mehrere Module (12; 112) umfasst, umfassend jeweils mehrere Zellen (11; 111), wobei alle Zellen (11; 111) einem Zellschalter (13; 63; 113), der in Serie mit der Zelle angeordnet ist, und mindestens einem Messsensor (33, 35, 36; 133) einer charakteristischen Größe des Zustands der Zelle zugeordnet sind, und dass die Batterie mindestens eine Steuerschaltung der Zellschalter (13; 63; 113) und /oder eine Verarbeitungsschaltung (30; 130) im Bereich jedes Moduls oder jedes zweiten oder dritten Moduls umfasst, um die Zellschalter in Abhängigkeit von der charakteristischen Größe des Zustands der zugehörigen Zellen zu steuern.

4. Batterie nach einem der vorhergehenden Ansprüche, **dadurch gekennzeichnet, dass** sie einen Messsensor des Stroms (36) im Bereich einer Zelle (11; 111) und/oder einen Messsensor der Spannung (35) an den Klemmen einer Zelle (11; 111) und/oder an den Klemmen ihres Zellschalters und/oder einen Messsensor der Temperatur (33) einer Zelle (11; 111) und/oder Impedanz-Spektrometrie-Messsensor umfasst.

5. Batterie nach einem der vorhergehenden Ansprüche, **dadurch gekennzeichnet, dass** sie mindestens ein Modul (12; 112), das einem Modulschalter (14; 114) zugeordnet ist, der parallel zum Modul (12; 112) angeschlossen ist, oder mindestens ein Modul (12), bei dem jede Zelle (11) einem Parallelschalter (34) zugeordnet ist, der parallel mit der Zelle geschaltet ist, und/oder mindestens einen Schalter (214; 314; 414; 514; 614; 714) umfasst, der parallel zu mehreren Modulen angeordnet ist.

6. Batterie nach einem der vorhergehenden Ansprüche, **dadurch gekennzeichnet, dass** sie mehrere Verarbeitungsschaltungen und mehrere Steuerschaltungen umfasst, die im Bereich von verschiedenen Modulen angeordnet sind.

7. Batterie nach dem vorhergehenden Anspruch, **dadurch gekennzeichnet, dass** sie einen Zentralrechner (22) und einen Kommunikationsbus (21; 125) umfasst, der die verschiedenen Module (12; 112) mit Hilfe einer galvanischen Isolierung (37) verbindet, um ein Zusammenwirken zwischen einer lokalen Verarbeitungsschaltung (30) und einem Zentralrechner (22) zu ermöglichen.

8. Batterie nach Anspruch 7, **dadurch gekennzeichnet, dass** das Zusammenwirken zwischen einer lokalen Verarbeitungsschaltung (30) und dem Zentralrechner (22) die Verwirklichung der Gesamtheit der Managementfunktionen der Batterie ermöglicht, wobei die lokale Verarbeitungsschaltung alleine zumindest einen Teil der Managementfunktionen gewährleistet.

9. Batterie nach einem der vorhergehenden Ansprüche, **dadurch gekennzeichnet, dass** sie eine Elektronikkarte (20) umfasst, umfassend:
- Klemmen (16) für eine Verbindung mit Zellen (11) der Batterie, und
- Zellschalter (13) für ein oder mehrere Module (12), und
- Messsensoren (33, 35, 36; 133) einer charakteristischen Größe des Zustands von Zellen.

10. Batterie nach dem vorhergehenden Anspruch, **dadurch gekennzeichnet, dass** sie eine Elektronikkarte (20) umfasst, die zwischen jedem Modul (12) der Batterie angeordnet ist, entweder eine einzige Elektronikkarte (20), auf der alle Zellen (11) der Batterie angeordnet sind, oder mehrere Elektronikkarten, die jeweils mehreren Modulen (12) zugeordnet sind.

11. Batterie nach einem der Ansprüche 1 bis 8, **dadurch gekennzeichnet, dass** sie mindestens eine Elementarzelle (50) umfasst, umfassend einen Zellschalter (63) und einen Messsensor (62; 65; 66) einer charakteristischen Größe ihres Zustands, die in die äußere Hülle (68) der Elementarzelle (50) integriert sind.

12. Batterie nach einem der Ansprüche 1 bis 11, **dadurch gekennzeichnet, dass** sie ein Modul (112) umfasst, umfassend mindestens eine Zelle (111), umfassend mehrere Elementarzellen, und einen Zellschalter (113), der in Serie mit der Zelle (111) angeordnet ist, und mindestens einen Messsensor (133) einer charakteristischen Größe ihres Zustands.

13. Batterie nach einem der vorhergehenden Ansprüche, **dadurch gekennzeichnet, dass** sie eine H-Brücke (86, 87, 88, 89) umfasst, die geeignet ist, die Spannung an den Klemmen der Batterie umzukehren.

14. Batterie nach einem der vorhergehenden Ansprüche, **dadurch gekennzeichnet, dass** sie mehrere Zelluntereinheiten (11; 50; 111) und Schalter (103; 104) umfasst, die zwischen diesen Zelluntereinheiten angeordnet und geeignet sind, zwei Untereinheiten in Serie oder parallel zu schalten.

15. Batterie nach Anspruch 13 oder 14, **dadurch gekennzeichnet, dass** sie Schalter (86, 87, 88, 89, 103, 104) umfasst, um die Spannung an den Klemmen der Batterie umzukehren, und/oder um die serielle oder parallele Montage von Untereinheiten der Batterie zu verändern, und dass diese Schalter von mindestens einer Steuerschaltung (27; 67; 127), die im Bereich eines Moduls der Batterie angeordnet ist, gesteuert werden.

16. Batterie nach einem der vorhergehenden Ansprüche, **dadurch gekennzeichnet, dass** der Zellschalter (13; 63; 113) ein Transistor (23) ist.

17. Batterie nach einem der vorhergehenden Ansprüche, **dadurch gekennzeichnet, dass** sie drei Säulen (116) umfasst, jeweils umfassend mehrere Module, die in Serie angeordnet sind, um einen dreiphasigen Ausgang zu liefern.

18. Batterie nach einem der vorhergehenden Ansprüche, **dadurch gekennzeichnet, dass** sie mehrere in Serie angeordnete Gehäuse (150) und einen mit Standorten zur Anordnung der Gehäuse auf abnehmbare Weise umfasst, wobei ein Standort elektrische Kontakte für die elektrische Verbindung eines Gehäuses mit den Klemmen der Batterie mit Hilfe einer Sammelschiene umfasst, wobei der Standort einem Rahmenschalter zugeordnet ist, um eine elektrische Restitution bei Nichtvorhandensein eines gewissen Gehäuses an einem gewissen Standort mit Hilfe mindestens eines weiteren Gehäuses, das an einem anderen Standort des Gestells angeordnet ist, beizubehalten.

19. Verfahren zum Management einer Batterie nach einem der vorhergehenden Ansprüche, **dadurch gekennzeichnet, dass** es die folgenden Schritte umfasst:
- Messung mindestens einer Größe im Bereich einer gegebenen Zelle (11; 50; 111) der Batterie, die in einem gegebenen Modul angeordnet ist, die für den Zustand der Zelle repräsentativ ist;
- Übertragung der gemessenen Größe an mindestens eine lokale Verarbeitungsschaltung (30), die im Bereich des gegebenen Moduls angeordnet ist;
- Bestimmung der Position eines Schalters der Zelle (13; 63; 113) unter Berücksichtigung der gemessenen Größe;
- Steuerung des Öffnens oder Schließens des Zellschalters (13; 63; 113) mit Hilfe einer Steuerschaltung (27; 67; 127), die im Bereich des gegebenen Moduls angeordnet ist, wobei die Steuerschaltung und/oder die Verarbeitungsschaltung elektrisch von mindestens einer Zelle der Batterie des betreffenden Moduls versorgt werden.

20. Verfahren zum Management einer Batterie nach dem vorhergehenden Anspruch, **dadurch gekennzeichnet, dass** es einen Schritt umfasst, der darin besteht, eine Messgröße mit einer Schwelle zu vergleichen, um den Zustand der Zelle (11; 50; 111) zu diagnostizieren, die Ladung der Zelle und/oder ihren Intaktheitszustand abzuschätzen.

21. Verfahren zum Management einer Batterie nach dem vorhergehenden Anspruch, **dadurch gekennzeichnet, dass** es einen Schritt des Öffnens des Zellschalters (13; 63; 113) umfasst, wenn die Zelle eine Ladung unter einer Schwelle oder eine Überladung aufweist, oder wenn sie fehlerhaft oder überhitzt ist.

22. Verfahren zum Management einer Batterie nach einem der Ansprüche 19 bis 21, **dadurch gekennzeichnet, dass** es einen Schritt des zyklischen Öffnens/Schließens des Zellschalters (13; 63; 113), der einer Zelle (11; 50; 111) zugeordnet ist, umfasst, wobei das zyklische Verhältnis in Abhängigkeit von der Gesamtverwendungszeit der Zelle (11; 50; 111) festgesetzt ist, die selbst in Abhängigkeit von dem Gesamtstrom- und - spannungsbedarf der Batterie und in Abhängigkeit von der Diagnose der betreffenden Zelle bestimmt wird.

23. Verfahren zum Management einer Batterie nach einem der Ansprüche 19 bis 22, **dadurch gekennzeichnet, dass** es alle oder einen Teil der folgenden Schritte umfasst:
- Ausgleich der Module und/oder der Zellen untereinander unter prioritärer Verwendung der am meisten geladenen Module und/oder Zellen, wenn die Batterie an eine Ladung angeschlossen ist, und der am wenigsten geladenen Module und/oder Zellen beim Aufladen der Batterie;
- Ausgleich der Module und/oder der Zellen, wobei die durchschnittliche Verwendungsrate der Module und/oder der Zellen verändert wird, aber ohne ständige Verwendung derselben Module und/oder Zellen, so dass sich die Ladung der Module und/oder Zellen ausgleicht;
- Wahl einer Verwendung der Module in Abhängigkeit vom Strom, den sie liefern können;
- Begrenzung der Verwendung der Module und/oder Zellen, deren Temperatur am höchsten ist, oder Verwendung auf bevorzugte Weise, wenn der angeforderte Strom geringer ist;
- Aufrechterhaltung einer homogenen Temperatur innerhalb der Batterie.

24. Verfahren zum Management einer Batterie nach einem der Ansprüche 19 bis 23, **dadurch gekennzeichnet, dass** es einen Schritt der Verbindung durch Trägerstrom zwischen einer Verarbeitungsschaltung (30) eines Moduls (12; 112) und jener eines anderen Moduls oder einem Zentralrechner (22) oder einer Ladung (15; 115) umfasst.

25. Verfahren zum Management einer Batterie nach einem der Ansprüche 19 bis 24, **dadurch gekennzeichnet, dass** es einen Schritt der Einstellung der Ausgangsspannung der Batterie umfasst, der einen Schritt des Öffnens/Schließens von Zellschaltern (13; 63; 113) der Batterie umfasst, um einen vorgegebenen Ausgangsspannungswert zu befolgen.

26. Verfahren zum Management einer Batterie nach einem der Ansprüche 19 bis 25, **dadurch gekennzeichnet, dass** es einen Schritt der Trennung aller Zellen der Batterie im Falle eines längeren Abschaltens der Batterie oder eines Zwischenfalls umfasst.

27. Verfahren zum Management einer Batterie nach einem der Ansprüche 19 bis 26, **dadurch gekennzeichnet, dass** es einen Schritt der Diagnose der Funktion aller oder eines Teils der Zellschalter und/oder Modulschalter und/oder Parallelschalter umfasst.

28. Verfahren zum Management einer Batterie nach einem der Ansprüche 19 bis 27 einer Batterie nach Anspruch 15, **dadurch gekennzeichnet, dass** es einen Schritt der Berechnung der Anzahl von Untereinheiten der Batterie, die parallel oder in Serie anzuordnen sind, umfasst.

## Claims

1. Battery comprising a plurality of modules (12; 112) arranged in series, at least one given module (12; 112) comprising at least two cells (11; 50; 111) arranged in parallel, at least one of these two cells (11; 50; 111) being associated with a cell switch (13; 63; 113) arranged in series with the cell (11; 50; 111), **characterized in that** the given module comprises at least one sensor (33, 35, 36; 62, 65, 66; 133) for measuring a quantity that is characteristic of the state of said cell of the given module associated with the cell switch (13; 63; 113), and **in that** it comprises, at the level of the given module, a local processing circuit (30; 130) for processing the measurements carried out by said at least one measurement sensor, the processing circuit driving the switch associated with said cell of the given module via a control circuit (27; 127) according to at least said quantity that is characteristic of the state of said cell, the control circuit for controlling the cell switch (13; 63; 113) and/or the processing circuit being supplied with electrical power directly by at least one cell of the battery of the given module while being electrically isolated from the other modules.

2. Battery according to the preceding claim, **characterized in that** each module comprises a lower terminal (17) suitable for connection to a lower module and an upper terminal (18) suitable for connection to an upper module, and **in that** it comprises a module comprising at least two parallel branches between its lower terminal (17) and its upper terminal (18), at least one branch comprising a cell (11; 50; 111) and a cell switch (13; 63; 113) arranged in series, and **in that** the processing circuit and the control circuit (27; 67; 127) for controlling a cell switch (13; 63; 113) of a given module are arranged between the lower (17) and upper (18) terminals of the given module.

3. Battery according to Claim 1 or 2, **characterized in that** it comprises a plurality of modules (12; 112) each comprising a plurality of cells (11; 111), all of the cells (11; 111) being associated with a cell switch (13; 63; 113) arranged in series with the cell and with at least one sensor (33, 35, 36; 133) for measuring a quantity that is characteristic of the state of the cell, and **in that** the battery comprises at least one control circuit for controlling the cell switches (13; 63; 113) and/or a processing circuit (30; 130) at the level of each module or of one module out of two or three for controlling the cell switches according to the quantity that is characteristic of the state of the associated cells.

4. Battery according to one of the preceding claims, **characterized in that** it comprises a sensor (36) for measuring the current at the level of a cell (11; 111) and/or a sensor (35) for measuring the voltage at the terminals of a cell (11; 111) and/or at the terminals of its cell switch, and/or a sensor (33) for measuring the temperature of a cell (11; 111) and/or for impedance spectrometry measurement.

5. Battery according to one of the preceding claims, **characterized in that** it comprises at least one module (12; 112) associated with a module switch (14; 114) that is connected in parallel to the module (12; 112) or at least one module (12), each cell (11) of which is associated with a parallel switch (34) that is connected in parallel with the cell, and/or at least one switch (214; 314; 414; 514; 614; 714) that is arranged in parallel to a plurality of modules.

6. Battery according to one of the preceding claims, **characterized in that** it comprises a plurality of processing circuits and a plurality of control circuits arranged at the level of different modules.

7. Battery according to the preceding claim, **characterized in that** it comprises a central computer (22) and a communication bus (21; 125) linking the various modules (12; 112) via galvanic isolation (37) so as to allow cooperation between a local processing circuit (30) and a central computer (22) .

8. Battery according to Claim 7, **characterized in that** said cooperation between a local processing circuit (30) and the central computer (22) allows all of the battery management functions to be carried out, the local processing circuit performing at least some of the management functions by itself.

9. Battery according to one of the preceding claims, **characterized in that** it comprises an electronic card (20) comprising:
- terminals (16) for connection to cells (11) of the battery, and
- cell switches (13) for one or more modules (12), and
- sensors (33, 35, 36; 133) for measuring a quantity that is characteristic of the state of cells.

10. Battery according to the preceding claim, **characterized in that** it comprises an electronic card (20) arranged between each module (12) of the battery or a single electronic card (20) on which are arranged all of the cells (11) of the battery or a plurality of electronic cards each associated with a plurality of modules (12).

11. Battery according to one of Claims 1 to 8, **characterized in that** it comprises at least one elementary cell (50) comprising a cell switch (63) and a sensor (62; 65; 66) for measuring a quantity that is characteristic of its state, which are incorporated inside the outer casing (68) of the elementary cell (50).

12. Battery according to one of Claims 1 to 11, **characterized in that** it comprises a module (112) comprising at least one cell (111) comprising a plurality of elementary cells and a cell switch (113) that is arranged in series with the cell (111) and at least one sensor (133) for measuring a quantity that is characteristic of its state.

13. Battery according to one of the preceding claims, **characterized in that** it comprises an H-bridge (86, 87, 88, 89) suitable for inverting the voltage at the terminals of the battery.

14. Battery according to one of the preceding claims, **characterized in that** it comprises a plurality of subassemblies of cells (11; 50; 111) and switches (103; 104) arranged between these subassemblies that are suitable for arranging two subassemblies in series or in parallel.

15. Battery according to Claim 13 or 14, **characterized in that** it comprises switches (86, 87, 88, 89, 103, 104) for inverting the voltage at the terminals of the battery and/or modifying the series or parallel arrangement of subassemblies of the battery, and **in that** these switches are controlled by at least one control circuit (27; 67; 127) arranged at the level of a module of the battery.

16. Battery according to one of the preceding claims, **characterized in that** the cell switch (13; 63; 113) is a transistor (23).

17. Battery according to one of the preceding claims, **characterized in that** it comprises three columns (116), each comprising a plurality of modules arranged in series to provide a three-phase output.

18. Battery according to one of the preceding claims, **characterized in that** it comprises a plurality of housings (150) arranged in series and comprises a rack with locations for removably accommodating the housings, a location comprising electrical contacts for electrically linking a housing with the terminals of the battery via a power bus, the location being associated with a rack switch so as to be able to maintain an electrical output in the absence of a certain housing in a certain location via at least one other housing arranged in another location of the rack.

19. Method for managing a battery according one of the preceding claims, **characterized in that** it comprises the following steps:
- measuring at least one quantity at the level of a given cell (11; 50; 111) of the battery arranged in a given module representative of the state of the cell;
- transmitting said measured quantity to at least one local processing circuit (30) arranged at the level of the given module;
- determining the position of a switch (13; 63; 113) of said cell taking into account said measured quantity;
- controlling the opening or closing of the cell switch (13; 63; 113) via a control circuit (27; 67; 127) arranged at the level of the given module, the control circuit and/or the processing circuit being supplied with electrical power by at least one cell of the battery of the given module.

20. Method for managing a battery according to the preceding claim, **characterized in that** it comprises a step consisting in comparing a measured quantity to a threshold to diagnose the state of the cell (11; 50; 111), estimate the charge of the cell and/or its state of health.

21. Method for managing a battery according to the preceding claim, **characterized in that** it comprises a step of opening the cell switch (13; 63; 113) when the cell is holding a charge below a threshold or is overcharged or when it is faulty or overheating.

22. Method for managing a battery according to one of Claims 19 to 21, **characterized in that** it comprises a step of cyclically opening/closing the cell switch (13; 63; 113) associated with a cell (11; 50; 111), the duty cycle being set according to the total time of use of said cell (11; 50; 111), which is in turn determined according to the overall current and voltage demand of the battery and as a function of the diagnosis of the cell concerned.

23. Method for managing a battery according to one of Claims 19 to 22, **characterized in that** it comprises some or all of the following steps:
- balancing the modules and/or cells with one another, giving priority to using the modules and/or cells carrying the highest charge when the battery is connected to a load and the modules and/or cells carrying the lowest charge when charging the battery;
- balancing the modules and/or cells by modifying the average rate of use of the modules and/or cells but without using the same modules and/or cells continuously so that the charging of the modules and/or cells is balanced;
- choosing the modules to use according to the current that they can supply;
- limiting the use of the modules and/or cells having the highest temperature or giving preference to using them when the current demanded is lower;
- maintaining a uniform temperature within the battery.

24. Method for managing a battery according to one of Claims 19 to 23, **characterized in that** it comprises a step of communication by carrier current between a processing circuit (30) of a module (12; 112) and that of another module or a central computer (22) or a load (15; 115).

25. Method for managing a battery according to one of Claims 19 to 24, **characterized in that** it comprises a step of regulating the output voltage of the battery, which comprises a step of opening/closing cell switches (13; 63; 113) of the battery so as to track a set output voltage setpoint.

26. Method for managing a battery according to one of Claims 19 to 25, **characterized in that** it comprises a step of disconnecting all of the cells of the battery in the event of extended battery downtime or of an incident.

27. Method for managing a battery according to one of Claims 19 to 26, **characterized in that** it comprises a step of diagnosing the operation of all or some of the cell and/or module and/or parallel switches.

28. Method for managing a battery according to one of Claims 19 to 27 for a battery according to Claim 15, **characterized in that** it comprises a step of calculating the number of subassemblies of the battery to be arranged in parallel or in series.
